(19) Europäisches Patentamt
European Patent Office
Office européen des brevets

(11) **EP 3 379 604 B1**

(12) **EUROPEAN PATENT SPECIFICATION**

(45) Date of publication and mention of the grant of the patent:
**02.03.2022 Bulletin 2022/09**

(21) Application number: **17190553.2**

(22) Date of filing: **12.09.2017**

(51) International Patent Classification (IPC):
***H01M 10/052*** (2010.01)    ***H01M 10/0525*** (2010.01)
***H01M 10/056*** (2010.01)

(52) Cooperative Patent Classification (CPC):
**H01M 10/052; H01M 10/0525; H01M 10/056;**
H01M 2220/20; H01M 2300/0017;
H01M 2300/0091; Y02E 60/10; Y02P 70/50

(54) **COMPOSITE ELECTROLYTE, SECONDARY BATTERY, BATTERY PACK AND VEHICLE**

VERBUNDELEKTROLYT, SEKUNDÄRBATTERIE, BATTERIEPACK UND FAHRZEUG

ÉLECTROLYTE COMPOSITE, BATTERIE SECONDAIRE, BLOC-BATTERIE ET VÉHICULE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **22.03.2017 JP 2017056581**
        **08.09.2017 JP 2017172758**

(43) Date of publication of application:
**26.09.2018 Bulletin 2018/39**

(73) Proprietor: **KABUSHIKI KAISHA TOSHIBA**
**Minato-ku**
**Tokyo**
**105-8001 (JP)**

(72) Inventors:
- **Harada, Yasuhiro**
  **Tokyo, 105-8001 (JP)**
- **Takami, Norio**
  **Tokyo, 105-8001 (JP)**
- **Yoshima, Kazuomi**
  **Tokyo, 105-8001 (JP)**

(74) Representative: **Hoffmann Eitle**
**Patent- und Rechtsanwälte PartmbB**
**Arabellastraße 30**
**81925 München (DE)**

(56) References cited:
**US-A1- 2013 230 778**    **US-A1- 2016 294 016**
**US-A1- 2017 077 547**

EP 3 379 604 B1

**Description**

FIELD

The present discloser relates to a composite electrolyte, a secondary battery, a battery module, a battery pack and a vehicle.

BACKGROUND

Recently, a nonaqueous electrolyte battery such as a lithium ion secondary battery has been actively researched and developed as a high energy-density battery. The nonaqueous electrolyte battery is expected to be used as a power source for hybrid vehicles, electric cars, an uninterruptible power supply for base stations for portable telephone, or the like. Especially, as in-vehicle batteries, an all solid Li-ion secondary battery is extensively studied, and its high safety attracts attention.

Since the all solid Li-ion secondary battery uses a solid electrolyte, the all solid Li-ion secondary battery causes less ignition than that of a Li-ion secondary battery using a nonaqueous electrolyte. However, an all solid Li-ion secondary battery with a highcapacity has not yet been put into practical use at present. Examples of the reasons include an interface between a solid electrolyte and an active material of an electrode. Both the solid electrolyte and the active material are solids, and are relatively easily adhered if heat is applied. However, since the active material may be expanded and shrunk by the insertion and extraction of Li, the active material is separated from the solid electrolyte when being repeatedly subjected to charge and discharge, which may make it impossible to perform a good charge-and-discharge cycle. Therefore, it is necessary for the solid electrolyte to allow the influence of the expansion and shrinkage of the active material to be mitigated and to allow a good interface to be formed between the solid electrolyte and the active material.

US 2017/077547 describes a composite electrolyte, which includes lithium-containing oxide particles and an electrolytic composition. The electrolytic composition includes lithium ions, an organic solvent and a polymer.

US 2016/294016 concerns nonaqueous a secondary battery, a manufacturing method thereof, and an electrolyte. The electrolyte contains ion conductive inorganic solid electrolyte particles and a liquid electrolyte component.

US 2013/230778 is directed to a lithium ion conductive composite electrolyte that can prevent leakage of electrolyte solution, and that has excellent cycle performance and lithium ion conductivity, and to a lithium ion secondary battery. The lithium ion conductive composite electrolyte is formed so that a lithium ion conductive polymer gel electrolyte is held in a porous body formed from lithium ion conductive inorganic solid electrolyte particles and an organic polymer.

BRIEF DESCRIPTION OF THE DRAWINGS

FIG. 1 schematically shows the movement of $Li^+$ in one example of a composite electrolyte according to a first approach;

FIG. 2 shows the particle size distribution of an inorganic solid particle mixture included in one example of a composite electrolyte of according to the first approach;

FIG. 3 is a schematic view showing a method of measuring a particle size;

FIG. 4 is a schematic cross-sectional view of a first example of an electrode composite which can be included in a secondary battery according to a second approach;

FIG. 5 is a schematic cross-sectional view of a second example of an electrode composite which can be included in a secondary battery according to the second approach;

FIG. 6 is a schematic cross-sectional view of a first example of a secondary battery according to the second approach;

FIG. 7 is a schematic view showing one step of a method of producing a third example of an electrode composite which can be included in a secondary battery according to the second approach;

FIG. 8 is a schematic view showing a next step of the step of the producing method shown in FIG. 7;

FIG. 9 is a schematic cross-sectional view of an electrode composite produced by the producing method shown in FIGS. 7 and 8;

FIG. 10 is a cross-sectional view schematically showing a second example of a secondary battery according to the second approach;

FIG. 11 is an enlarged cross-sectional view schematically showing a portion B of the secondary battery shown in FIG. 10;

FIG. 12 is a perspective view schematically showing one example of a battery module according to a third approach;

FIG. 13 is an exploded perspective view schematically showing one example of a battery pack according to a fourth approach;
FIG. 14 is a block diagram showing an electric circuit of the battery pack in FIG. 13;
FIG. 15 is a schematic sectional view showing one example of a vehicle according to a fifth approach;
FIG. 16 is schematic view showing another example of a vehicle according to the fifth approach.

DETAILED DESCRIPTION

In general, according to an approach, a composite electrolyte as defined in the appended claims is provided. The composite electrolye includes an inorganic solid particle mixture and a nonaqueous electrolyte including Li. The inorganic solid particle mixture includes first inorganic solid particles having a first Li-ion conductivity at 25°C and second inorganic solid particles having a second Li-ion conductivity at 25°C being lower than the first Li-ion conductivity at 25°C.
The first inorganic solid particles are at least one selected from the group consisting of:

- inorganic solid particles having a garnet-type structure;
- particles of a perovskite-type Li-ion conductive material having a composition represented by a formula of $La_{0.56}Li_{0.33}TiO_3$; and
- particles of a glass ceramic electrolyte having a NASICON-type structure and represented by a structural formula typified by $Li_{1+x+y}Ti_{2-x}Al_xP_{3-y}Si_yO_{12}$, where x = 0.3 and y = 0.2.

The second inorganic solid particles are at least one selected from the group consisting of:

- aluminum oxide particles;
- zirconium oxide particles;
- silicon oxide particles;
- magnesium oxide particles;
- rutile type titanium oxide particles;
- niobium oxide particles;
- tantalum oxide particles;
- hafnium oxide particles;
- yttrium oxide particles;
- gallium oxide particles;
- germanium oxide particles; and
- lanthanoid oxide particles.

A ratio of a weight of the nonaqueous electrolyte to a weight of the composite electrolyte is from 0.1% to 25%. The inorganic solid particle mixture satisfies $10 \leq d90/d10 \leq 500$. d10 is a particle size [$\mu$m] at which a cumulative frequency from a small particle size side is 10% in a particle size cumulative curve. The particle size cumulative curve is obtained by a laser diffraction scattering method. d90 is a particle size [$\mu$m] at which a cumulative frequency from a small particle size side is 90% in the particle size cumulative curve of the inorganic solid particle mixture.
According to an approach, a secondary battery is provided. The secondary battery includes a positive electrode active material-containing layer, a negative electrode active material-containing layer and a Li-conductive layer. The Li-conductive layer is provided between the positive electrode active material-containing layer and the negative electrode active material-containing layer. The Li-conductive layer includes the composite electrolyte according to the approach.
According to an approach, a battery module is provided. The battery module includes the secondary batteries each according to the approach.
According to an approach, a battery pack is provided. The battery pack includes the secondary battery according to the emobodiment.
According to an approach, a vehicle is provided. The vehicle includes the battery pack according to the approach.
According to the approach, there can be provided a composite electrolyte that can provide a secondary battery capable of exhibiting an excellent life performance and an excellent output performance under a low temperature environment.
The approaches will be explained below with reference to the drawings. In this case, the structures common to all approaches are represented by the same symbols and duplicated explanations will be omitted. Also, each drawing is a typical view for explaining the approaches and for promoting an understanding of the approaches. Though there are parts different from an actual device in shape, dimension and ratio, the sestructural designs may be properly changed taking the following explanations and known technologies in to consideration.

(First Approach)

According to a first approach, a composite electrolyte is provided. The composite electrolye includes an inorganic solid particle mixture and a nonaqueous electrolyte including Li. The inorganic solid particle mixture includes first inorganic solid particles having a first Li-ion conductivity at 25°C and second inorganic solid particles having a second Li-ion conductivity at 25°C. The second Li-ion conductivity at 25°C is lower than the first Li-ion conductivity at 25°C. A ratio of a weight of the nonaqueous electrolyte to a weight of the composite electrolyte is from 0.1% to 25%. The inorganic solid particle mixture satisfies $10 \leq d90/d10 \leq 500$. d10 is a particle size [$\mu$m] at which a cumulative frequency from a small particle size side is 10% in a particle size cumulative curve of the inorganic solid particle mixture. The particle size cumulative curve is obtained by a laser diffraction scattering method. d90 is a particle size [$\mu$m] at which a cumulative frequency from a small particle size side is 90% in the particle size cumulative curve of the inorganic solid particle mixture.

A composite electrolyte according to a first approach can be used, for example, in a secondary battery.

The composite electrolyte according to the first approach can provide a secondary battery which can exhibit an excellent life performance and an excellent output performance in a low temperature environment for the reasons described below.

In the inorganic solid particle mixture included in the composite electrolyte according to the first approach, the second inorganic solid particles have lower Li-ion conductivity (a second Li-ion conductivity at 25°C) than that of the Li-ion conductive first inorganic solid particles, and can exhibit a higher dielectric constant than that of the first inorganic solid particles. Such an inorganic solid particle mixture including the first inorganic solid particles and the second inorganic solid particles can provide dielectric polarization on the surface of the second inorganic solid particles when an external electric field is applied. In the composite electrolyte according to the first approach, the dissociation (desolvation) of Li ions can promoted from the nonaqueous electrolyte including Li at the interface between the second inorganic solid particle in which the dielectric polarization is occurring and the nonaqueous electrolyte. As a result, it is possible to increase a concentration of Li-ions involved in Li-ion conduction. An increase in the Li-ion concentration may also occur at the interface between the first inorganic solid particle and the nonaqueous electrolyte. Since the Li-ion conductive first inorganic solid particles can form a Li-ion conduction path on the surface, the first inorganic solid particles can conduct the Li ions at a high transport rate. As these results, in the composite electrolyte according to the first approach, electric charges can be transferred at a high transportation rate.

In the composite electrolyte according to the first approach, the ratio of the weight of the nonaqueous electrolyte to the weight of the composite electrolyte is from 0.1% to 25%. In the composite electrolyte according to the first approach, a sufficient amount of Li ions can be dissociated from the nonaqueous electrolyte included in an amount of 0.1% or more. The nonaqueous electrolyte included in an amount of 25% or less in the composite electrolyte according to the first approach is easily held by the inorganic solid particle mixture. Therefore, a secondary battery, in particular, a secondary battery including a stack-type electrode group typified by a bipolar structure and the like, including the composite electrolyte according to the first approach, can exhibit a low probability of causing the separation of the nonaqueous electrolyte from the electrode group, for example, effusion of the nonaqueous electrolyte from the electrode group, and can exhibit an excellent life performance. The use of the composite electrolyte according to the first approach makes it easy to construct a composite such as the stack-type electrode group.

In addition, in the inorganic solid particle mixture having a ratio d90/d10 of 10 or more, a particle size d90 and a particle size d10 in a cumulative frequency curve are sufficiently separated from each other. The result exhibits a sufficiently large standard deviation, that is, a sufficiently broad particle size distribution.

Generally, the narrower particle size distribution the inorganic solid particles included in the composite electrolyte has, that is, the smaller the ratio d90/d10 is, the higher functionality of the inorganic solid particles is considered to be. However, the present inventors paid attention to the association between the particle size distribution and the dielectric constant distribution, and found that the dissociation and conduction of the Li ions described above can be further promoted by setting the ratio d90/d10 to from 10 to 500, that is, broadening the particle size distribution. The reason is considered to be as follows, while not wishing to be bound by theory. It is considered that the degree of dielectric polarization which may occur on the surface of each particle when an electric field is applied also depends on the particle size of the particle. Therefore, the inorganic solid particle mixture has a broad particle size distribution, which causes a nonuniform degree of dielectric polarization. The ununiformity of the degree of dielectric polarization causes the gradient of the density, that is, concentration of the Li ions in the vicinity of the particle surface of the inorganic solid particle mixture. This concentration gradient of the Li ions can further promote the conduction of the Li ions dissociated by the dielectric polarization as a driving force. If the Li ions are more smoothly conducted, more Li ions can be dissociated by the dielectric polarization. Thus, in the composite electrolyte according to the first approach, the dissociation of Li from the nonaqueous electrolyte and the conduction of dissociated Li promote each other. As a result, the composite electrolyte according to the first approach can realize smoother dissociation of Li and smoother conduction of Li.

The Li conduction at low temperature is greatly affected by an apparent activation energy accompanying Li movement. When the dissociation of Li from the nonaqueous electrolyte is promoted, the apparent activation energy is lowered. Thus, the effect of realizing more smoother dissociation of Li from the nonaqueous electrolyte and more smoother conduction of dissociated Li by the composite electrolyte according to the first approach is remarkable when the composite electrolyte is used in a low temperature environment.

As described above, since the composite electrolyte according to the first approach includes the inorganic solid particle mixture capable of exhibiting a broad particle size distribution, the composite electrolyte can maintain electrical insulation between electrodes when used in the secondary battery. Since the composite electrolyte according to the first approach can realize more excellent conduction of Li as described above, the secondary battery including the composite electrolyte makes it possible to reduce a load applied to each member of the secondary battery, for example, the positive electrode and the negative electrode when the secondary battery is repeatedly charged and discharged. As these results, the composite electrolyte according to the first approach can provide a secondary battery which can exhibit an excellent life performance.

Therefore, the composite electrolyte according to the first approach can provide a secondary battery which can exhibit an excellent life performance and an excellent output performance in a low temperature environment.

A composite electrolyte in which an inorganic solid particle mixture includes only the first inorganic solid particles or only the second inorganic solid particles cannot sufficiently perform any of the dissociation of the Li ions from the nonaqueous electrolyte or the conduction of the Li ions, which causes an increase in the apparent activation energy accompanying Li conduction. Therefore, the composite electrolyte cannot realize an excellent output performance in a low temperature environment.

The ratio of the weight of the first inorganic solid particles to the weight of the second inorganic solid particles is preferably 1% or more and less than 99%, more preferably from 10% to 90%, and more preferably from 25% to 75%. A composite electrolyte in which the weight ratio of first inorganic solid particles to second inorganic solid particles is within a preferable range can achieve a more excellent balance between dissociation and conduction of Li ions. As a result, the composite electrolyte can realize a more excellent output performance in a low temperature environment.

Since the composite electrolyte including no nonaqueous electrolyte or having the ratio of the weight of a nonaqueous electrolyte to the weight of a composite electrolyte of less than 0.1% cannot dissociate sufficient Li ions from the nonaqueous electrolyte, the composite electrolyte cannot realize an excellent output performance in a low temperature environment. On the other hand, in the composite electrolyte in which the ratio of the weight of the nonaqueous electrolyte to the weight of the composite electrolyte exceeds 25%, the nonaqueous electrolyte is apt to leak from the composite electrolyte, which may cause liquid junction in the battery. The ratio of the weight of the nonaqueous electrolyte to the weight of the composite electrolyte is preferably from 1% to 10%, more preferably from 2% to 10%, and particularly preferably from 3% to 5%. In the composite electrolyte in which the amount of the nonaqueous electrolyte is within a preferable range, the retention property of the nonaqueous electrolyte in the nonaqueous electrolyte inorganic solid particle mixture is higher. Therefore, the use of the composite electrolyte of this preferred aspect makes it easy to construct a series-stacked structure typified by a bipolar structure without using a separator. Furthermore, in the composite electrolyte of this preferred aspect, Li dissociated from the nonaqueous electrolyte is likely to move in the vicinity of the surface of the inorganic solid particles without migrating to the offshore side of the nonaqueous electrolyte, so that the apparent activation energy accompanying Li conduction is likely to be lowered.

In a composite electrolyte including the inorganic solid particle mixture having a ratio d90/d10 of less than 10, the concentration gradient of the Li ions generated by the dielectric polarization is too small, so that the movement of the Li ions cannot be promoted sufficiently. On the other hand, a composite electrolyte including the inorganic solid particle mixture having a ratio d90/d10 exceeding 500 has poor coatability. Therefore, the secondary battery including such a composite electrolyte makes it difficult to uniform the thickness of the composite electrolyte layer provided between the positive electrode and the negative electrode. Such a secondary battery is apt to cause electrical short circuit between the positive electrode and the negative electrode, and cannot exhibit an excellent life performance.

The ratio d90/d10 is preferably from 10 to 100, and more preferably from 15 to 60. A composite electrolyte having a ratio d90/d10 within a preferable range has an excellent coatability while realizing improved Li conductivity provided by a broad particle size distribution, and can exhibit a more excellent insulating properties between the electrodes.

The first Li-ion conductivity at 25°C of the first inorganic solid particles is preferably $1 \times 10^{-10}$ S/cm or more, more preferably $1 \times 10^{-6}$ S/cm or more, and still more preferably $1 \times 10^{-4}$ S/cm or more. The first Li-ion conductivity at 25°C of the first inorganic solid particles is, for example, $1 \times 10^{-2}$ S/cm or less. On the other hand, the second Li-ion conductivity at 25°C of the second inorganic solid particles is preferably less than $1 \times 10^{-10}$ S/cm, more preferably less than $1 \times 10^{-12}$ S/cm. The second Li-ion conductivity at 25°C of the second inorganic solid particles is, for example, $1 \times 10^{-14}$ S/cm or more.

It is preferable that the inorganic solid particle mixture satisfies $10 \leq \sigma_H/\sigma_L$. Here, $\sigma_H$ is the first Li-ion conductivity [S/cm] at 25°C of the first inorganic solid particles, and $\sigma_L$ is the second Li-ion conductivity [S/cm] at 25°C of the second inorganic solid particles. The composite electrolyte including the inorganic solid particle mixture which satisfies the ratio $\sigma_H/\sigma_L$ of 10 or more can generate a larger gradient of the concentration of the Li ions, which can realize smoother conduction of the Li ions. The ratio $\sigma_H/\sigma_L$ is more preferably 400 or more, and still more preferably 1000 or more. The ratio $\sigma_H/\sigma_L$ can be, for example, $1\times10^{16}$ or less.

The average particle size of the first inorganic solid particles is preferably equal to the average particle size of the second inorganic solid particles. In this preferred aspect, the particle sizes are equal, so that the sizes of gaps among the each particles are constant, and the nonaqueous electrolyte may be filled therein. Therefore, when the Li ions dissociated from the nonaqueous electrolyte by the dielectric polarization on the surface of the second inorganic solid particles move on the surface of the first inorganic solid particles, Li can move through the uniform gaps. This makes it possible to minimize the movement path, which is preferable. Alternatively, the inorganic solid particle mixture preferably satisfies $1 < R_H/R_L \leq 100$. Here, $R_H$ is the average particle size [$\mu$m] of particles having a larger average particle size between the average particle sizes of the first inorganic solid particles and the second inorganic solid particles. $R_L$ is the average particle size [$\mu$m] of particles having a smaller average particle size between the average particle sizes of the first inorganic solid particles and the second inorganic solid particles. In this preferred aspect,the packing density of the composite electrolyte layer can be improved while securing a sufficient size of particle gap capable of forming the conduction path of Li while holding the nonaqueous electrolyte. Therefore, even if the thickness of the composite electrolyte layer is reduced, electrical insulation between the electrodes can be maintained. The ratio $R_H/R_L$ is more preferably more than 1 and 20 or less.

The BET specific surface area of the first inorganic solid particles is preferably equal to the BET specific surface area of the second inorganic solid particles. In this preferred aspect, the contact areas of the particles with the nonaqueous electrolyte are equal to each other. The Li ions dissociated from the nonaqueous electrolyte by dielectric polarization on the surface of the second inorganic solid particles can move on the surface of the first inorganic solid particles in just proportion, so that higher Li conductivity can be exhibited. Alternatively, the inorganic solid particle mixture preferably satisfies $1 < S_H/S_L \leq 50$. Here, $S_H$ is the BET specific surface area [$m^2/g$] of particles having a larger BET specific surface area between the BET specific surface areas of the first inorganic solid particles and the second inorganic solid particles. $S_L$ is the BET specific surface area [$m^2/g$] of particles having a smaller BET specific surface area the BET specific surface areas of the first inorganic solid particles and the second inorganic solid particles. In this preferred aspect, the Li ions dissociated from the nonaqueous electrolyte by the dielectric polarization on the surface of the second inorganic solid particles can easily move on the surface of the first inorganic solid particles, and the uniformity of the coatability of the composite solid electrolyte is improved, which is preferable. It is more preferable that the ratio $S_H/S_L$ is more than 1 and 6 or less.

It is preferable that the composite electrolyte according to the first approach satisfies the inequality of $\omega_1 > \omega_2$. Here, $\omega_1$ is a peak frequency in a complex modulus spectrum of the composite electrolyte. $\omega_2$ is a peak frequency in a complex modulus spectrum of the single nonaqueous electrolyte contained in the composite electrolyte. Each complex modulus spectrum is represented by the following formula.

$$\hat{M}(\omega) = i\omega\varepsilon_0\hat{Z}(\omega)/k$$

Detailed descriptions such as the parameters of the above formula are described in "I. M. Hodge, M. D. Ingram, and A. R. West, "IMPEDANCE AND MODULUS. SPECTROSCOPY OF POLYCRYSTALINE SOLID ELCTROLYTE", Journal of Electroanalytical Chemistry 74 (1976) 125-143".

Here, the complex modulus spectrum will be described. Charge transfer in each component of the composite is reflected in the modulus spectrum. Specifically, a component having a peak in a high frequency region means that the movement of the Li ions therein is fast. A distribution appearing in the peak frequency means that the mobility of Li fluctuates. That is, in the component of which the distribution appears in the peak frequency, a site in which Li can move fast and a site in which Li movement is slow are mixed. In such a component, it can be determined that the concentration of the Li ions is high or plural paths for the Li ions to move are present. Therefore, the distribution of Li ion concentration can be estimated by the modulus spectrum.

The composite electrolyte satisfying the inequality of $\omega_1 > \omega_2$ can be said that the mobility of the Li ions in the entire composite electrolyte is higher than the mobility of the Li ions in the nonaqueous electrolyte. Although the Li ion concentration in the nonaqueous electrolyte is usually constant, the mobility of the Li ions in the entire composite electrolyte is higher than the mobility of the Li ions of the single nonaqueous electrolyte. This can be considered to increase the apparent Li-ion concentration due to the interaction with the inorganic particles in the composite electrolyte. Such a composite electrolyte can realize a more excellent output performance in a low temperature environment.

For example, the composite electrolyte according to the first approach can satisfy the inequality of $C2 \geq C1 > C3$. Here, C1 is the Li ion concentration [mol/L] at the interface between the first inorganic solid particles and the nonaqueous electrolyte. C2 is the Li ion concentration [mol/L] at the interface between the second inorganic solid particles and the nonaqueous electrolyte. C3 is the Li ion concentration [mol/L] in the nonaqueous electrolyte. That is, in the composite electrolyte satisfying the above inequality, the Li ion concentration in the nonaqueous electrolyte is lower than the Li ion concentration at the interface between the first inorganic solid particles and the nonaqueous electrolyte and the Li ion concentration at the interface between the second inorganic solid particles and the nonaqueous electrolyte. In this case, the Li ion concentration at the interface between the second inorganic solid particles and the nonaqueous electrolyte is not less than the Li ion concentration at the interface between the first inorganic solid particles and the nonaqueous electrolyte. In such a composite electrolyte, the dissociation of the Li ions can be promoted by the dielectric polarization of the surface of the second inorganic compound, whereby conductivity can be achieved via the surface of the first inorganic compound, so that a pass having a high transport rate and providing more advantageous Li conduction can be formed. As these results, the composite electrolyte of this preferred aspect can realize more excellent output performance in a low temperature environment, more specifically, excellent charge-and-discharge rate performance in a low temperature environment.

The nonaqueous electrolyte preferably includes a solid polymer electrolyte and/or a gel polymer electrolyte. A secondary battery is produced using the composite electrolyte of the preferred aspect including the solid polymer electrolyte, so that the miniaturization of the secondary battery is facilitated. When the composite electrolyte of the preferred aspect including the gel polymer electrolyte is used, the secondary battery can be more easily produced, and operation such as change of the shape of the secondary battery is facilitated. Alternatively, the nonaqueous electrolyte may include a liquid nonaqueous electrolyte.

The composite electrolyte according to the first approach may further include a binder. The state of the nonaqueous electrolyte can be adjusted by changing the composition and amount of each of the nonaqueous electrolyte and binder, and the amount of the polymerization initiator in combination.

Hereinafter, the materials which can be included in the composite electrolyte according to the first approach will be described in more detail.

(1) Inorganic Solid Particle Mixture

The first Li-ion conductivity of the Li-ion conductive first inorganic solid particles is, for example, $1 \times 10^{-10}$ S/cm or more at 25°C. As the first inorganic solid particles, inorganic solid particles having a garnet-type structure are preferably used because the inorganic solid particles have advantages such as high Li-ion conductivity, high reduction resistance, and a wide electrochemical window. Examples of the inorganic solid particles having a garnet-type structure include particles of a compound having a composition represented by a general formula of $La_{5+x}A_xLa_{3-x}M_2O_{12}$ (A is one or two selected from the group consisting of Ca, Sr and Ba, or a combination of Ca, Sr and Ba, and M is Nb and/or Ta), a general formula of $Li_3M_{2-x}L_2O_{12}$ (M is Ta and/or Nb, and L is Zr), a general formula of $Li_{7-3x}Al_xLa_3Zr_3O_{12}$, or a general formula of $Li_7La_3Zr_2O_{12}$. In the above general formulae, x is preferably from 0 to 0.5. Among these, $Li_{6.25}Al_{0.25}La_3Zr_3O_{12}$ and $Li_7La_3Zr_2O_{12}$ have high ion conductivity and are electrochemically stable, can realize an excellent discharge performance and an excellent cycle life performance, and is advantageously electrochemically stable in an organic solvent even when being microparticulated.

Besides the inorganic solid particles having the garnet-type structure, particles of a perovskite-type Li-ion conductive material having a composition represented by a formula of $La_{0.56}Li_{0.33}TiO_3$ or particles of a glass ceramic electrolyte having a NASICON-type structure and represented by a structural formula typified by $Li_{1+x+y}Ti_{2-x}Al_xP_{3-y}Si_yO_{12}$ (x = 0.3, y = 0.2) may be used as the preferred first inorganic solid particles.

The preferred average particle size of the first inorganic solid particles is from 0.01 μm to 10 μm. Furthermore, the average particle size of the first inorganic solid particles is more preferably from 0.1 μm to 8 μm. This range provides a further improvement in the ion conductivity of the composite electrolyte.

The first inorganic solid particles preferably have a ratio d90A/d10A of from 10 to 100, and more preferably from 15 to 60. Here, d10A is a particle size [μm] at which a cumulative frequency from a small particle size side is 10% in the particle size cumulative curve of the first inorganic solid particles obtained by a laser diffraction scattering method. d90A is a particle size [μm] at which a cumulative frequency from a small particle size side is 90% In the particle size cumulative curve of the first inorganic solid particles.

The second inorganic solid particles are at least one kind of particles selected from the group consisting of aluminum oxide particles, zirconium oxide particles, silicon oxide particles, magnesium oxide particles, rutile type titanium oxide particles, niobium oxide particles, tantalum oxide particles, hafnium oxide particles, yttrium oxide particles, gallium oxide particles, and germanium oxide particles, and lanthanoid oxide particles such as lanthanum oxide particles.

The preferred average particle size of the second inorganic solid particles is from 0.01 μm to 10 μm. The average particle size of the second inorganic solid particles is more preferably from 0.1 μm to 8 μm.

The second inorganic solid particles have a ratio d90B/d10B of preferably from 10 to 100, and more preferably from 15 to 60. Here, d10B is a particle size (μm) at which a cumulative frequency from a small particle size side is 10% in the particle size cumulative curve of the second inorganic solid particles obtained by a laser diffraction scattering method. d90B is a particle size (μm) at which a cumulative frequency from a small particle size side is 90% in the particle size cumulative curve of the second inorganic solid particles.

The "average particle size" of each of the inorganic solid particles described above is a number average primary particle size when the particles are composed of primary particles, a number average secondary particle size when the particles are composed of secondary particles, and a number average particle size of a mixture of primary particles and secondary particles without distinction between the primary particles and the secondary particles when the particles are composed of the mixture of the primary particles and the secondary particles.

(2) Nonaqueous Electrolyte

The nonaqueous electrolyte includes Li ions.

The nonaqueous electrolyte may include, for example, a liquid nonaqueous electrolyte, a solid polymer electrolyte, and/or a gel polymer electrolyte, as described above. The nonaqueous electrolyte including the solid polymer electrolyte and/or the gel polymer electrolyte may also be referred to as an organic polymer-containing electrolyte.

Each of the solid polymer electrolyte and the gel polymer electrolyte may be, for example, a composite of a liquid nonaqueous electrolyte and a binder. Therefore, the solid polymer electrolyte and the gel polymer electrolyte can include a nonaqueous electrolyte solution component and monomer component that constitute the composite.

The liquid nonaqueous electrolyte may include, for example, an organic solvent and an electrolyte (Li-supporting electrolyte) including Li and dissolved in the organic solvent. The concentration of the electrolyte is preferably within a range of 0.5 mol/L to 2.5 mol/L.

Examples of the organic solvent include cyclic carbonates such as propylene carbonate (PC), ethylene carbonate (EC), and vinylene carbonate; linear carbonates such as diethyl carbonate (DEC), dimethyl carbonate (DMC), and methylethyl carbonate (MEC); cyclic ethers such as tetrahydrofuran (THF), 2-methyltetrahydrofuran (2-MeTHF), and dioxolane (DOX); linear ethers such as dimethoxyethane (DME), and diethoxyethane (DEE); $\gamma$-butyrolactone (GBL), acetonitrile (AN), and sulfolane (SL). One of these organic solvents may be used alone, or two or more of these solvents may be used as a mixed solvent. The organic solvent preferably includes at least one selected from the group consisting of propylene carbonate, ethylene carbonate, diethyl carbonate and methylethyl carbonate.

Examples of the electrolyte (Li-supporting electrolyte) include lithium salts such as lithium perchlorate ($LiClO_4$), lithium hexafluorophosphate ($LiPF_6$), lithium tetrafluoroborate ($LiBF_4$), lithium hexafluoroarsenate ($LiAsF_6$), lithium trifluoromethanesulfonate ($LiCF_3SO_3$), and lithium bistrifluoromethylsulfonylimide ($LiN(CF_3SO_2)_2$), and mixtures thereof. The electrolyte is preferably resistant to oxidation even at a high potential, and most preferably $LiPF_6$.

Examples of the binder include a gel polymer material which form a gel with carbonates. Specific examples thereof include polyacrylonitrile (PAN), polyethylene oxide (PEO), polyvinylidene fluoride (PVdF), and polymethyl methacrylate. One of the above binders may be used alone or plural binders may be used as a mixture. In the case of PVdF, for example, the content of the binder is preferably less than 20% by weight with respect to the weight of the composite electrolyte.

The solid polymer electrolyte and the gel polymer electrolyte are different from each other in terms of hardness or viscosity of the polymer. A solid polymer has no fluidity because of its high degree of polymerization and high polymer hardness. The gel polymer electrolyte includes a electrolye having a lower hardness than that of the solid polymer, and fluidity (viscosity).

As a polymerization initiator, benzenesulfonic acid esters and alkylsulfonium salts and the like can be used. The amount of the polymerization initiator can be appropriately changed according to the composition and amount of the liquid nonaqueous electrolyte and the binder.

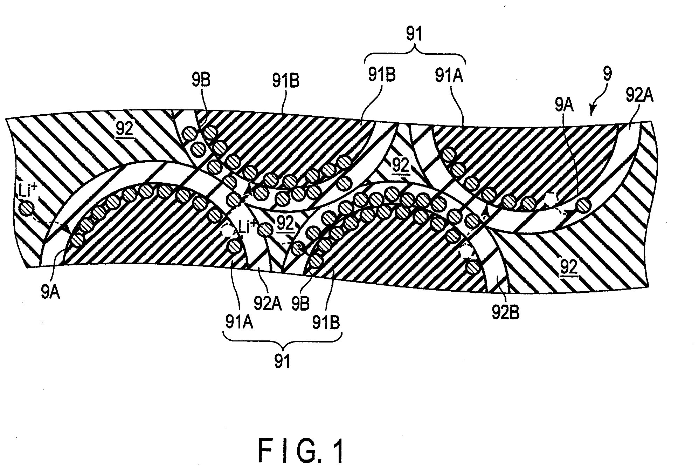

Next, the mechanism of Li conduction in the composite electrolyte according to the first approach will be described with reference to FIG. 1.

FIG. 1 schematically shows the movement of $Li^+$ in one example of a composite electrolyte according to the first approach.

The composite electrolyte 9 shown in FIG. 1 includes an inorganic solid particle mixture 91 and a nonaqueous electrolyte 92. The inorganic solid particle mixture 91 includes first inorganic solid particles 91A and second inorganic solid particles 91B. The nonaqueous electrolyte 92 includes $Li^+$, that is, Li ions.

On applying an external electric field to the composite electrolyte 9, dielectric polarization occurs on the surface of the second inorganic solid particles 91B. Therefore, a part of the Li ions included in the nonaqueous electrolyte 92 are dissociated and accumulated in the vicinity of an interface 9B between the second inorganic solid particle 91B and a part 92B of the nonaqueous electrolyte 92. Therefore, in the composite electrolyte 9, the concentration of the Li ions in the vicinity of the interface 9B would be increased. However, in the entire composite electrolyte 9, a force for suppressing the increase in the concentration of the Li ions in the vicinity of the interface 9B acts so as to maintain the equilibrium of the concentration of the Li ions. Specifically, a part of the Li ions accumulated in the vicinity of the interface 9B move to the vicinity of an interface 9A between the first inorganic solid particle 91A and a part 92A of the nonaqueous electrolyte 92. Therefore, the Li ions would be accumulated in the vicinity of the interface 9A. A force for suppressing an increase in the concentration of the Li ions in the vicinity of the interface 9A acts, and a part of the Li ions in the vicinity of the interface 9A move to the nonaqueous electrolyte 92. A part of Li included in the nonaqueous electrolyte 92 can be dissociated from the nonaqueous electrolyte by the interface 9B. Another part is conducted through the nonaqueous electrolyte 92 and/or the Li-ion conductive first inorganic solid particles 91A. The nonaqueous electrolyte 92 and/or the first inorganic solid particles 91A can form an excellent Li-ion conduction path. These series of actions are linked, and in the composite electrolyte 9, the Li ions are smoothly conducted.

The higher the concentration of the Li ions at each of the interfaces 9A and 9B would be, the stronger a force for maintaining the equilibrium of the Li ions acts. Thus, in this case, the conduction of the Li ions is more facilitated. As described above, in the composite electrolyte in which d90/d10 of the inorganic solid particle mixture 91 is 10 or more, the concentration of the Li ions in the vicinity of the interface 9B can be sufficiently increased by dielectric polarization. Therefore, the composite electrolyte according to the first approach can provide a secondary battery capable of exhibiting an excellent life performance and an excellent output performance in a low temperature environment.

Next, a particle size distribution of an inorganic solid particle mixture included in a composite electrolyte according to the first approach will be described by way of examples.

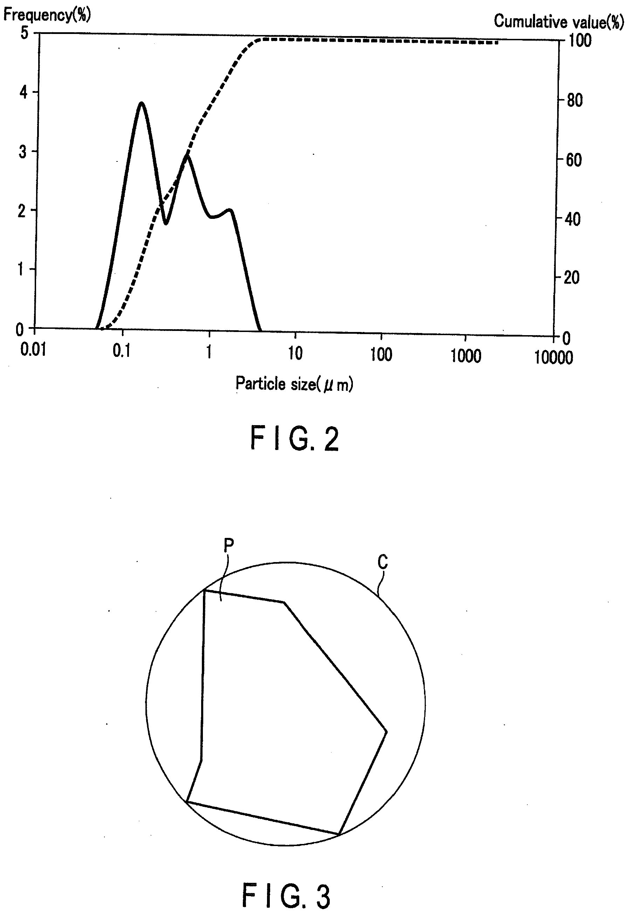

FIG. 2 is a particle size distribution of an inorganic solid particle mixture included in one example of a composite electrolyte according to the first approach.

The solid line shown in FIG. 2 is a particle size frequency distribution of an example of an inorganic solid particle mixture. On the other hand, the dotted line shown in FIG. 2 is a particle size cumulative curve obtained from the particle size frequency distribution shown by the solid line.

In the particle size cumulative curve shown by the dotted line in FIG. 2, a particle size $d_{10}$ at which a cumulative frequency from a small particle size side is 10% is 0.109 $\mu$m. In the particle size cumulative curve shown by the dotted line in FIG. 2, a particle size $d_{90}$ at which a cumulative frequency from a small particle size side is 90% is 1.681 $\mu$m. That is, in the particle size cumulative curve shown by the dotted line in FIG. 2, the ratio $d_{90}/d_{10}$ is 15.42.

[Producing Method]

In a composite electrolyte according to a first approach, an inorganic solid particle mixture is mixed with a nonaqueous electrolyte including Li. At this time, the weight of the nonaqueous electrolyte is set to from 0.1% to 25% with respect to the weight of the composite electrolyte.

The inorganic solid particle mixture can be prepared by mixing first inorganic solid particles with second inorganic solid particles. The first inorganic solid particles are preferably prepared by mixing plural groups of particles having different particle size distributions. For example, the first inorganic solid particles can be prepared in the following procedure. First, particles to be treated, which are raw materials of the first inorganic solid particles, are provided. The particles to be treated are divided into plural groups. At this time, it is preferable to substantially uniform the weights of plural groups. These groups are ground under different conditions. For example, one group of particles is subjected to a ball milling while another group of particles is subjected to dry grinding using a roller compactor, and further other group of particles is subjected to wet grinding using a bead milling. Alternatively, the grinding method may be the same, and the grinding may be performed under different conditions for groups. For example, in grinding using a ball milling or a bead milling, a size of media to be used, grinding time, and rotation speed and the like can be made different. Thus, plural groups of particles obtained by grinding under different conditions can be mixed to obtain the first inorganic solid particles. Similarly, the second inorganic solid particles are preferably obtained by mixing plural groups of particles obtained by grinding under different conditions. By mixing the first inorganic solid particles and the second inorganic solid particles each obtained as described above, the inorganic solid particle mixture having a ratio d90/d10 of from 10 to 500 can be obtained.

In general, it is preferable that functional ceramic exhibits a narrow (sharp) particle size distribution. In other words, as described above, the inorganic solid particles included in the composite electrolyte preferably have a smaller ratio d90/d10. On the contrary, in the composite electrolyte according to the first approach, an inorganic solid particle mixture having a ratio d90/d10 of from 10 to 500 is used.

[Various Measuring Methods]

[First Pretreatment]

When a composite electrolyte included in a secondary battery is to be measured, the composite electrolyte is taken out from the secondary battery in the following procedure.

First, the battery is completely discharged. By discharging the battery to a rated cut-off voltage at a 0.1 C current in a 25°C environment, the battery can be discharged.

Next, in a glove box filled with argon, the battery is disassembled and the electrode composite (or electrode group) is taken out. The weight W of the whole electrode composite taken out is measured. At this time, the weight W does not include the weight of an electrolyte solution adhering to a container member of the battery.

Next, only a composite electrolyte layer on the surface of the electrode is scraped off according to the surface and inter-facial cutting analysis system (SAICAS) method. Thus, the composite electrolyte can be separated from the electrode composite.

Next, the weight $W_{total}$ of the composite electrolyte separated from the electrode composite is measured. The solvent type and Li salt concentration and the like of the nonaqueous electrolyte in the composite electrolyte can be examined using pyrolysis GC-MS at this point. Next, the composite electrolyte is washed with an appropriate solvent and dried under reduced pressure at 60°C for 12 hours. For example, ethyl methyl carbonate and the like can be used. Thus, an organic electrolyte solution included in the composite electrolyte can be removed. The weight $W_d$ of a first mixture, which is obtained after drying, is measured. The weight $W_e$ of the organic electrolyte solution can be obtained by subtracting the weight $W_d$ of the first mixture from the weight $W_{total}$ of the composite electrolyte.

The first mixture is then put into a platinum crucible and heated at 600°C in the air atmosphere for 1 hour. Thus, a monomer component (a gel polymer electrolyte and/or a solid polymer electrolyte and/or a monomer component constituting a binder) included in the mixture can be removed. A second mixture remaining after heating is defined as an inorganic solid particle mixture, and its weight $W_i$ is measured. The weight $W_p$ of a polymer content can be obtained by subtracting the weight $W_i$ of the second mixture (the inorganic solid particle mixture) from the weight $W_d$ of the first mixture.

[Measurement of Particle Size Distribution of Inorganic Solid Particle Mixture]

The cumulative frequency curve of the inorganic solid particle mixture can be obtained by subjecting the second mixture obtained as described above to particle size distribution measurement according to a laser diffraction scattering method.

[Second Pretreatment]

The second mixture obtained as described above is dispersed in pure water and subjected to centrifugation. Each centrifuged portion is collected using a freeze-drying apparatus. Thus, particles having a different composition and particle size can be separated from the second mixture. By subjecting the separated particles to powder X-ray diffraction measurement, particle size distribution measurement, specific surface area measurement according to a BET method, and ion conductivity measurement, various properties of particles included in the composite electrolyte can be examined. Of course, the particles can also be subjected to analysis other than these methods.

[Powder X-Ray Diffraction Measurement]

Each particle which has been separated from the composite electrolyte as described above can be subjected to the powder X-ray diffraction measurement using Cu-K$\alpha$ rays to confirm a crystal structure of each particle.

First, inorganic solid particles as the target sample are ground to prepare a sample having an average particle size of about 5 $\mu$m. The average particle size can be obtained by laser diffraction method. The resultant sample is filled in a holder part having a depth of 0.2 mm, formed on a glass sample plate. At this time, care is necessary to fill the holder part fully with the sample.

Then, another glass plate is used to smooth the surface of the filled sample by pressing the glass plate against the filled sample. At that time, care should be taken to avoid too much or too little amount of the sample to be filled, so as to prevent cracking, formation of voids, and formation of rises and dents in the filled sample. Also, care should be taken to press the glass plate with a sufficient pressure.

Then, the glass plate filled with the sample is set in a powder X-ray diffractometer. In this device, the sample is subjected to the powder X-ray diffraction measurement using the parallel beam method of Cu-K$\alpha$ ray sources to obtain an X-ray diffraction pattern. Measurement is performed using a K$\beta$ filter or a monochromator. Measurement is performed under the following condition: scan speed: 2 deg/min; step width: 0.2 degree; tube voltage: 40 kV; and tubu current: 300 mA.

In the case where an orientation of the sample is high, there is the possibility of deviation of peak position and variation in an intensity ratio, depending on the way of filling the sample. Such a sample having remarkably high orientation is measured using a capillary. Specifically, the sample is inserted into the capillary, which is then mounted on a rotary sample table to measure while being rotated. Such a measuring method can provide the result of reducing the influence of orientation.

On the other hand, when the inorganic solid particles included in the composite electrolyte cannot be isolated from the battery, the crystal structure and crystallinity of the inorganic solid particles can also be examined by subjecting the entire composite electrolyte layer to powder X-ray diffraction measurement. According to analysis using a Rietveld method, substance identification of mixtures and quantitative information such as a mixture ratio can be obtained even in a coexistence state of two or more phases. When the composite electrolyte layer is subjected to powder X-ray diffraction measurement as it is, the thickness of the composite electrolyte layer to be measured is matched with the depth of a measurement holder so that irregularities do not occur on a measurement surface irradiated with X rays. Measurement according to an X-ray diffraction method is performed by using a parallel beam method of a Cu-Kα ray source capable of obtaining an output of 40 kV and 200 mA or more and using a Kβ filter or a monochromator. The measurement is performed at a step angle $2\theta = 0.02°$ or less, and more preferably $2\theta = 0.01°$ or less under a condition in which a scanning speed in a $\theta/2\theta$ interlocking scan mode is set to 5 deg/min or less, and more preferably 1 deg/min, and a highest intensity peak count is set to 5000 cps or more.

[Measurement of Particle Size Distribution]

The particle size distribution of each group of the particles is measured by particle size distribution measurement according to a laser diffraction scattering method. From the particle size distribution obtained by this measurement, the average particle size of each group of the particles can also be determined.

For inorganic solid particles included in a composite electrolyte included in a secondary battery, the first inorganic solid particles and second inorganic solid particles can be observed while discriminating between the first inorganic solid particles and the second inorganic solid particles, whereby the average particle size of each group of the particles can be determined.

A sample to be observed is prepared as follows. First, an electrode composite is taken out from a battery in the above-described procedure. Next, under the same argon atmosphere, a layer including the composite electrolyte is exposed. Next, the taken-out electrode composite is cut in the stacking direction of electrodes. For cutting, a focused ion beam (FIB) is used. Thereby, a cut surface can be obtained without breaking the tissue structure. When the planar shape of the taken-out electrode composite is a quadrilateral shape (or other polygonal shape), the electrode composite is cut so that a cross section parallel to a diagonal line of the surface of the electrode composite and parallel to a direction in which the electrodes are stacked is obtained. Alternatively, when the planar shape of the taken-out electrode composite is a circular shape (or a substantially circular shape including an ellipse shape), the electrode composite is cut so that a cross section parallel to a diameter line of the circle of the electrode composite and paralle to the direction in which the electrodes are stacked is obtained.

The cut surface thus obtained is observed using SEM from one end to the other end. In an SEM image obtained by this observation, the first inorganic solid particles and the second inorganic solid particles are randomly selected, and the particle sizes thereof are measured. At this time, at least 100 particles are measured. The average value of the measurement results of 100 points is taken as an average particle size.

Here, the particle size can be determined as follows. First, a minimum circumscribed circle is drawn for the particles to be measured, selected in the SEM image obtained as described above. Specifically, as shown in FIG. 3, a circle C having the smallest diameter among circles enclosing a particle P (that is, a circumscribed circle), that is, a minimum circumcscribed circle is drawn. The diameter of the minimum circumscribed circle is defined as a particle size.

[BET Specific Surface Area]

The BET specific surface area is measured by a method where a molecule an adsorption occupancy area of which is already known is allowed to be absorbed onto a powder particle surface at a temperature of liquid nitrogen, and the specific surface area of the sample is calculated from the amount. The BET method using physical adsorption of inert gas under low-temperature and low-humidity is the most widely used method. This BET method is based on BET theory, which is the most famous theory as a method for calculating the specific surface area in which Langmuir theory which is a monomolecular layer adsorption theory is extended to multimolecular layer adsorption. The thus-obtained specific surface area is referred to as BET specific surface area.

[Measurement of Ion Conductivity of Inorganic Solid Particles]

The ion conductivities of the first inorganic solid particles and second inorganic solid particles can be measured in the following procedure.

First, the first inorganic solid particles and the second inorganic solid particles are taken out from the secondary battery in the procedure described above, respectively. Hereinafter, the object to be measured is simply referred to as "inorganic solid particles", but measurement for the first inorganic solid particles and the second inorganic solid particles is performed in the same procedure.

Next, the inorganic solid particles are formed into a green compact using a tablet former. A gold (Au) electrode is vapor-deposited on each of both surfaces of the green compact to obtain a measurement sample.

Next, the measurement sample is measured using a frequency response analyzer model 1260, manufactured by Solartron. A measurement frequency range is set to from 5 Hz to 32 MHz. Measurement is performed in a dry argon atmosphere in a 25°C environment without exposing the measurement sample to the air atmosphere. From the measurement results, an AC impedance component $Z_{Li}$ [ohm] of Li ion conduction is obtained. From the AC impedance component $Z_{Li}$, and the area S [cm$^2$] and the thickness d [cm] of the measurement sample, the Li-ion conductivity $\sigma_{Li}$ [S/cm] of the inorganic solid particles can be calculated by the following formula.

$$\sigma_{Li} = (1 / Z_{Li}) \times (d / S)$$

(wherein d/S is defined as a cell constant k.)

[Method of Measuring Ion Conductivity and Modulus Spectrum for Composite electrolyte]

The ion conductivity can be calculated by measuring the AC impedance of the composite electrolyte, and the distribution of the concentration of the Li ions in the composite electrolyte can be defined by performing an analysis method using complex modulus spectra.

The measurement can be performed in the following procedure. First, a composite electrolyte layer including a composite electrolyte to be measured is provided. A gold (Au) electrode is vapor-deposited on each of both surfaces of this composite electrolyte layer to prepare a measurement sample. The measurement sample is measured using a frequency response analyzer model 1260, manufactured by Solartron. A measurement frequency range is set to from 5 Hz to 32 MHz. Measurement is performed in a dry argon atmosphere in a 25°C environment without exposing the composite electrolyte to the air atmosphere. From the measurement results, an AC impedance component $Z_{Li}$ [ohm] of Li ion conduction is obtained. From the AC impedance component $Z_{Li}$, and the area S [cm$^2$] and thickness d [cm] of the composite electrolyte layer, the ion conductivity $\sigma_{Li}$ [S/cm] can be calculated by the following formula.

$$\sigma_{Li} = (1 / Z_{Li}) \times (d / S)$$

(wherein d/S is defined as a cell constant k.)
Next, complex modulus spectrum analysis is performed according to the following formula.

$$\hat{M}(\omega) = i\omega\varepsilon_0\hat{Z}(\omega)/k$$

From the formula given by [$\omega$: angular frequency, $\varepsilon_0$: dielectric constant, Z ($\omega$): complex impedance, k: cell constant], a complex modulus plot graph is produced, wherein a horizontal axis represents a common logarithm with 10 of a frequency (Hz) as a base and a vertical axis represents an imaginary part (M") of a complex modulus. The vertex frequency of the graph thus obtained is defined as $\omega_{max}$. Herein, from "B. Roling, "What do electrical conductivity and electrical modular modulus spectroscopy process about the mechanism of ion transport processes in melts, glasses, and crystals?", Journal of Non-Crystalline Solids 244 (1999) 34-43", it is reported that the value of $\omega_{max}$ is expressed by $\omega_{max} = (Nv*1/\tau)/\varepsilon_{fp}$, which provides an increase in the value of $\omega_{max}$ in proportion to the magnitude of Nv. Since Nv corresponds to the concentration of a charge carrier, the distribution of the concentration of the Li ions in the composite electrolyte can be examined by examining $\omega_{max}$. An increase in the number of the Li ions which are easy to move in the composite electrolyte statistically provides various movement speeds of the ions, so that a peak width appearing in the modulus plot becomes wider (refer to "I. M. Hodge, M. D. Ingram, and A. R. West, "IMPEDANCE AND MODULUS SPECTROSCOPY OF POLYCRYSTALINE SOLID ELCTROLYTE", Journal of Electroanalytical Chemistry74 (1976) 125-143" and "B. Roling, "What do electrical conductivity and electrical modulus spectra tell us about the mechanism of ion transport processes in melts, glasses, and crystals?", Journal of Non-Crystalline Solids 244 (1999) 34-43" in detail).
Using this method, $\omega_1$ in the whole composite electrolyte and $\omega_2$ in the single nonaqueous electrolyte can be measured and compared.

[Confirmation of Distribution of Concentration of Li Ions in Composite electrolyte]

The distribution of the concentration of the Li ions in the composite electrolyte can be confirmed by in-situ measurement using Rutherford Back-scattering Spectrometry (RBS)/Nuclear Reaction Analysis (NRA) in combination.
Specifically, the distribution of the concentration of the Li ions can be confirmed in the following procedure. First, a composite electrolyte layer including a composite electrolyte to be measured is provided. A gold (Au) electrode is vapor-deposited on each of both surfaces of the composite electrolyte layer, and RBS/NRA measurement is performed while a voltage of 5 V is applied between both electrodes. Thus, in the composite electrolyte layer, the Li-ion concentration C1 [mol/L] at the interface between the first inorganic solid particles and the nonaqueous electrolyte and the Li-ion concentration C2 at the interface between the second inorganic solid particles and the nonaqueous electrolyte [mol/L], and the Li-ion concentration C3 [mol/L] in the nonaqueous electrolyte can be measured and compared. The concentration C3 is defined as a Li-ion concentration in the central part of a particle gap composed of the first inorganic solid particles and/or the second inorganic solid particles.

According to the first approach, a composite electrolyte is provided. The composite electrolyte includes an inorganic solid particle mixture and a nonaqueous electrolyte including Li. The inorganic solid particle mixture includes Li-ion conductive first inorganic solid particles and second inorganic solid particles. The first solid inorganic solid particles have a first Li-ion conductivity and the second inorganic solid particles have a second Li-ion conductivity being lower than the first Li-ion cuductivity. The ratio of the weight of the nonaqueous electrolyte to the weight of the composite electrolyte is from 0.1% to 25%. The inorganic solid particle mixture satisfies $10 \leq d90/d10 \leq 500$. In this composite electrolyte, the dissociation of the Li ions from the nonaqueous electrolyte and the conduction of the Li ions can be smoothly performed. As a result, the composite electrolyte according to the first approach can provide a secondary battery capable of exhibiting an excellent life performance and an excellent output performance in a low temperature environment.

(Second Approach)

According to a second approach, a secondary battery is provided. The secondary battery includes a positive electrode active material-containing layer, a negative electrode active material-containing layer, and a Li-conducting layer. The Li-conducting layer is provided between the positive electrode active material-containing layer and the negative electrode active material-containing layer. The Li-conducting layer includes a composite electrolyte according to the first approach.

The positive electrode active material-containing layer, the negative electrode active material-containing layer, and the Li-conductive layer provided therebetween can constitute, for example, an electrode assembly.

The positive electrode active material-containing layer can include a positive electrode active material. The negative.electrode active material-containing layer can include a negative electrode active material. The positive electrode active material and the negative electrode active material will be described later.

The positive electrode active material-containing layer can be provided on a current collector, for example, to constitute a positive electrode. The negative electrode active material-containing layer can be provided on a current collector, for example, to constitute a negative electrode.

Alternatively, the positive electrode active material-containing layer may be provided on one surface of the current collector, and the negative electrode active material-containing layer may be provided on the opposing surface of the current collector to constitute an electrode composite. The electrode composite can also be referred to as an electrode having a bipolar-type structure. That is, the electrode having a bipolar-type structure can include a current collector including a first surface and a opposing second surface, a positive electrode active material-containing layer provided on the first surface of the current collector, and a negative electrode active material-containing layer provided on the second surface of the current collector.

Each of the positive electrode active material-containing layer and the negative electrode active material-containing layer may contain an electrolyte. The electrolyte which may be contained in the positive electrode active material-containing layer and/or the negative electrode active material-containing layer may include (or may hold) the composite electrolyte according to the first approach. Alternatively, the electrolyte which may be contained in the positive electrode active material-containing layer and/or the negative electrode active material-containing layer may include an electrolyte other than the composite electrolyte according to the first approach. The electrolyte may be a liquid nonaqueous electrolyte and/or a gel polymer electrolyte, which is different from the nonaqueous electrolyte contained in the composite electrolyte according to the first approach. These may be those described in the first approach.

The Li-conductive layer can conduct Li ions. For example, the Li-conductive layer may be a separator provided between a positive electrode active material-containing layer and a negative electrode active material-containing layer. Altenatively, the Li-conductive layer can be located between the positive electrode active material-containing layer and the negative electrode active material-containing layer. The Li-conductive layer includes the composite electrolyte according to the first approach. The Li-conductive layer may further include, for example, a liquid electrolyte. As the liquid electrolyte, for example, a liquid nonaqueous electrolyte can be used. As the liquid nonaqueous electrolyte, for example, the liquid nonaqueous electrolyte described above can be used. The weight ratio of the composite electrolyte according to the first approach in the Li-conductive layer is preferably 100% with respect to the weight of the Li-conductive layer.

The positive electrode active material-containing layer, the negative electrode active material-containing layer, and the Li-conductive layer can constitute an electrode group. For example, the electrode group can have a wound-type structure. The electrode group having a wound-type structure is obtained by spirally winding an electrode stack. This electrode stack includes a positive electrode, a Li-conductive layer, and a negative electrode in a state where these are stacked in this order. Here, as described above, the positive electrode includes a current collector and a positive electrode active material-containing layer provided on the current collector. Also, as described above, the negative electrode includes a current collector and a negative electrode active material-containing layer provided on the current collector. For example, the wound-type electrode group may have a flat shape.

Alternatively, for example, the electrode group can have a stack-type structure. The electrode group having a stack-type structure includes, for example, positive electrodes, negative electrodes, and Li-conductive layers. Each of the Li-conductive layers is provided between one positive electrode active material-containing layer and one negative electrode active material-containing layer. Alternatively, the electrode group having a stack-type structure can include, for example, electrodes each having a bipolar structure. That is, the secondary battery according to one aspect of the second approach includes electrode composites, and each of the electrode composites has the above-described bipolar structure. The secondary battery according to this aspect may include, for example, a first electrode composite and a second electrode composite provided adjacent to the first electrode composite. In such a secondary battery, the Li-conductive layer is provided between the positive electrode active material-containing layer of the first electrode composite and the negative electrode active material-containing layer of the second electrode composite. The secondary battery of this aspect may further include a pair of positive and negative electrodes. The positive electrode can include, for example, a current collector and a positive electrode active material-containing layer provided on one surface of the current collector. The negative electrode can include, for example, a current collector and a negative electrode active material-containing layer provided on one surface of the current collector. The positive electrode active material-containing layer of the positive electrode can face the negative electrode active material-containing layer of one electrode composite with the Li-conductive layer sandwiched therebetween. The negative electrode active material-containing layer of the negative electrode can face the positive electrode active material-containing layer of another electrode composite with the Li-conductive layer sandwiched therebetween.

The battery according to the second approach may further include a container member. The positive electrode active material-containing layer, the negative electrode active material-containing layer, and the Li-conductive layer can be housed in the container member. When a further nonaqueous electrolyte is used in combination according to the application, the nonaqueous electrolyte can also be housed in the container member.

The battery including the negative electrode and the positive electrode may further include a negative electrode terminal electrically connected to the negative electrode and a positive electrode terminal electrically connected to the positive electrode.

The battery according to the second approach may be connected in series or in parallel, combined with another type of battery, and/or in combination with a casing and the like to form a battery pack. As the battery pack, conventionally known configurations can be appropriately selected. The specific example of the configuration of the battery pack will be described in detail later.

Hereinafter, members which can be included in the battery according to the second approach will be described in detail.

(1) Negative Electrode Active Material-containing Layer

The negative electrode active material-containing layer can include, for example, a negative electrode active material, a conductive agent, and a binder.

The negative electrode active material may be a material that can have Li inserted and extracted. As such a negative electrode active material, a carbon material, a Li alloy material, a metal oxide, and a metal sulfide can be cited. Among them, materials including a Ti element (Ti-containing negative electrode active material) is preferred. It is particularly preferred to use negative electrode active material particles of at least one kind of Ti-containing oxide selected from Li-Ti-containing oxide, Ti-containing oxide, Nb-Ti-containing oxide and Li-Na-Nb-Ti-containing oxide each of which has a Li-ion-insertion- and-extraction potential within a range of from 1 V (vs. Li/Li$^+$) to 3 V (vs. Li/Li$^+$) based on a redox potential of lithium.

Examples of the Li-Ti-containing oxide may include a lithium-titanium composite oxide represented by a general formula of $Li_{4+x}Ti_5O_{12}$ ($-1 \leq x \leq 3$) having a spinel-type crystal structure, a lithium-titanium composite oxide represented by a general formula of $Li_{2+x}Ti_3O_7$ ($0 \leq x \leq 4$) having a ramsdellite-type crystal structure.

Examples of the Ti-containing oxide may include a Ti-containing oxide represented by general formula of $Li_{1+x}Ti_2O_4$, a general formula of $Li_{1.1+x}Ti_{1.8}O_4$, a general formula of $Li_{1.07+x}Ti_{1.86}O_4$, or a general formula of $Li_xTiO_2$ ($0 \leq x \leq 1$ in the general formulae), Ti-containing oxide represented by a general formula of $Li_xTiO_2$ ($0 \leq x \leq 1$) having a monoclinic structure ($TiO_2(B)$ as a structure before charging), and Ti-containing oxide having a rutile structure or an anatase structure ($TiO_2$ as a structure before charging).

Examples of the Nb-Ti-containing oxide may include represented by a general formula of $Li_aTiM_bM_{2\pm\beta}O_{7\pm\sigma}$ (0

< a < 5, 0 < b < 0.3, 0 < $\beta$ < 0.3, 0 < $\sigma$ < 0.3, M is at least one element selected from the group consisting of Fe, V, Mo, and Ta (M may be one element selected from the group, or a combination of two or more elements selected from the group)).

Examples of the metal composite oxide may include a composite oxide represented by a general formula of $Li_{2-a}M(I)_{2-b}Ti_{6-c}M(II)_dO_{14+\sigma}$ (M(I) is Na, or includes Na and at least one element selected from the group consisting of Sr, Ba, Ca, Mg, Cs and K (M(I) may be one element selected from the group, or a combination of two or more elements selected from the group); M(II) is at least one element selected from the group consisting of Zr, Sn, V, Nb, Ta, Mo, W, Fe, Co, Mn, and Al (M(II) may be one element selected from the group, or a combination of two or more elements selected from the group); $0 \le a \le 6$, $0 \le b < 2$, $0 < c < 6$, $0 < d \le 6$, $-0.5 \le \sigma \le 0.5$). Among compounds represented by the above general formula, a compound which contains Na, Li, Nb and Ti is encompassed with in the Li-Na-Nb-and-Ti containing oxide.

As a negative electrode active material, one kind of them may be used alone, or two or more kinds thereof may be mixed to be used. The lithium-titanium composite oxide represented by the general formula of $Li_{4+x}Ti_5O_{12}$ ($-1 \le x \le 3$), which has the spinel-type crystal structure and can exhibit a very small volume change, is more preferred.

By using the above-described Ti-containing oxide, an aluminum foil can be used as a current collector which supports the negative electrode active material-containing layer in place of a cupper foil. The aluminum foil may have a smaller weight than that of a cupper foil and be inexpensive. As a result, light-weighting and cost reduction of the battery may be realized. Further, it is advantageous in view of weight and capacity per size of the battery having the bipolar electrode structure described below.

The negative electrode active material can have, for example, a particle shape. The negative electrode active material particles may be primary particles or secondary particles formed by the aggregation of the primary particles. Alternatively, the negative electrode active material particles may be a mixture of the primary particles and secondary particles. From the viewpoint of further increasing a density, it is preferable that the primary particles are present in an amount of from 5% by volume to 50% by volume in the negative electrode active material-containing layer.

The negative electrode active material particles desirably have an average primary particle size of 1 $\mu$m or less and a specific surface area of from 3 $m^2$/g to 200 $m^2$/g measured by a BET method according to $N_2$ adsorption. By using such negative electrode active material particles, affinity between the negative electrode active material-containing layer and the nonaqueous electrolyte can be improved when the nonaqueous electrolyte is used in the battery. By setting the average primary particle size to 1 $\mu$m or less, the diffusion distance of Li ions inside the active material can be shortened. The specific surface area can be increased. The method of measuring the specific surface area according to the BET method is the same as the method described above. The average primary particle size is more preferably from 0.1 to 0.8 $\mu$m.

The reason why the average primary particle size of the negative electrode active material particles is in the above range is that, when the specific surface area of the negative electrode active material-containing layer is increased to from 3m $^2$/g to 50 $m^2$/g by using primary particles having an average particle size exceeding 1 $\mu$m, a decrease in the porosity of the negative electrode active material-containing layer cannot be avoided. The details will be described later. However, when the average primary particle size is small, the aggregation of primary particles is likely to occur. When the aggregation of the primary particles occurs, for example, in the battery using the nonaqueous electrolyte, the distribution of the nonaqueous electrolyte is biased to the negative electrode active material-containing layer, which may cause the depletion of the electrolyte in the positive electrode active material-containing layer. The lower limit value is desirably 0.1 $\mu$m.

The average particle size (diameter) of the secondary particles of the negative electrode active material particles is preferably more than 2 $\mu$m. It is more preferable that the average secondary particle size of the negative electrode active material particles is more than 5 $\mu$m. The range of the secondary particle size is more preferably from 7 $\mu$m to 20 $\mu$m. This range allows a high-density negative electrode active material-containing layer to be produced even when the press pressure of the negative electrode is lowered. For example, in the case of using an Al-containing foil as a current collector, the elongation of the A1-containing foil can be suppressed.

The negative electrode active material particles having secondary particles having an average particle size of more than 2 $\mu$m can be obtained, for example, as follows. First, an active material precursor having primary particles having an average particle size of 1 $\mu$m or less is produced by making active material raw materials reacting with each other, and then subjected to a firing treatment. The fired product thus obtained is subjected to a grinding treatment using a grinder such as a ball mill or a jet mill. The ground material thus obtained is further subjected to a firing treatment. By this operation, the active material precursor can be aggregated and grown into secondary particles having a larger particle size.

It is preferable to coat the surface of the secondary particles with a carbon material in order to reduce the electric resistance of the negative electrode active material-containing layer. The secondary particles of the negative electrode active material coated with the carbon material can be produced, for example, by adding a precursor of a carbon material in a process of producing secondary particles and preforming the firing treatment under a temperature condition of 500°C or higher under an inert atmosphere.

A conductive agent is added to improve the conductivity of the negative electrode active material-containing layer. When the current collector is used, the contact resistance between the negative electrode active material-containing layer and the current collector can be suppressed by the conductive agent. As the conductive agent, a carbon material can be used, for example. Examples of the carbon material include acetylene black, carbon black, coke, a carbon fiber, graphite, an Al powder, or TiO. More preferred are coke, graphite, and a TiO powder each of which have been subjected to heat treatment at a temperature of from 800°C to 2,000°C and has an average particle size of 10 $\mu$m or less, or a carbon fiber having an average fiber diameter of 1 $\mu$m or less. The specific surface area of these carbon materials measured by the BET method according to $N_2$ adsorption is preferably 10 $m^2/g$ or more. One of these may be used as the conductive agent, or a mixture of two or more of these may be used as the conductive agent.

The binder can, for example, bind the negative electrode active material and the conductive agent. Examples of the binder may include polytetrafluoroethylene (PTFE), polyvinylidene fluoride (PVdF), fluorine-based rubber, styrene butadiene rubber, and core-shell binder. One of these can be used as a binder. Alternatively, a combination of two or more of these can be used as a binder.

Regarding mixing ratios of the negative electrode active material, the conductive agent, and the binder in the negative electrode active material-containing layer, the negative electrode active material is preferably in a range of from 80 wt% to 95 wt%, the conductive agent is preferably in a range of from 3 wt% to 18 wt%, and the binder is preferably in a range of from 2 wt% to 7 wt%.

As an addition amount of the binder is larger, dispersibility of the particles tends to be increased. However, in such a case, the surface of the particles is easily covered with the binder, and thus, the specific surface area of the negative electrode active material-containing layer is reduced. On the other hand, when the addition amount of the binder is small, the particles easily agglomerate, and thus, it is preferred to adjust stirring conditions (the number of rotations of a ball mill, stirring time and stirring temperature) to suppress the agglomeration of particles. Thus, fine particles may be uniformly dispersed. In addition, even if the addition amount of the binder and the stirring conditions are included within appropriate ranges, when the addition amount of the conductive agent is large, the surface of the negative electrode active material is easily covered with the conductive agent, and porosity on the surface of the negative electrode are also decreased, and thus, the specific surface area of the negative electrode layer becomes smaller.

On the other hand, when the addition amount of the conductive agent is small, the negative electrode active material may tends to be easily pulverized, and thus, the specific surface area of the negative electrode active material-containing layer becomes large. Alternatively, in this case, dispersibility of the negative electrode active material particles may tends to be lowered, and thus the specific surface area of the negative electrode active material-containing layer becomes smaller. Further, not only the addition amount of the conductive agent, but also the average particle size and specific surface area of the conductive agent may affect the specific surface area of the negative electrode active material-containing layer. It is desirable that the conductive agent has an average particle size which is the same as or less than that of the negative electrode active material, and a specific surface area larger than that of the negative electrode active material.

The negative electrode active material-containing layer can be produced, for example, in the following procedure. First, the above-described negative electrode active material, conductive agent, and binder are suspended in an appropriate solvent to obtain a slurry. In this case, it is desirable to uniformly disperse the the negative electrode active material particles in a state where the amount of the binder added is small. And then, this slurry is applied to a substrate such as a current collector. The applied film applied onto the current collector is dried and subjected to hot-pressing. Thus, a negative electrode active material-containing layer can be obtained.

Next, a reason why the specific surface area of the negative electrode active material-containing layer is preferably within the range of 3 $m^2/g$ to 50 $m^2/g$. In a negative electrode active material-containing layer having the specific surface area of less than 3 $m^2/g$, the agglomeration of the particles is prominent. Due to this, for example, when the nonaqueous electrolyte is used, the affinity between the negative electrode active material-containing layer and the nonaqueous electrolyte might be lowered, leading to increase in interface resistance of the negative electrode active material-containing layer. As a result, output performance and charge-and-discharge cycle performance might be deteriorated. On the other hand, in a negative electrode active material-containing layer having the specific surface area of more than 50 $m^2/g$, the distribution of the nonaqueous electrolyte might be biased toward the negative electrode active material-containing layer, resulting in a shortage of the nonaqueous electrolyte in the positive electrode active material-containing layer. In such a case, the output performance and the charge-and-discharge cycle performance may not be improved. A more preferred range of the specific surface area is from 5 $m^2/g$ to 50 $m^2/g$. Here, the specific surface area of the negative electrode active material-containing layer means the surface area per 1 g of the negative electrode active material-containing layer.

The negative electrode active material-containing layer may be, for example, a porous layer supported on the current collector and including the negative electrode active material, the conductive agent, and the binder. If the negative electrode active material-containing layer is porous, porosity (excluding the current collector) is preferably within a range of from 20% to 50%. Accordingly, for example, in a battery where the nonaqueous electrolyte is used, it is possible to obtain the negative electrode active material-containing layer having a high-density and exhibiting excellent affinity between the negative electrode active material-containing layer and the nonaqueous electrolyte. A more preferable range of the porosity is from 25% to 40%.

(2) Positive Electrode Active Material-containing Layer

The positive electrode active material-containing layer can include, for example, a positive electrode active material, a conductive agent, and a binder.

The positive electrode active material may be a material that can have Li inserted and extracted. As such a positive electrode active material, Li-Ni-Al-containing composite oxide (for example, $Li_xNi_{1-y}Al_yO_2$; $0 < x \leq 1$, $0 < y < 1$), Li-Co-containing composite oxide (for example, $Li_xCoO_2$; $0 < x \leq 1$), Li-Mn-containing composite oxide (for example, $Li_xMn_2O_4$ or $Li_xMnO_2$; $0 < x \leq 1$), Li-Ni-containing composite oxide (for example, $LiNiO_2$; $0 < x \leq 1$), Li-CoAl-containing composite oxide, Li-Ni-Co-Mn-containing composite oxide (for example, $Li_xNi_{1-y}Co_yO_2$; $0 < x \leq 1$, $0 < y < 1$), Li-Mn-Ni-containing composite oxide having a spinel-type crystal structure (for example, $Li_xMn_{2-y}Ni_yO_4$; $0 < x \leq 1$, $0 < y < 2$), Li-Mn-Co-containing composite oxide (for example, $Li_xMn_yCo_{1-y}O_2$; $0 < x \leq 1$, $0 < y < 1$), lithium phosphate having a olivine-type crystal structure (for example, lithium-iron phosphate ($Li_xFePO_4$; $0 < x \leq 1$) and lithium phosphate salt (for example, $Li_xFe_{1-y}Mn_yPO_4$ and $Li_xCoPO_4$; $0 < x \leq 1$, $0 < y < 1$)), and fluorinated iron sulfate (for example, $Li_xFeSO_4F$; $0 < x \leq 1$) can be cited.

These composite oxides are preferably used because it is possible to obtain a high positive electrode potential. Among them, the Li-Ni-Al-containing composite oxide, the Li-Ni-Co-Mn-containing composite oxide, or the Li-Mn-Co-containing composite oxide may suppress the reaction with the nonaqueous electrolyte under a high temperature environment to greatly improve battery lifespan. In particular, the Li-Ni-Co-Mn-containing composite oxide represented by $Li_xNi_{1-y-z}Co_yMn_zO_2$ ($0 < x < 1.1$, $0 < y < 0.5$, $0 < z < 0.5$) is preferred. Excellent durability lifespan under a high temperature may be obtained by using the Li-Ni-Co-Mn-containing composite oxide.

Other material such as manganese dioxide ($MnO_2$), iron oxide, nickel oxide, and vanadium oxide (for example, $V_2O_5$) can be also used as a positive electrode active material.

As a positive electrode active material, one of the compounds cited above may be used alone, or two or more thereof may be mixed to be used.

The positive electrode active material can have, for example, a particle shape. The average primary particle size of the positive electrode active material is preferably from 100 nm to 1 $\mu$m. The positive electrode active material having an average primary particle size of 100 nm or more is easy to handle during industrial production. The positive electrode active material having an average primary particle size of 1 $\mu$m or less allows lithium ions to diffuse smoothly in a solid.

The specific surface area of the positive electrode active material is preferably from 0.1 m$^2$/g to 10 m$^2$/g. The positive electrode active material having a specific surface area of 0.1 m$^2$/g or more can secure sufficient sites into which lithium ions can be inserted and from which lithium ions can be extracted. The positive electrode active material having a specific surface area of 10 m$^2$/g or less is easy to handle during industrial production, and can secure a good charge-and-discharge cycle performance. The conductive agent may be added to improve the electric conductivity in the positive electrode active material-containing layer. If a current collector is used, the contact resistance between the positive electrode active material-containing layer and the positive electrode current collector can be suppressed. Examples of the conductive agent include, for example, acetylene black, carbon black and graphite. One of these can be used as a conductive agent, or a combination of two or more of these can used as a conductive agent.

The binder can, for example, bind the active material and the conductive agent. Examples of the binder include polytetrafluoroethylene (PTFE), polyvinylidene fluoride (PVdF) and fluorine rubber. One of these compounds can be used as a binder, or a combination of two or more of these compounds can be used as a binder.

Regarding mixing ratios of the positive electrode active material, the conductive agent and the binder in the positive electrode active material-containing layer, the positive electrode active material is preferably in a range of from 80 wt% to 95 wt%, the conductive agent is preferably in a range of from 3 wt% to 18 wt%, and the binder is preferably in a range of from 2 wt% to 7 wt%. As for the conductive agent, if the content is 3 wt% or more, the above-described effect can be obtained. If the content of the conductive agent is 18 wt% or less, the decomposition of the nonaqueous electrolyte at the surface of the conductive agent can be suppressed during storage under high-temperature. As for the binder, if the content is 2 wt% or more, sufficient electrode strength can be achieved. If the content of the binder is 7 wt% or less, the content of the insulator in the electrode can be reduced.

The positive electrode active material-containing layer can be produced, for example, in the following procedure. First, the above-described positive electrode active material, conductive agent, and binder are suspended in an appropriate solvent to obtain a slurry. Next, the slurry is applied to a substrate, for example, a current collector. The applied film applied onto the current collector is dried and pressed. Thus, a positive electrode active material-containing layer can be obtained. The positive electrode press pressure is preferably from 0.15 ton/mm to 0.3 ton/mm. When pressing is performed at a pressure within this range, adhesion (peel strength) between the positive electrode active material-containing layer and the substrate is increased and the elongation percentage of the substrate can be suppressed to 20% or less, which is preferable.

(3) Current Collector

It is preferred to use a foil including aluminum (Al) as the current collector which can be used in the negative electrode. As such an Al-containing foil, it is preferred to use an aluminum foil or an aluminum alloy foil. Particularly, it is preferred to use of an aluminum foil (Al foil) of pure Al (purity of 100%) or an aluminum alloy (Al alloy) foil in which an aluminum purity is 98% or more and less than 100%. The purity of the Al alloy foil is more preferably 99.99% or more. The thickness of the Al foil or the Al alloy foil is, for example, 20 $\mu$m or less, more preferably 15 $\mu$m or less. As the Al alloy, an alloy including at least one kind of element selected from the group consisting of Fe, Mg, Zn, Mn and Si in addition to Al is preferred. For example, an Al-Fe alloy, an Al-Mn-based alloy, and an Al-Mg-based alloy are able to obtain higher strength than that of Al. On the other hand, a content of transition metals such as Cu, Ni, Cr, etc., in the Al or Al alloy is preferably 100 ppm or less (including 0 ppm). For example, the Al-Cu-based alloy has increased strength, but deteriorated corrosion resistance, and thus, the Al-Cu-based alloy is not suitable as the current collector.

It is preferred to use a foil including aluminum (Al) as the current collector which can be used in the positive electrode. As such an Al-containing foil, it is preferred to use an aluminum foil of pure A1 (purity of 100%) or an aluminum alloy foil in which an aluminum purity is 99% or more and less than 100%. As the Al alloy, an alloy including at least one kind of element selected from the group consisting of Fe, Mg, Zn, Mn and Si in addition to Al is preferred. For example, an Al-Fe alloy, an Al-Mn-based alloy, and an Al-Mg-based alloy are able to obtain higher strength than that of Al. On the other hand, a content of transition metals such as Cu, Ni, Cr, etc., in the Al and Al alloys is preferably 100 ppm or less (including 0 ppm). For example, the Al-Cu-based alloy has increased strength, but deteriorated corrosion resistance, and thus, the Al-Cu-based alloy is not suitable as the current collector.

The preferable Al purity of Al-containing foil used as the current collector of the positive electrode is within a range of 99.0% or more and 99.99% or less. Within this range, deterioration of a high-temperature cycle lifespan due to dissolution of impurity elements can be reduced.

As the current collector included in the electrode having a bipolar structure, the same Al-containing foil as those of the positive electrode current collector and the negative electrode current collector is preferably used.

(4) Li-Conductive Layer

The Li-conductive layer includes the composite electrolyte according to the first approach. The interface between the Li-conductive layer and the positive electrode active material-containing layer may reflect irregularities on the surface of the positive electrode active material-containing layer. Likewise, the interface between the Li-conductive layer and the negative electrode active material-containing layer can reflect irregularities on the surface of the negative electrode active material-containing layer. For example, the surface of an active material-containing layer may have irregularities due to the constituent materials of the active material-containing layer. When the active material is located on the surface of the active material-containing layer, the surface of the active material-containing layer can also have irregularities due to the active material particles.

Particularly, as described above, particles having an average secondary particle size more than 5 $\mu$m may be used as the negative electrode active material on the surface of the negative electrode active material-containing layer. The negative electrode active material-containing layer produced using such particles can have large irregularities on its surface. The Li-conductive layer can be closely contact with the negative electrode active material-containing layer along the irregularities. Likewise for the positive electrode active material-containing layer, the Li-conductive layer can be closely contact with the positive electrode active material-containing layer along the irregularities of the surface.

Such a structure allows the interface between the Li-conductive layer and the positive electrode active material-containing layer, and the interface between the Li-conductive layer and the negative electrode active material-containing layer to be in a state where the interfaces have no gap. Particularly, a part of the inorganic solid particle mixture can deeply enter into the recessed part on the surface of the negative electrode active material-containing layer.

The Li-conductive layer can have a minimum thickness of less than 8 $\mu$m. The minimum thickness is more preferably less than 5 $\mu$m. The minimum thickness of the Li-conductive layer is the thickness of a portion having the smallest thickness in the Li-conductive layer. In other words, the minimum thickness of the Li-conductive layer is the thickness of a portion closest to the surface of the positive electrode active material-containing layer and the surface of the negative electrode active material-containing layer. When the surface of the active material-containing layer has irregularities, a portion where convex parts of the surface face each other may be, for example, a portion having the minimum thickness.

As described above, the inorganic solid particle mixture included in the composite electrolyte according to the first approach has a ratio d90/d10 of 10 or more. Thus, the composite electrolyte according to the first approach including the inorganic solid particle mixture having such a broad particle size distribution can exhibit excellent electrical insulation properties. As described above, the inorganic solid particle mixture included in the composite electrolyte according to the first approach has a ratio d90/d10 of 500 or less. The composite electrolyte including the inorganic solid particle mixture can suppress deterioration in applying properties due to the too broad particle size distribution of the solid content. Therefore, the Li-conductive layer including the composite electrolyte can exhibit high in-plane uniformity. As these results, the battery according to the second approach can ensure electrical insulation between the positive electrode active material-containing layer and the negative electrode active material-containing layer even if the thickness of the Li-conductive layer is reduced. The smaller the thickness of the Li-conductive layer is, the smaller the secondary battery is, which advantageously provides an increase in a capacity per volume.

The minimum thickness of the Li-conductive layer can be set to, for example, 0.05 $\mu$m or more, and more preferably 0.5 $\mu$m or more. The average thickness of the Li-conductive layer is preferably 0.1 $\mu$m or more and less than 8 $\mu$m. The average thickness is more preferably from 0.5 $\mu$m to 5 $\mu$m.

A method of forming the Li-conductive layer is not particularly limited. The Li-conductive layer can be formed, for example, by applying a material onto the positive electrode active material-containing layer or the negative electrode active material-containing layer. Alternatively, the Li-conductive layer can be formed by injecting a material between the positive electrode active material-containing layer and the negative electrode active material-containing layer may. A specific example will be described later with reference to the drawings.

(5) Container Member

As the container member, a metallic container or a container made of a laminate film may be used.

As the metal container, a metal can that is made of Al, an Al alloy, iron, stainless steel, or the like, may be used. The metal container can have, for example, an angular shape or a cylindrical shape and. In addition, a plate thickness of the container is, for example, 1 mm or less, preferably 0.5 mm or less, and more preferably, 0.3 mm or less.

The metal can made of the Al alloy preferably is made of an alloy having 99.8% or less of Al purity and including at least one kind of element selected from the group consisting of Mn, Mg, Zn, and Si. The Al alloy may be used, such that strength of the metal is drastically increased, thereby thinning a thickness of the metal can. As a result, it is possible to realize a thin, lightweight, high-output battery with excellent heat dissipation.

As the laminate film, for example, a multilayer film including resin films and a metalfilm which is sandwiched between the resin films, etc., may be used. The metal film is preferably made of an aluminum foil or aluminum alloy foil to slim down in weight. As the resin, polymers such as polypropylene (PP), polyethylene (PE), nylon, and polyethylene terephthalate (PET), etc., may be used. In addition, a thickness of the laminate film is preferably 0.2 mm or less. The Al foil preferably has a purity of 99.5% or more in the case that Al-containing foil is used as the metal film. The laminate film may be heat-sealed to be formed into the shape of a container member.

The shape of the container member is not particularly limited, and may be, for example, flat (thin), square, cylinder, coin, or button-shaped. The container member depends on the size of the battery, and may be a container member for a compact battery mounted on mobile electronic devices or the like, and a container member for a large battery mounted on two- to four-wheel automobiles or the like.

(6) Negative Electrode Terminal

The negative electrode terminal may be made of a material which is electrically stable in the potential range of 1.0 V (vs. Li/Li$^+$) to 3.0 V (vs. Li/Li$^+$) based on the oxidation-reduction potential of lithium, and has electrical conductivity. Specific examples of the material for the negative electrode terminal include copper, nickel, stainless steel, or aluminum, or an aluminum alloy including at least one element selected from the group consisting of Mg, Ti, Zn, Mn, Fe, Cu and Si. As a material of the negative electrode terminal, it is preferable to use an aluminum or aluminum alloy. The negative electrode terminal is preferably made of the same material as the negative electrode current collector in order to reduce the contact resistance with the negative electrode current collector.

(7) Positive Electrode Terminal

The positive electrode terminal may be made of, for example, a material which is electrically stable in the potential range of 3.0 V (vs. Li/Li$^+$) to 4.5 V (vs. Li/Li$^+$) based on the oxidation-reduction potential of lithium, and has electrical conductivity. Examples of the material for the positive electrode terminal include aluminum or an aluminum alloy including at least one element selected from the group consisting of Mg, Ti, Zn, Mn, Fe, Cu, and Si. The positive electrode terminal is preferably made of the same material as the positive electrode current collector in order to reduce contact resistance with the positive electrode current collector.

[Method of Measuring Minimum Thickness and Average Thickness of Li-Conductive Layer]

The minimum thickness of the Li-conductive layer in the battery is measured as follows. First, an electrode composite is taken out from a battery to be measured, as described above. Next, the taken-out electrode composite is cut using an FIB as described above. Thus, it is possible to obtain the cross section in the stacking direction of positive electrode active material-containing layer/Li-conductive layer/negative electrode active material-containing layer. All the layers included in the cut-surface thus obtained are measured by SEM. The observation magnification at this time is preferably 20,000 times. All the layers included in the cross section in the stacking direction are observed and the thickness of the thinnest portion of the Li-conductive layer is defined as the thickness of a portion having the smallest thickness of the electrolyte layer.

The average thickness of the Li-conductive layer is measured as follows. First, as described above, the cut-surface of the electrode composite is obtained. Next, the cross section is wholly observed from one end to the other end along the cut-surface at the same magnification by using SEM. The observation magnification at this time is preferably 20,000 times. From the obtained SEM image, the area of the Li-conductive layer included in the diagonal cross section is found. The value of the area is divided by the width of the Li-conductive layer extending in a direction perpendicular to the stacking direction of the electrodes, that is, the length of the incision on the surface of the electrode composite to find the quotient. By converting this quotient at the observed magnification, the average thickness can be found.

Next, a specific example of a secondary battery according to the second approach will be described with reference to the drawings.

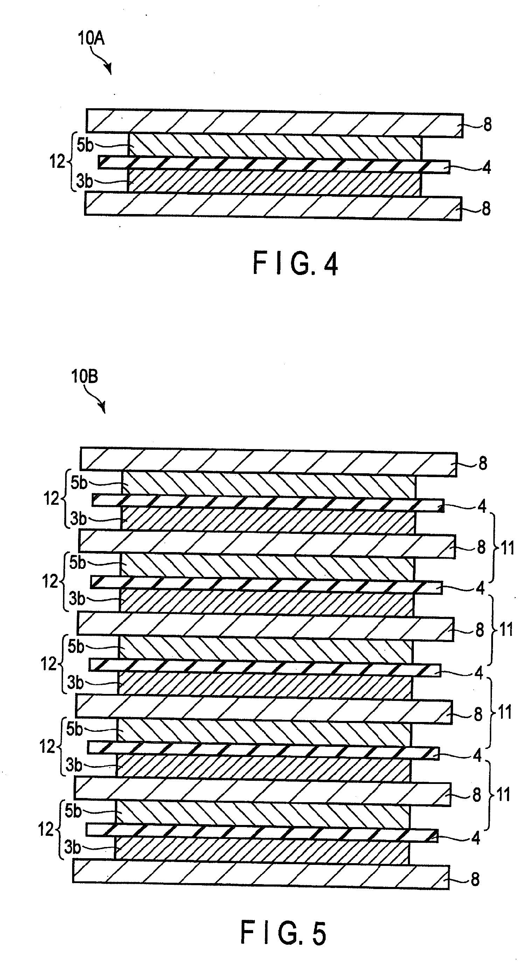

First, an electrode composite of a first example which can be included in a secondary battery according to the second approach will be described with reference to FIG. 4.

FIG. 4 is a schematic cross-sectional view of a first example of an electrode composite which can be included in a secondary battery according to the second approach.

An electrode composite 10A shown in FIG. 4 includes a positive electrode active material-containing layer 5b, a Li-conductive layer 4, a negative electrode active material-containing layer 3b, and two current collectors 8. As illustrated, in the electrode composite 10A, the Li-conductive layer 4 is provided between the positive electrode active material-containing layer 5b and the negative electrode active material-containing layer 3b. The Li-conductive layer 4 is in contact with one surface of the positive electrode active material-containing layer 5b and one surface of the negative electrode active material-containing layer 3b. A surface of the positive electrode active material-containing layer 5b which is not in contact with the Li-conductive layer 4 is in contact with one current collector 8. Similarly, a surface of the negative electrode active material-containing layer 3b which is not in contact with the Li-conductive layer 4 is in contact with the other current collector 8. Thus, the electrode composite 10A has a structure in which one current collector 8, the negative electrode active material-containing layer 3b, the Li-conductive layer 4, the positive electrode active material-containing layer 5b, and another current collector 8 are stacked in this order. In other words, the electrode composite 10A as the example shown in FIG. 4 is an electrode body including a set of electrode assembly 12 including the positive electrode active material-containing layer 5b, the negative electrode active material-containing layer 3b, and the Li-conductive layer 4 provided therebetween.

Next, a second example of an electrode composite which can be included in a secondary battery according to the second approach will be described with reference to FIG. 5.

FIG. 5 is a schematic cross-sectional view of a second example of an electrode composite which can be included in a secondary battery according to the second approach.

An electrode composite 10B shown in FIG. 5 includes plural, for example, four electrodes 11 having a bipolar structure. As shown in FIG. 5, each electrode 11 includes a current collector 8, a positive electrode active material-containing layer 5b formed on one surface of the current collector 8, and a negative electrode active material-containing layer 3b formed on the other surface of the current collector 8. As shown in FIG. 5, these electrodes 11 are provided so that the positive electrode active material-containing layer 5b of one electrode 11 faces the negative electrode active material-containing layer 3b of another electrode 11 with the Li-conductive layer 4 sandwiched therebetween.

The electrode composite 10B further includes the other two Li-conductive layers 4, the other two current collectors 8, the other positive electrode active material-containing layer 5b, and the other negative electrode active material-containing layer 3b. As shown in FIG. 5, one positive electrode active material-containing layer 5b faces the negative electrode active material-containing layer 3b of the electrode 11 located at the top layer of the stack of the electrodes 11 with one Li-conductive layer 4 sandwiched therebetween. A surface of the positive electrode active material-containing layer 5b which is not in contact with the Li-conductive layer 4 is in contact with one current collector 8. One negative electrode active material-containing layer 3b faces the positive electrode active material-containing layer 5b of the electrode 11 located at the bottom layer of the stack of the electrode 11 with one Li-conductive layer 4 sandwiched therebetween. A surface of the negative electrode active material-containing layer 3b which is not in contact with the Li-conductive layer 4 is in contact with one current collector 8.

An electrode composite which can be included in a secondary battery according to the second approach can be made thin by closely contacting the positive electrode active material-containing layer with the Li-conductive layer, and the negative electrode active material-containing layer with the Li-conductive layer. Therefore, in the secondary battery according to the second approach, a large number of electrode assemblies of the positive electrode active material-containing layer, the negative electrode active material-containing layer, and the Li-conductive layer provided therebetween can be stacked. Thus, it is possible to provide a thin secondary battery requiring a less space, and having a large capacity and being excellent in a cycle life performance, a thermal stability, and an electrochemical stability. The electrode composite 10B as the example illustrated in FIG. 5 includes five sets of electrode assemblies 12 each including the positive electrode active material-containing layer 5b, the negative electrode active material-containing layer 3b, and the Li-conductive layer 4 provided therebetween. However, the number of the electrode assemblies 12 can be appropriately selected according to the design of the shape and size of the battery.

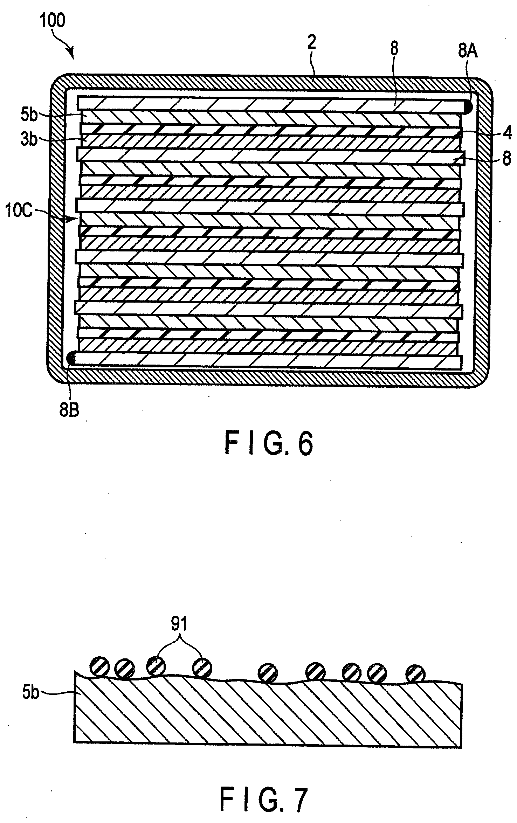

FIG. 6 shows a schematic cross-sectional view of a secondary battery as an example according to the approach.

As shown in FIG. 6, a secondary battery 100 includes an electrode composite 10C housed in a container member 2. The illustrated electrode composite 10C has a structure similar to that of the electrode composite 10B shown in FIG. 5. A positive electrode tab 8A is provided at one end of the current collector 8 located at the top layer of the electrode composite 10C. On the other hand, a negative electrode tab 8B is provided at one end of the current collector 8 located at the bottom layer of the electrode composite 10C. A negative electrode terminal and a positive electrode terminal (not shown) are connected to the positive electrode tab 8A and the negative electrode tab 8B, respectively, and the negative electrode terminal and the positive electrode terminal extend to the outside of the container member 2.

In FIG. 6, as with the electrode composite 10B of FIG. 5, a secondary battery 100 including an electrode composite 10C including five sets of electrode assemblies including the positive electrode active material-containing layer 5b, the negative electrode active material-containing layer 3b, and the Li-conductive layer 4 provided therebetween is shown as an example. However, the secondary battery according to the second approach may include electrode assemblies of a numerical value other than 5, for example, an electrode composite including one set of an electrode assembly as with the electrode composite 10A shown in FIG. 4, or may include an electrode composite including two or more sets of electrode assemblies.

Next, an example of a method of producing an electrode composite including a set of an electrode assembly including a positive electrode active material-containing layer, a negative electrode active material-containing layer, and a Li-conductive layer sandwiched therebetween will be described with reference to the drawings.

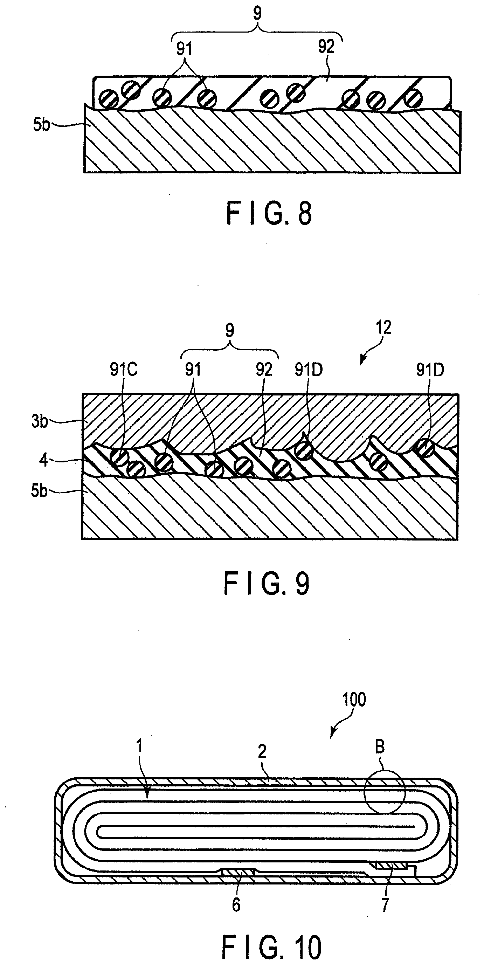

FIG. 7 is a schematic view showing one step of a method of producing a third example of an electrode composite which can be included in a secondary battery according to the second approach. FIG. 8 is a schematic view showing a next step of the step of the producing method shown in FIG. 7. FIG. 9 is a schematic cross-sectional view of an electrode composite produced by the producing method shown in FIGS. 7 and 8.

In a specific example described here, a method of forming the Li-conductive layer 4 on the positive electrode active material-containing layer 5b will be described, but a method of forming the Li-conductive layer 4 which can be included in a secondary battery according to the second approach is not limited to those described here.

First, an inorganic solid particle mixture 91 is dispersed in a solution containing a binder to prepare a binder-dispersion liquid including the inorganic solid particle mixture 91. Here, as the binder, any of the above-mentioned types can be used. The inorganic solid particle mixture 91 is an inorganic solid particle mixture included in the composite electrolyte according to the first approach. Next, this binder-dispersion liquid is applied onto the positive electrode active material-containing layer 5b. Then, a solvent is evaporated from the applied film. Thus, as shown in FIG. 7, the inorganic solid particle mixture 91 is provided on the positive electrode active material-containing layer 5b.

Next, a coating material containing a nonaqueous electrolyte 92 or a precursor of the nonaqueous electrolyte 92 is supplied onto the positive electrode active material-containing layer 5b. For example, the coating material contains components for making the coating material of the nonaqueous electrolyte gelate, such as a liquid nonaqueous electrolyte, a binder, and a polymerization initiator, and is supplied onto the positive electrode active material-containing layer 5b to form an coated film. By heating this coated film, a composite electrolyte 9 including a nonaqueous electrolyte 92 containing a gel or solid polymer nonaqueous electrolyte and an inorganic solid particle mixture 91 is obtained as shown in FIG. 8.

Subsequently, the positive electrode active material-containing layer 5b and the negative electrode active material-containing layer 3b are disposed to face each other and pressed. Thus, as shown in FIG. 9, an electrode assembly 12 including the positive electrode active material-containing layer 5b, the negative electrode active material-containing layer 3b, and the Li-conductive layer 4 located therebetween and including the composite electrolyte 9 is obtained.

As described above, the method including forming the Li-conductive layer 4 on the positive electrode active material-containing layer 5b has been described above, but the Li-conductive layer 4 may be formed on the negative electrode active material-containing layer 3b. Alternatively, the Li-conductive layer 4 may be formed on each of both a surface of the positive electrode active material-containing layer 5b and a surface of the negative electrode active material-containing layer 3b.

Here, when the negative electrode active material-containing layer 3b is pressed against the Li-conductive layer 4 provided on the positive electrode active material-containing layer 5b in the case where the nonaqueous electrolyte 92 includes a gel polymer electrolyte, the composite electrolyte 9 (for example, a part 91D of the inorganic solid particle mixture 91 and a part of the nonaqueous electrolyte 92 as shown in FIG. 9) enters or penetrates into fine recessed parts of the irregularity on the surfaces of the positive electrode active material-containing layer 5b and the negative electrode active material-containing layer 3b, particularly the irregularity of the active material which may be present on the surfaces of these electrode active material-containing layers. For example, as shown in FIG. 9, a part 91C of the inorganic solid particle mixture 91 may be located on a projection part of the irregularity on the surface of the positive electrode active material-containing layer 5b or the negative electrode active material-containing layer 3b Thus, the positive electrode active material-containing layer 5b, the negative electrode active material-containing layer 3b, and the Li-conductive layer 4 can be closely adhered to each other along the respective irregularities. Therefore, in the electrode assembly 12 thus obtained, the Li-conductive layer 4 can increase the contact areas with the positive electrode active material-containing layer 5b and the negative electrode active material-containing layer 3b at the interface with the positive electrode active material-containing layer 5b and the interface with the negative electrode active material-containing layer 3b. Therefore, the Li-conductive layer 4 can smoothly exchange Li ions with each of the positive electrode active material-containing layer 5b and the negative electrode active material-containing layer 3b. Furthermore, since the Li-conductive layer 4 is in closely contact with each of the positive electrode active material-containing layer 5b and the negative electrode active material-containing layer 3b, the thickness of the Li-conductive layer 4 can also be reduced.

Furthermore, when the nonaqueous electrolyte 92 includes a solid polymer electrolyte, it is preferable to obtain an electrode composite in, for example, the following procedure. First, the binder-dispersion liquid including the inorganic solid particle mixture 91 described above is applied onto an active material-containing layer. Then, a solvent is evaporated from the coated film. Thus, the inorganic solid particle mixture 91 is provided on one active material-containing layer. Next, a coating material containing a nonaqueous electrolyte precursor is applied onto the active material-containing layer on which the inorganic solid particle mixture 91 is provided. Here, it is preferable to use a coating material having high flowability. Thus, the coating material can be made to enter into the fine recessed parts of the irregularity on the surface of the active material-containing layer, and as a result, an coated film having a more uniform thickness is obtained. When the fluidity of the coating material is too high, a method such as spraying may be used. Next, the coated film is heated. The degree of heating at this time is set to such a degree that the precursor of the nonaqueous electrolyte is not completely solidified. Subsequently, the positive electrode active material-containing layer 5b and the negative electrode active material-containing layer 3b are disposed to face each other and pressed. Thus, it is possible to obtain a state where the precursor of the nonaqueous electrolyte enters into the recessed parts of the irregularities on the surfaces of both the active material-containing layers. Then, the coated film containing the nonaqueous electrolyte precursor is further heated. Thus, the electrode assembly 12 including the positive electrode active material-containing layer 5b, the negative electrode active material-containing layer 3b, and the Li-conductive layer 4 located therebetween and including the composite electrolyte 9 is obtained. The composite electrolyte 9 here can include the inorganic solid particle mixture 91 and the nonaqueous electrolyte 92 including the solid polymer electrolyte. The inorganic solid particle mixture 91 may be provided on both the positive electrode active material-containing layer 5b and the negative electrode active material-containing layer 3b, and the coating material containing the precursor of the nonaqueous electrolyte may be subsequently applied.

According to the method described above, for example, the thickness of the Li-conductive layer 4 can be adjusted by adjusting the amount of the solid content in the dispersion liquid containing the inorganic solid particle mixture 91 and the applying amount of the nonaqueous electrolyte 92 or coating material containing the precursor of the nonaqueous electrolyte 92, and the like.

Alternatively, the Li-conductive layer 4 can also be formed by a method including injecting a nonaqueous electrolyte between the positive electrode active material-containing layer 5b and the negative electrode active material-containing layer 3b. Specifically, for example, the method is as follows. First, according to the same procedure as that described above, the inorganic solid particles 91 are provided on any one of the surface of the positive electrode active material-containing layer 5b and the surface of the negative electrode active material-containing layer 3b. Next, the positive electrode active material-containing layer 5b and the negative electrode active material-containing layer 3b are disposed in a constant distance (a value set as the thickness of the Li-conductive layer 4). Next, the coating material containing the nonaqueous electrolyte 92 or the precursor of the nonaqueous electrolyte 92 is injected between the positive electrode active material-containing layer 5b and the negative electrode active material-containing layer 3b. Thus, the coating material enters into also the fine recessed parts of the irregularity on the surface of each of the positive electrode active material-containing layer 5b and the negative electrode active material-containing layer 3b. Then, by following the above-described procedure, the electrode assembly 12 including the positive electrode active material-containing layer 5b, the negative electrode active material-containing layer 3b, and the Li-conductive layer 4 provided therebetween and including the composite electrolyte 9 is obtained.

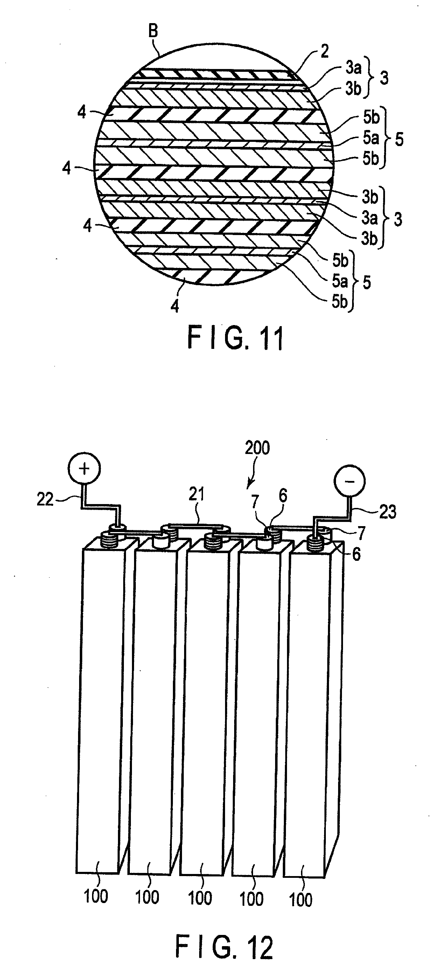

In the above description, the secondary battery including the electrode having the bipolar structure has been described as an example, but the secondary battery according to the second approach is not limited to the battery including the electrode having the bipolar structure. The secondary battery according to the second approach may have a structure shown in FIGS. 10 and 11, for example.

FIG. 10 is a cross-sectional view schematically showing a second example of a secondary battery according to the second approach. FIG. 11 is an enlarged schematic cross-sectional view of a portion B of the secondary battery shown in FIG. 10.

A secondary battery 100 shown in FIGS. 10 and 11 includes a bag-like container member 2 shown in FIG. 10 and an electrode group 1 shown in FIGS. 10 and 11. The electrode group 1 is housed in a container member 2.

The bag-like container member 2 is made of a laminate film including two resin layers and a metal layer sandwiched therebetween.

As shown in FIG. 10, the electrode group 1 is a flat wound electrode group. As shown in FIG. 11, the flat wound electrode group 1 includes a negative electrode 3, a Li-conductive layer 4, and a positive electrode 5. The Li-conductive layer 4 is sandwiched between the negative electrode 3 and the positive electrode 5.

The negative electrode 3 includes a negative electrode current collector 3a and a negative electrode active material-containing layer 3b. As shown in FIG. 11, in a portion of the negative electrode 3 located in the outermost layer of the wound electrode group 1, the negative electrode active material-containing layer 3b is formed only on the inner surface side of the negative electrode current collector 3a. The other portion in the negative electrode 3 includes the negative electrode active material-containing layer 3b formed on each of both surfaces of the negative electrode current collector 3a.

The positive electrode 5 includes a positive electrode current collector 5a and a positive electrode active material-containing layer 5b formed on each of both surfaces thereof.

The Li-conductive layer 4 includes the composite electrolyte according to the first approach as with the Li-conductive layer 4 described above.

As shown in FIG. 10, a negative electrode terminal 6 and a positive electrode terminal 7 are located in the vicinity of the outer peripheral end of the wound electrode group 1. The negative electrode terminal 6 is connected to a part of the negative electrode current collector 3a of the negative electrode 3 located in the outermost layer. The positive electrode terminal 7 is connected to the positive electrode current collector 5a of the positive electrode 5 located in the outermost layer. The negative electrode terminal 6 and the positive electrode terminal 7 extend to the outside from an opening part of the bag-like container member 2. The bag-like container member 2 is heat-sealed with a thermoplastic resin layer provided on the inner surface thereof.

The secondary battery according to the second approach may include plural positive electrodes and plural negative electrodes. These can be alternately stacked in a state where the Li-conductive layer is provided between the positive electrode active material-containing layer and the negative electrode active material-containing layer. That is, the secondary battery according to the second approach may include a stack-type electrode group.

Since the secondary battery according to the second approach includes the composite electrolyte according to the first approach, the secondary battery according to the second approach can exhibit excellent life performance and an excellent output performance in a low temperature environment.

(Third Approach)

According to a third approach, a battery module is provided. The battery module according to the third approach includes secondary batteries each according to the second approach.

In the battery module according to the third approach, each of the single-batteries may be electrically connected and arranged in series, in parallel, or in a combination of series connection and parallel connection.

Next, an example of a battery module according to the third approach will be described with reference to the drawings.

FIG. 12 is a perspective view schematically showing one example of a battery module according to the third approach. A battery module 200 shown in FIG. 12 includes five single-batteries 100, four bus bars 21, a positive electrode-side lead 22, and a negative electrode-side lead 23. Each of the five single-batteries 100 is a secondary battery according to the second approach.

Each bus bar 21 connects a negative electrode terminal 6 of one single-battery 100 and a positive electrode terminal 7 of a neighboring single-battery 100. The five single-batteries 100 are thus connected in series via the four bus bars 21. That is, the battery module 200 shown in FIG. 12 is a battery module of five series-connection.

As shown in FIG. 12, the positive electrode terminal 7 of the single-battery 100 located at the left end of the five single-batteries 100 is connected to the positive electrode-side lead 22 for external connection. In addition, the negative electrode terminal 6 of the single-battery 100 located at the right end of the five single-batteries 100 is connected to the negative electrode-side lead 23 for external connection.

The battery module according to the third approach includes the secondary battery according to the second approach. Hence, the battery module according to the third approach can exhibit an excellent life performance and an excellent output performance in low-temperature environment.

(Fourth Approach)

According to a fourth approach, a battery pack is provided. The battery pack includes the battery module according to the third approach. The battery pack may include a single secondary battery according to the second approach instead of the battery module according to the third approach.

The battery pack according to the fourth approach may further include a protective circuit. The protective circuit has a function to control charging and discharging of the secondary battery. Alternatively, a circuit included in an equipment (for example, electronic devices, vehicles, and the like) where the battery pack serves as a power source may be used as the protective circuit for the battery pack.

Moreover, the battery pack may further include an external power distribution terminal. The external power distribution terminal is configured to externally output the current from the secondary battery, and/or to input external current to the secondary battery. In other words, when the battery pack is used as a power source, the current is externally provided via the external power distribution terminal. Also, when the battery pack is charged, the charging current (including a regenerative energy from motive force of vehicles such as automobiles) is provided to the battery pack via the external power distribution terminal.

Next, a battery pack as an example according to the approach will be described with reference to the drawings.

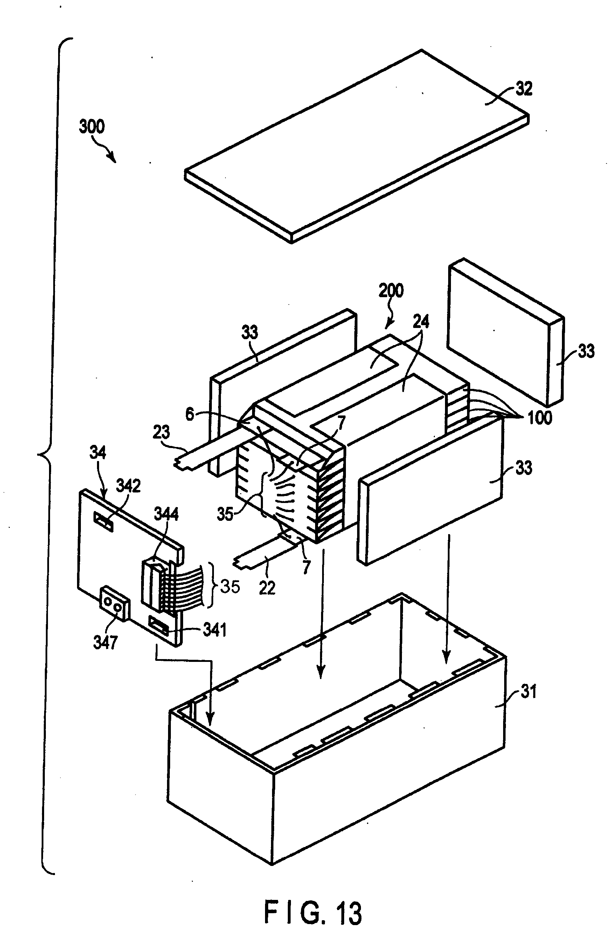

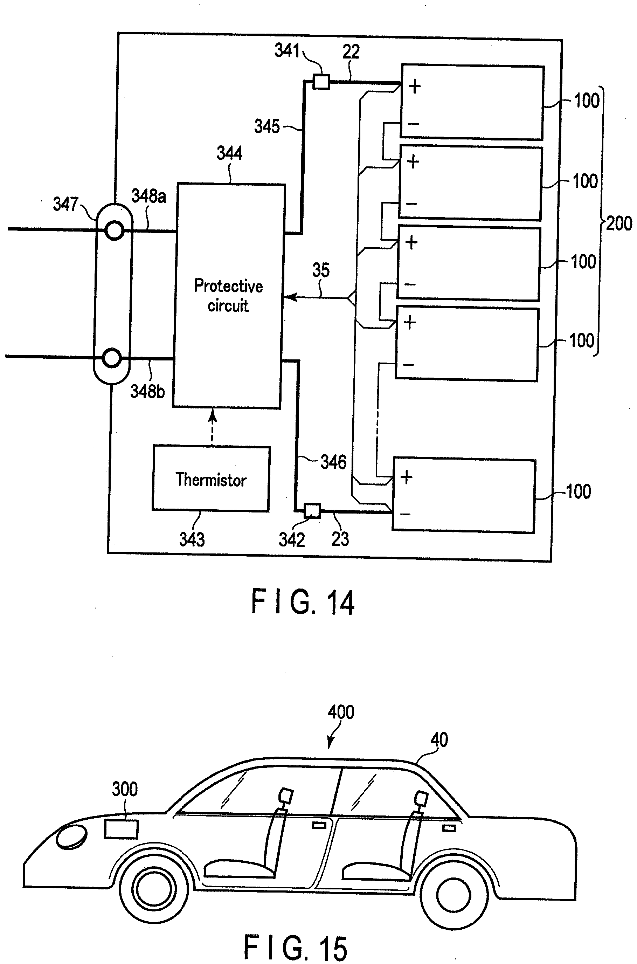

FIG. 13 is an exploded perspective view showing one example of a battery pack according to an approach. FIG. 14 is a block diagram showing an electric circuit of the battery pack in FIG. 13.

A battery pack 300 shown in FIGS. 13 and 14 includes a housing container 31, a lid 32, protective sheets 33, a battery module 200, a printed wiring board 34, a wiring 35, an insulating plate (not shown).

The housing container 31 is configured to be able to house the protective sheets 33, the battery module 200, the printed wiring board 34, and the wiring 35. The lid 32 is placed on the hosing container 31 to house the battery module 200 and the like. Each of the housing container 31 and the lid 32 is provided with an opening, a connection terminal or the like (not shown) which is to be connected to an external device or the like.

Protective sheets 33 are arranged on both internal surfaces in a long side direction of the housing container 31 and on one internal surface which faces the printed wiring board 34 via battery module 200 in a short side direction of the housing container 31. The protective sheets 33 are made of, for example, rubber or resin.

The battery module 200 includes single-batteries 100, a positive electrode-side lead 22, a negative electrode-side lead 23, and an adhesive tape 24. The battery module 200 may be one single-battery 100.

Each of the single-batteries 100 has the structure shown in FIGS. 10 and 11. At least one of the single-batteries 100 is a secondary battery according to the second approach. The single-batteries 21 are stacked so that the negative electrode terminals 6 and the positive electrode terminals 7 extended outside are arranged in the same direction. The single-batteries 100 are electrically connected in series as shown in FIG. 14. The single-batteries 100 may be connected in parallel, or in a combination of series connection and parallel connection. If the plural single-batteries 100 are connected in parallel, the battery capacity increases as compared to a case in which they are connected in series.

The adhesive tape 24 fastens the single-batteries 100. In place of the adhesive tape 24, a heat-shrinkable tape may be used to fix the single-batteries 100. In this case, protective sheets are provided on the both sides of the battery module 200, a heat-shrinkable tape is revolved around the battery module, and the heat-shrinkable tape is thermally shrunk to bundle the single-batteries.

An end of the positive electrode-side lead 22 is connected to the positive electrode terminal 7 of the single-battery 100 located at the bottom layer of the stack of the single-batteries 100. An end of the negative electrode-side lead 23 is connected to the negative electrode terminal 6 of the single-battery 100 located at the top layer of the stack of the single-batteries 100.

A printed wiring board 34 is provided with a positive electrode-side connector 341, a negative electrode-side connector 342, a thermistor 343, a protective circuit 344, wires 345 and 346, an external power distribution terminal 347, a plus-side wire 348a and a minus-side wire 348b. One main surface of the printed wiring board 34 faces the side plane of the battery module 200 where the negative electrode terminals 6 and the positive electrode terminals 7 of the are extended. The insulating plate (not shown) is provided between the printed wiring board 34 and the battery module 200.

The positive electrode-side connector 341 is provided a through hole. The other end of the positive electrode-side lead 22 is inserted into the through hole so as to electrically connect the positive electrode-side connector 341 to the positive electrode-side lead 22. The negative electrode-side connector 342 is provided a through hole. The other end of the negative electrode-side lead 23 is inserted into the through hole so as to electrically connect the negative electrode-side connector 342 to the negative electrode-side lead 23.

The thermistor 343 is fixed on one main surface of the printing wiring board 34. The thermistor 343 detects the temperature of each single-battery 100 and transmits the detection signal to the protective circuit 344.

The external power distribution terminal 347 is fixed on the other main surface of the printed wiring board 34. The external power distribution terminal 347 is electrically connected to a device that exists outside the battery pack 300.

The protective circuit 344 is fixed on the other main surface of the printed wiring board 34. The protective circuit 344 is connected to the external power distribution terminal 347 via the positive-side wire 348a. The protective circuit 344 is connected to the external power distribution terminal 347 via the negative-side wire 348b. In addition, the protective circuit 344 is electrically connected to the positive electrode-side connector 341 via the wire 345. The protective circuit 344 is electrically connected to the negative electrode-side connector 342 via the wire 346. Furthermore, the protective circuit 344 is electrically connected to each of the single-batteries 100 via the wire 35.

The protective circuit 344 controls charge and discharge of the plural single-batteries 100. The protective circuit 344 is also configured to cut-off electric connection between the protective circuit 344 and the external power distribution terminal 347 to an external device, based on detection signals transmitted from the thermistor 343 or detection signals transmitted from each single-battery 100 or the battery module 200.

An example of the detection signal transmitted from the thermistor 343 is a signal representing that the temperature of the single-battery 100 is detected to be a predetermined temperature or more. An example of the detection signal transmitted from each single-battery 100 or the battery module 200 is a signal representing detection of over-charge, over-discharge, and overcurrent of the single-battery 100. If over-charge or the like is detected for each of the single-batteries 100, the battery voltage may be detected, or a positive electrode potential or negative electrode potential may be detected. In the latter case, a lithium electrode to be used as a reference pole is inserted into each single-battery 100.

Note that as the protective circuit 344, a circuit included in a device (for example, an electronic device or an automobile) that uses the battery pack 300 as a power supply may be used.

Such a battery pack 300 is used in, for example, an application where the battery pack 300 is required to have an excellent cycle performance when a large current is output. More specifically, the battery pack 300 is used as, for example, a power supply for an electronic device, a stationary battery, or an onboard battery for a vehicle or a railway vehicle. As the electronic device, for example, a digital camera can be used. The battery pack 300 is particularly preferably used as an onboard battery.

As described above, the battery pack 300 includes the external power distribution terminal 347. Hence, the battery pack 300 can output a current from the battery module 200 to an external device and input a current from the external device to the battery module 200 via the external power distribution terminal 347. In other words, when using the battery pack 300 as a power supply, the current from the battery module 200 is supplied to the external device via the external power distribution terminal 347. When charging the battery pack 300, a charge current from the external device is supplied to the battery pack 300 via the external power distribution terminal 347. If the battery pack 300 is used as an onboard battery, the regenerative energy of the motive force of a vehicle can be used as the charge current from the external device.

Note that the battery pack 300 may include battery modules 200. In this case, the battery modules 200 may be connected in series, in parallel, or in a combination of series connection and parallel connection. The printed wiring board 34 and the wire 35 may be omitted. In this case, the positive electrode-side lead 22 and the negative electrode-side lead 23 may be used as the external power distribution terminal.

The battery pack according to the fourth approach includes the secondary battery according to the second approach or the battery module according to the third approach. Hence, the battery pack according to the fourth approach can exhibit an excellent life performance and an excellent output performance in low-temperature environment.

(Fifth Approach)

According to a fifth approach, a vehicle is provided. The battery pack according to the fourth approach is installed on this vehicle.

In the vehicle according to the fifth approach, the battery pack is configured, for example, to recover a regenerative energy from a motive force of the vehicle.

Examples of the vehicle according to the fifth approach include two to four-wheeled hybrid electric automobiles, two to four-wheeled electric automobiles, electric assist bicycles, and rail way cars.

In the vehicle according to the fifth approach, the installing position of the battery pack is not particularly limited. For example, in the case where the battery pack is installed in a automobile, the battery pack may be installed in the engine compartment of the vehicle, in rear parts of the vehicle, or under seats.

An example of the vehicle according to the fifth approach is explained below, with reference to the drawings.

FIG. 15 is a schematic sectional view showing one example of a vehicle according to the fifth approach.

A vehicle 400 shown in FIG. 15 includes a vehicle body 40 and a battery pack 300 according to the fourth approach.

The vehicle 400 shown in FIG. 15 is a four-wheeled automobile. As the vehicle 400, for example, two- to four-wheeled hybrid electric automobiles, two- to four-wheeled electric automobiles, electric assist bicycles, and railway cars may be used.

This vehicle 400 may have plural battery packs 300 installed. In such a case, the battery packs 300 may be connected in series, connected in parallel, or connected in a combination of in-series connection and in-parallel connection.

The battery pack 300 is installed in an engine compartment located at the front of the vehicle body 40. The location of installing the battery pack 300 is not particularly limited. The battery pack 300 may be installed in rear sections of the vehicle body 40, or under a seat. The battery pack 300 may be used as a power source of the vehicle 400. The battery pack 300 can also recover regenerative energy from motive force of the vehicle 400.

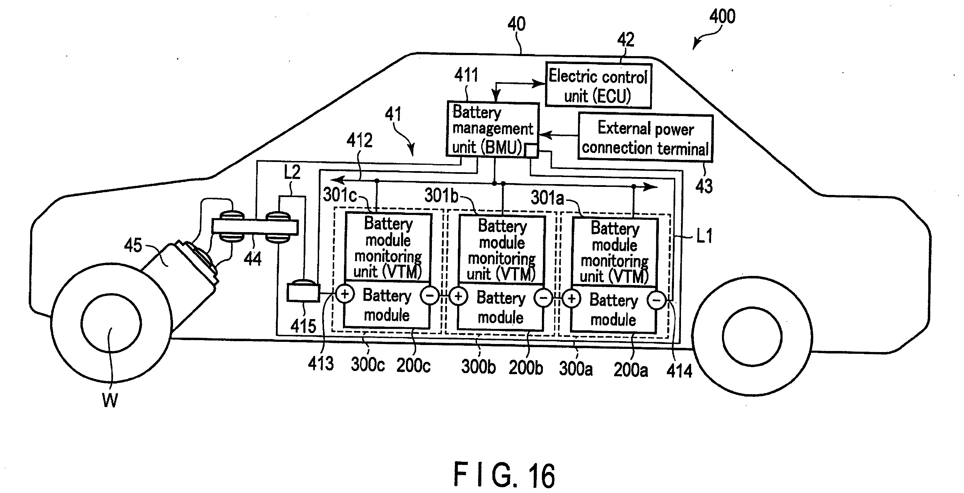

Next, with reference to FIG. 16, an aspect of the vehicle according to the fifth approach is explained.

FIG. 16 shows another example of a vehicle according to the fifth approach. A vehicle 400, shown in FIG. 16, is an electric automobile.

The vehicle 400, shown in FIG. 16, includes a vehicle body 40, a vehicle power source 41, a vehicle ECU (electric control unit) 42, which is a master controller of the vehicle power source 41, an external terminal (an external power connection terminal) 43, an inverter 44, and a drive motor 45.

The vehicle 400 includes the vehicle power source 41, for example, in the engine compartment, in the rear sections of the automobile body, or under a seat. In FIG. 16, the position of the vehicle power source 41 installed in the vehicle 400 is schematically shown.

The vehicle power source 41 includes plural (for example, three) battery packs 300a, 300b and 300c, a battery management unit (BMU) 411, and a communication bus 412.

The three battery packs 300a, 300b and 300c are electrically connected in series. The battery pack 300a includes a battery module 200a and a battery module monitoring unit (VTM: voltage temperature monitoring) 301a. The battery pack 300b includes a battery module 200b, and a battery module monitoring unit 301b. The battery pack 300c includes a battery module 200c, and a battery module monitoring unit 301c. The battery packs 300a, 300b and 300c can each be independently removed, and may be exchanged by a different battery pack 300.

Each of the battery modules 200a to 200c includes plural single-batteries connected in series. At least one of the plural single-batteries is the secondary battery according to the second approach. The battery modules 200a to 200c each perform charging and discharging via a positive electrode terminal 413 and a negative electrode terminal 414.

In order to collect information concerning security of the vehicle power source 41, the battery management unit 411 performs communication with the battery module monitoring units 301a to 301c. and collects information such as voltages or temperatures of the single-batteries 100 included in the battery modules 200a to 200c included in the vehicle power source 41.

The communication bus 412 is connected between the battery management unit 411 and the battery module monitoring units 301a to 301c. The communication bus 412 is configured so that multiple nodes (i.e., the battery management unit and one or more battery module monitoring units) share a set of communication lines. The communication bus 412 is, for example, a communication bus configured based on CAN (Control Area Network) standard.

The battery module monitoring units 301a to 301c measure a voltage and a temperature of each single-battery in the battery modules 200a to 200c based on commands from the battery management unit 411. It is possible, however, to measure the temperatures only at several points per battery module, and the temperatures of all of the single-batteries need not be measured.

The vehicle power source 41 may also have an electromagnetic contactor (for example, a switch unit 415 shown in FIG. 16) for switching connection between the positive electrode terminal 413 and the negative electrode terminal 414. The switch unit 415 includes a precharge switch (not shown), which is turned on when the battery modules 200a to 200c are charged, and a main switch (not shown), which is turned on when battery output is supplied to a load. The precharge switch and the main switch include a relay circuit (not shown), which is turned on or off based on a signal provided to a coil disposed near the switch elements.

The inverter 44 converts an inputted direct current voltage to a three-phase alternate current (AC) high voltage for driving a motor. Three-phase output terminal(s) of the inverter 44 is (are) connected to each three-phase input terminal of the drive motor 45. The inverter 44 controls an output voltage based on control signals from the battery management unit 411 or the vehicle ECU 42, which controls the entire operation of the vehicle.

The drive motor 45 is rotated by electric power supplied from the inverter 44. The rotation is transferred to an axle and driving wheels W via a differential gear unit, for example.

The vehicle 400 also includes a regenerative brake mechanism, though not shown. The regenerative brake mechanism rotates the drive motor 45 when the vehicle 400 is braked, and converts kinetic energy into regenerative energy, as electric energy. The regenerative energy, recovered in the regenerative brake mechanism, is inputted into the inverter 44 and converted to direct current. The direct current is inputted into the vehicle power source 41.

One terminal of a connecting line L1 is connected via a current detector (not shown) in the battery management unit 411 to the negative electrode terminal 414 of the vehicle power source 41. The other terminal of the connecting line L1 is connected to a negative electrode input terminal of the inverter 44.

One terminal of a connecting line L2 is connected via the switch unit 415 to the positive electrode terminal 413 of the vehicle power source 41. The other terminal of the connecting line L2 is connected to a positive electrode input terminal of the inverter 44.

The external terminal 43 is connected to the battery management unit 411. The external terminal 43 is able to connect, for example, to an external power source.

The vehicle ECU 42 cooperatively controls the battery management unit 411 together with other units in response to inputs operated by a driver or the like, thereby performing the management of the whole vehicle. Data concerning the security of the vehicle power source 41, such as a remaining capacity of the vehicle power source 41, are transferred between the battery management unit 411 and the vehicle ECU 42 via communication lines.

The vehicle according to the fifth approach includes the battery pack according to fourth approach. Hence, the vehicle according to the fifth approach can exhibit an excellent life performance and an excellent output performance in low-temperature environment.

[Examples]

Hereinafter, the above approaches will be described in more detail by way of Examples. In the following Examples, when the thickness of a Li-conductive layer was measured, the Li-conductive layer was cut with an FIB and the cross section of a composite electrolyte was observed with SEM. The magnification of observation was set to 20,000 times.

(Example 1)

In Example 1, an electrode assembly of Example 1 was produced in the following procedure.

(Production of Positive Electrode)

As a positive electrode active material, particles of a lithium-containing composite oxide having a composition formula of $LiMn_{0.85}Fe_{0.1}Mg_{0.05}PO_4$ and having an olivine-type crystal structure were provided. Carbon fine particles having an average particle size of 5 nm were attached to the surface of the provided particles. The attached amount was 0.1% by weight. The provided particles were primary particles, and had an average primary particle size of 50 nm.

A vapor-grown carbon fiber having a fiber diameter of 0.1 $\mu$m and a graphite powder were provided as a conductive agent. Polyvinylidene fluoride (PVdF) was provided as a binder.

The positive electrode active material particles, the carbon fiber, the graphite powder and the PVdF were mixed in amounts of 87% by weight : 3 % by weight : 5 % by weight : 5 % by weight, respectively, to obtain a mixture. This mixture was dispersed in a N-methylpyrrolidone (NMP) solvent to prepare a positive electrode slurry. Next, the positive electrode slurry was applied to each of both surfaces of an aluminum alloy foil (purity 99%) having a thickness of 15 $\mu$m to form a coated film, and the coated film was dried. Then, the dried coated film was pressed. Thus, a positive electrode including a current collector and a positive electrode active material-containing layer formed on each of both surfaces of the current collector was obtained. The applying amount of the slurry and a press pressure were adjusted so that the thickness of the positive electrode active material-containing layer formed on one surface of the current collector was 67 $\mu$m and the density of the positive electrode active material-containing layer formed on one surface of the current collector was 2.2 g/cm$^3$.

(Production of Negative Electrode)

As a negative electrode active material, particles of lithium titanate having a composition formula of $Li_4Ti_5O_{12}$ were provided. The primary average particle size of the lithium titanate particles was 0.6 $\mu$m. The BET specific surface area of the lithium titanate particles was 10 m$^2$/g. A graphite powder having an average particle size of 6 $\mu$m was provided as a conductive agent. PVdF was provided as a binder.

Next, the negative electrode active material particles, the graphite powder and the PVdF were mixed so that the weight ratio was set to 95 : 3 : 2 to obtain a mixture. This mixture was dispersed in a N-methylpyrrolidone (NMP) solvent. The dispersion thus obtained was subjected to stirring using a ball mill at a rotational speed of 1000 rpm for a stirring time of 2 hours. Thus, a negative electrode slurry was obtained.

The obtained negative electrode slurry was applied to an aluminum alloy foil (purity 99.3%) having a thickness of 15 $\mu$m to form a coated film, and the coated film was dried. Subsequently, the dried coated film was subjected to hot pressing. Thus, a negative electrode including a current collector and a negative electrode active material-containing layer formed on each of both surfaces of the current collector was obtained. A negative electrode was produced through the process. The applying amount of the slurry and a press pressure were adjusted so that the thickness of the negative electrode active material-containing layer formed on one surface of the current collector was 59 $\mu$m and the density of the negative electrode active material-containing layer formed on one surface of the current collector was 2.2 g/cm$^3$. The porosity of the negative electrode active material-containing layer was 35%.

(Preparation of Inorganic Solid Particle Mixture)

As first inorganic solid particles, particles having a garnet-type crystal structure and having a composition formula of $Li_7La_3Zr_2O_{12}$ (LLZ) were provided. The particles had a d50 (average primary particle size) of 0.35 $\mu$m, a d10 of 0.12 pm, and a d90 of 1.61 $\mu$m in a cumulative frequency distribution. The particles were prepared by the following method. First, LLZ particles were provided. These were then evenly divided into three groups. Particles of a first group were subjected to grinding for 1 hour at 140 rpm using zirconia balls having a diameter of 10 mm$\varphi$. Particles of a second group were subjected to grinding under the condition of 180 rpm for 3 hours using zirconia balls having a diameter of 1 mm$\varphi$. Particles of a third group were dispersed in isopropyl alcohol and subjected to wet bead mill grinding using zirconia beads having a diameter of 0.3 mm$\varphi$ under the condition of a peripheral speed of 10 m/s. The ground particles of these groups were mixed to give first inorganic solid particles. The average particle size, BET specific surface area and first Li-ion conductivity at 25°C of the first inorganic solid particles are shown in the following Table 1.

On the other hand, alumina particles having a composition formula of $Al_2O_3$ were provided as second inorganic solid particles. The particles had a d50 (average primary particle size) of 0.35 $\mu$m, a d10 of 0.10 $\mu$m, and a d90 of 1.68 $\mu$m in a cumulative frequency distribution. The particles were prepared by the following method. First, particles of alumina were provided. These were then evenly divided into three groups. Particles of a first group were subjected to grinding for 1 hour at 140 rpm using zirconia balls having a diameter of 10 mm$\varphi$. Particles of a second group were subjected to pulverization under the condition of 180 rpm for 3 hours using zirconia balls having a diameter of 1 mm$\varphi$. Particles of a third group were dispersed in isopropyl alcohol and subjected to wet bead mill girinding using zirconia beads having a diameter of 0.3 mm$\varphi$ under the condition of a peripheral speed of 10 m/s. The ground particles of these groups were mixed to give second inorganic solid particles. The average particle size, BET specific surface area and second Li-ion conductivity at 25°C of the second inorganic solid particles are shown in the following Table 1.

Next, the provided first inorganic solid particles and second inorganic solid particles were mixed at a weight ratio of 50 : 50 to obtain an inorganic solid particle mixture. The ratio d90/d10 of the inorganic solid particle mixture thus obtained, the mixing ratio of the inorganic particles, the Li-conductivity ratio $\sigma_H/\sigma_L$, the average particle size ratio $R_H/R_L$, and the BET specific surface area ratio $S_H/S_L$ are shown in the following Table 3.

(Preparation of Coating Material of Nonaqueous Electrolyte Precursor)

Propylene carbonate (PC) and diethyl carbonate (DEC) were mixed at a volume rate of 1 : 2 to prepare a mixed solvent. In the mixed solvent, lithium hexafluorophosphate $LiPF_6$ was dissolved at a concentration of 1.2 M. Thus, a liquid nonaqueous electrolyte was obtained.

Next, an acrylonitrile monomer was provided as a gelling agent. This monomer was added to the liquid nonaqueous electrolyte so as to have a concentration of 2% by weight. Thus, a coating material of a nonaqueous electrolyte precursor was prepared.

(Production of Electrode Assembly)

PVdF and the previously-prepared inorganic solid particle mixture were put into N-methylpyrrolidone (NMP) to prepare a slurry. The PVdF was put in an amount of 5% by weight with respect to the inorganic solid particle mixture.

The slurry thus obtained was applied to one surface of the positive electrode active material layer. Then, the NMP was then evaporated from the coated film. Thus, the inorganic solid particle mixture was provided on the surface of the positive electrode active material-containing layer.

Next, the previously-prepared coating material of the nonaqueous electrolyte precursor was applied to the surface on which the inorganic solid particles of the positive electrode active material-containing layer were provided to form an coated film. The applied film was then heated at 60°C for 6 hours. Thus, the monomers were polymerized to polyacrylonitrile (PAN). Thus, a Li-conductive layer including the inorganic solid particle mixture and the nonaqueous electrolyte including the gel polymer (PAN) was formed on the surface of the positive electrode active material. The nonaqueous electrolyte included a nonaqueous electrolyte solution component containing Li and a monomer component constituting the gel polymer together with this component.

In the same procedure, the similar Li-conductive layer was formed on one surface of the negative electrode active material-containing layer.

Next, the Li-conductive layer formed on the positive electrode active material-containing layer was pressed against the Li-conductive layer formed on the negative electrode active material-containing layer.

In Example 1, the applying amounts of the slurry containing the inorganic solid particle mixture and coating material of the nonaqueous electrolyte precursor, and a press pressure were adjusted so that the average thickness of the Li-conductive layer was 5 $\mu$m and the minimum thickness thereof was 0.5 $\mu$m.

Thus, an electrode assembly including the positive electrode active material-containing layer, the negative electrode active material-containing layer, and the Li-conductive layer located therebetween was obtained.

The composite electrolyte contained in the electrode assembly of Example 1 includes the inorganic solid particle mixture, the nonaqueous electrolyte solution component and the polyacrylonitrile monomer component in a weight ratio of 99.9 : 0.08 : 0.02. That is, the content of the nonaqueous electrolyte (organic polymer-containing electrolyte) in the composite electrolyte was 0.10% by weight.

(Examples 2 to 7)

In Examples 2 to 7, electrode assemblies of Examples 2 to 7 were produced in the same procedure as that of Example 1 except that the amount of a nonaqueous electrolyte in a composite electrolyte was changed. Specifically, the amount of the nonaqueous electrolyte was changed to 2.0% by weight (Example 2), 4.0% by weight (Example 3), 10.0% by weight (Example 4), 16.0% by weight (Example 5), 20.0% by weight (Example 6), and 25.0% by weight (Example 7).

(Examples 8 to 13)

In Examples 8 to 13, electrode assemblies of Examples 8 to 13 were produced in the same procedure as that of Example 3 except for the following points.

In Examples 8 to 13, particles of a compound having a garnet-type crystal structure and having a composition formula of $Li_7La_3Zr_2O_{12}$ (LLZ) were provided as first inorganic solid particles. The average particle size, BET specific surface area and first ion conductivity at 25°C of the first inorganic solid particles are shown in the following Table 1.

On the other hand, alumina particles having a composition formula of $Al_2O_3$ were provided as second inorganic solid particles. The average particle size, BET specific surface area and second Li-ion conductivity at 25°C of the second inorganic solid particles are shown in the following Table 1.

In Examples 8 to 13, the first inorganic solid particles (LLZ) and the second inorganic solid particles were mixed at a ratio of 1 : 99 (Example 8), 10 : 90 (Example 9), 25 : 75 (Example 10), 75 : 25 (Example 11), 90 : 10 (Example 12), and 99 : 1 (Example 13).

(Examples 14 to 20)

In Examples 14 to 20, electrode assemblies of Examples 14 to 20 were produced in the same procedure as that of Example 3 except that first inorganic solid particles and second inorganic solid particles were changed.

Specifically, in Example 14, the same first inorganic solid particles as those used in Example 8 were used. In Example 14, particles of a compound having a composition of $Li_{1.5}Ti_{1.7}Al_{0.3}P_{2.8}Si_{0.2}O_{12}$ (LATP) were used as second inorganic solid particles.

In Example 15, the same first inorganic solid particles as those used in Example 8 were used. In Example 15, particles of a lithium phosphate oxynitride glass electrolyte (LIPON) were used.

In Example 16, as first inorganic solid particles, particles of a compound having a perovskite-type crystal structure and having a composition of $Li_{0.56}Li_{0.33}TiO_3$ (LLT) were used. In Example 16, the same second inorganic solid particles as those used in Example 15 were used.

In Example 17, the same first inorganic solid particles as those used in Example 8 were used. In Example 17, particles of zirconium oxide (zirconia) were used as second inorganic solid particles.

In Example 18, the same first inorganic solid particles as those used in Example 8 were used. In Example 18, particles of magnesium oxide (magnesia) were used as second inorganic solid particles.

In Example 19, the same first inorganic solid particles as those used in Example 8 were used. In Example 19, particles made of titanium oxide (titania) having a rutile-type crystal structure were used as second inorganic solid particles.

In Example 20, the same first inorganic solid particles as those used in Example 8 were used. In Example 20, particles made of silicon oxide (silica) were used as second inorganic solid particles.

The average particle sizes, BET specific surface areas and ion conductivities at 25°C of the first and second inorganic solid particles used in each Example are shown in the following Table 1.

(Examples 21 to 27)

In Examples 21 to 27, electrode assemblies of Examples 21 to 27 were produced in the same procedure as that of Example 3 except for the following points.

In Examples 21 to 27, the same first inorganic solid particles and second inorganic solid particles as those used in Example 8 were used. These were mixed at a weight ratio of 50 : 50 to prepare an inorganic solid particle mixture.

In Examples 21 to 27, the thickness of the Li-conductive layer was changed from that of Example 1. Specifically, 20.0 $\mu$m (Example 21), 15.3 $\mu$m (Example 22), 10.3 $\mu$m (Example 23), 7.9 $\mu$m (Example 24), 3.1 $\mu$m (Example 25), 1.1 $\mu$m (Example 26), and 0.5 $\mu$m (Example 27) were set. (Examples 28 to 31)

In Examples 28 to 31, electrode assemblies of Examples 28 to 31 were produced in the same procedure as that of Example 3 except that the particle size distributions of first inorganic solid particles and second inorganic solid particles were made different from those in Example 1.

Specifically, the particle size distributions of the first inorganic solid particles and second inorganic solid particles were made different in the following procedure.

In Example 28, only ball mill grinding using zirconia balls having a diameter of 10 mm$\varphi$ among the grinding conditions of the first inorganic solid particles was performed, and as for the condition of wet-bead mill grinding among the grinding conditions of the second inorganic particles, a peripheral speed was set to 15 m/s and the grinding was performed for 8 hours.

In Example 29, a wet-bead milling was not performed among the grinding conditions of the first inorganic solid particles, and as for the grinding condition of the wet-bead mill grinding among the grinding conditions of the second inorganic solid particles, a peripheral speed was set to 10 m/s and the grinding was performed for 8 hours.

In Example 30, as for the grinding condition of the wet-bead milling among the grinding conditions of the first inorganic solid particles, a peripheral speed was set to 10 m/s and the grinding was performed for 8 hours, and as for the grinding condition of the second inorganic solid particles, only ball mill grinding using zirconia balls having a diameter of 10 mm$\varphi$ was performed for 2 hours.

In Example 31, as for the grinding condition of the wet-bead milling among the grinding condition of the first inorganic soid particles, a peripheral speed was set to 10 m/s and the grinding was performed for 8 hours, and a wet-bead milling was not performed among the grinding condition of the second inorganic solid particles.

The average particle sizes, BET specific surface areas and ion conductivities at 25°C of the first and second inorganic solid particles used in each Example are shown in the following Tables 1 and 2.

(Examples 32 to 34)

In Examples 32 to 34, electrode assemblies of Examples 32 to 34 were produced in the same procedure as that of Example 3 except for the following points.

In Examples 32 to 34, the same first inorganic solid particles and second inorganic solid particles as those used in Example 8 were used. These were mixed at a weight ratio of 50 : 50 to prepare an inorganic solid particle mixture.

Furthermore, in Examples 32 to 34, the composition of a mixed solvent of a liquid nonaqueous electrolyte contained in a coating material of the nonaqueous electrolyte precursor was changed from that of Example 1 as described below. Example 32: mixed solvent of propylene carbonate (PC) and dimethyl carbonate (DMC) (volume ratio 1 : 2); Example 33: mixed solvent of ethylene carbonate (EC) and diethyl carbonate (DEC) (volume ratio 1 : 2); and Example 34: mixed solvent of propylene carbonate (PC) and methylethyl carbonate (MEC) (volume ratio 1 : 2).

(Examples 35 to 41)

In Examples 35 to 41, electrode assemblies of Examples 35 to 41 were produced in the same procedure as that of Example 3 except for the following points.

In Examples 35 to 41, the same first inorganic solid particles and second inorganic solid particles as those used in Example 8 were used. These were mixed at a weight ratio of 50 : 50 to prepare an inorganic solid particle mixture.

Furthermore, in Examples 35 to 41, the weight ratios of contents of a solid inorganic particle mixture, nonaqueous electrolyte solution component and polyacrylonitrile monomer component in a composite electrolyte were set as follows. Example 35: [96 : 3.5 : 0.5]; Example 36: [96 : 3.0 : 1.0], Example 37: [96 : 2.5 : 1.5]; Example 38 [96 : 2.0: 2.0]; Example 39 [96 : 1.5 : 2.5]; Example 40: [96 : 1.0 : 3.0]; and Example 41 [96 : 0.5 : 3.5]

(Example 42)

In Example 42, an electrode assembly including an electrode having a bipolar structure was produced in the following procedure.

A slurry for a positive electrode and a slurry for a negative electrode were prepared in the same procedure as that of Example 1. Next, a positive electrode slurry was applied to one surface of an aluminum alloy foil (purity 99.3%) having a thickness of 15 $\mu$m, to form a coated film, and the coated film was dried. A negative electrode slurry was applied to the other surface of the aluminum alloy foil to form a coated film and the coated film was dried. The composite thus obtained was subjected to pressing. The applying amount of the slurry and press pressure were adjusted so that the thickness of a positive electrode active material-containing layer formed on one surface of a current collector was 67 $\mu$m; the density of the positive electrode active material-containing layer was 2.2 g/cm$^3$; the thickness of a negative electrode active material-containing layer formed on the other surface of the current collector was 59 $\mu$m; and the density of the negative electrode active material-containing layer was 2.2 g/cm$^3$. Thus, a first electrode was obtained, which had a bipolar structure and including the current collector, the positive electrode active material-containing layer formed on one surface of the current collector, and the negative electrode active material-containing layer formed on the other surface of the current collector.

Second to fourth electrodes each having the same structure as that of the first electrode were prepared. Furthermore, a fifth electrode having the same structure as that of the first electrode except that the fifth electrode included no positive electrode active material-containing layer and a sixth electrode having the same structure as that of the first electrode except that the sixth electrode included no negative electrode active material were produced.

Then, a Li-conductive layer was formed between the positive electrode active material-containing layer of the first electrode and the negative electrode active material-containing layer of the second electrode. A Li-conductive layer was formed between the positive electrode active material-containing layer of the second electrode and the negative electrode active material-containing layer of the third electrode. A Li-conductive layer was formed between the positive electrode active material-containing layer of the third electrode and the negative electrode active material-containing layer of the fourth electrode. A Li-conductive layer was formed between the negative electrode active material-containing layer of the first electrode and the positive electrode active material-containing layer of the sixth electrode. A Li-conductive layer was formed between the positive electrode active material-containing layer of the fourth electrode and the negative electrode active material-containing layer of the fifth electrode.

The Li-conductive layer was formed in the same procedure as that of Example 3 except for the following points.

First, one obtained by mixing the same first inorganic solid particles and the second inorganic solid particles as those used in Example 8 at a weight ratio of 50 : 50 was used as a inorganic solid particle mixture. LiPF$_6$ was dissolved in a mixed solvent at a concentration of 1 M upon preparation of a liquid nonaqueous electrolyte.

(Comparative Example 1)

In Comparative Example 1, an electrode assembly of Comparative Example 1 was produced in the same procedure as that of Example 1 except for the following points.

In Comparative Example 1, no Li-conductive layer including a composite electrolyte was formed. Instead, a polypropylene (PP) separator having a thickness of 20 $\mu$m was provided between a positive electrode active material-containing layer and a negative electrode active material-containing layer. This separator was impregnated with the same nonaqueous electrolyte precursor coating material as that of prepared in Example 1, and this coating material was heated at 60°C for 6 hours. Thus, a nonaqueous electrolyte containing PAN was held in the positive electrode active material-containing layer, the negative electrode active material-containing layer and the separator.

(Comparative Example 2)

In Comparative Example 2, an electrode assembly of Comparative Example 2 was produced in the same procedure as that of Comparative Example 1 except that a polyethylene (PE) separator having a thickness of 20 $\mu$m was used.

(Comparative Example 3)

In Comparative Example 3, an electrode assembly of Comparative Example 3 was produced in the same procedure as that of Example 1 except for the following points.

In Comparative Example 3, no Li-conductive layer including a composite electrolyte was formed. Instead, a sintered body of Li$_7$La$_3$Zr$_2$O$_{12}$ particles having a thickness of 20 $\mu$m was sandwiched between a positive electrode active material-containing layer and a negative electrode active material-containing layer. The Li$_7$La$_3$Zr$_2$O$_{12}$ particles had an average primary particle size of 1 $\mu$m.

(Comparative Example 4)

In Comparative Example 4, an electrode assembly of Comparative Example 4 was produced in the same procedure as that of Example 1 except for the following points.

In Comparative Example 4, no Li-conductive layer including a composite electrolyte was formed. Instead, a gel polyacrylonitrile polymer sheet having a thickness of 40 μm was sandwiched between a positive electrode active material-containing layer and a negative electrode active material-containing layer. A liquid nonaqueous electrolyte was held in the polymer sheet so that the content of the gel polyacrylonitrile was set to 2% by weight. The liquid nonaqueous electrolyte was prepared by mixing propylene carbonate and diethyl carbonate at a volume ratio of 1 : 2 to prepare a mixed solvent and dissolving $LiPF_6$ in an amount of 1.2 M in this mixed solvent.

(Comparative Example 5)

In Comparative Example 5, an electrode assembly of Comparative Example 5 was produced in the same manner as in Example 8 except that particles of LLZ were not used.

(Comparative Example 6)

In Comparative Example 6, an electrode assembly of Comparative Example 6 was produced in the same manner as in Example 8 except that alumina particles were not used.

(Comparative Examples 7 to 9)

In Comparative Examples 7 to 9, electrode assemblies of Comparative Examples 7 to 9 were produced in the same procedure as that of Example 1 except that the ratio d90/d10 of an inorganic solid particle mixture was made different from that in Example 1.
Specifically, the ratio d90/d10 was varied in the following procedure.
In Comparative Example 7, in the particle size distributions of the first inorganic solid particles and second inorganic solid particles, the grinding conditions were appropriately adjusted so that d90/d10 was about 8.
In Comparative Example 8, d90/d10 particle size distribution measurement and a grinding treatment were alternately performed in a short period of time, so that the particle size distributions of the first inorganic solid particles and second inorganic solid particles were made as equal as possible.
In Comparative Example 9, the second inorganic solid particles were ground only by one pass with a roller compactor.

(Comparative Examples 10 and 11)

In Comparative Examples 10 and 11, electrode assemblies of Comparative Examples 10 and 11 were produced in the same procedure as that of Example 3 except for the following points.
In Comparative Examples 10 and 11, the same first inorganic solid particles and second inorganic solid particles as those used in Example 8 were used. These were mixed at a weight ratio of 50 : 50 to prepare an inorganic solid particle mixture.
In Comparative Examples 10 and 11, the weight ratios of contents of a solid inorganic particle mixture, nonaqueous electrolyte solution component and acrylonitrile monomer component in a composite electrolyte were set as follows. Comparative Example 10: [99.95 : 0.04 : 0.01]; and Comparative Example 11: [70 : 20 : 10].
The parameters of the materials contained in the electrode assemblies of Examples and Comparative Examples are shown in the following Tables 1 to 6. Each parameter was measured in the procedure described above.

[Table 1]

| | First Inorganic Solid Particles | | | | Second Inorganic Solid Particles | | | |
| | Material | Average Particle Size d50 (μm) | BET Specific Surface Area (m²/g) | Ion Conductivity at 25°C (S/cm) | Material | Average Particle Size d50 (μm) | BET Specific Surface Area (m²/g) | Ion Conductivity at 25°C (S/cm) |
|---|---|---|---|---|---|---|---|---|
| Example 1 | LLZ | 0.35 | 79.8 | $4.58 \times 10^{-4}$ | Alumina | 0.35 | 80.1 | $<1 \times 10^{-10}$ |
| Example 2 | LLZ | 0.35 | 79.8 | $4.58 \times 10^{-4}$ | Alumina | 0.35 | 80.1 | $<1 \times 10^{-10}$ |
| Example 3 | LLZ | 0.35 | 79.8 | $4.58 \times 10^{-4}$ | Alumina | 0.35 | 80.1 | $<1 \times 10^{-10}$ |
| Example 4 | LLZ | 0.35 | 79.8 | $4.58 \times 10^{-4}$ | Alumina | 0.35 | 80.1 | $<1 \times 10^{-10}$ |
| Example 5 | LLZ | 0.35 | 79.8 | $4.58 \times 10^{-4}$ | Alumina | 0.35 | 80.1 | $<1 \times 10^{-10}$ |
| Example 6 | LLZ | 0.35 | 79.8 | $4.58 \times 10^{-4}$ | Alumina | 0.35 | 80.1 | $<1 \times 10^{-10}$ |
| Example 7 | LLZ | 0.35 | 79.8 | $4.58 \times 10^{-4}$ | Alumina | 0.35 | 80.1 | $<1 \times 10^{-10}$ |
| Example 8 | LLZ | 0.10 | 74.8 | $4.58 \times 10^{-4}$ | Alumina | 0.10 | 75.1 | $<1 \times 10^{-10}$ |
| Example 9 | LLZ | 0.10 | 74.8 | $4.58 \times 10^{-4}$ | Alumina | 0.10 | 75.1 | $<1 \times 10^{-10}$ |
| Example 10 | LLZ | 0.10 | 74.8 | $4.58 \times 10^{-4}$ | Alumina | 0.10 | 75.1 | $<1 \times 10^{-10}$ |
| Example 11 | LLZ | 0.10 | 74.8 | $4.58 \times 10^{-4}$ | Alumina | 0.10 | 75.1 | $<1 \times 10^{-10}$ |
| Example 12 | LLZ | 0.10 | 74.8 | $4.58 \times 10^{-4}$ | Alumina | 0.10 | 75.1 | $<1 \times 10^{-10}$ |
| Example 13 | LLZ | 0.10 | 74.8 | $4.58 \times 10^{-4}$ | Alumina | 0.10 | 75.1 | $<1 \times 10^{-10}$ |
| Example 14 | LLZ | 0.10 | 74.8 | $4.58 \times 10^{-4}$ | LATP | 0.10 | 74.9 | $4.1 \times 10^{-5}$ |

| | First Inorganic Solid Particles | | | | Second Inorganic Solid Particles | | | |
|---|---|---|---|---|---|---|---|---|
| | Material | Average Particle Size d50 ($\mu$m) | BET Specific Surface Area (m$^2$/g) | Ion Conductivity at 25°C (S/cm) | Material | Average Particle Size d50 ($\mu$m) | BET Specific Surface Area (m$^2$/g) | Ion Conductivity at 25°C (S/cm) |
| Example 15 | LLZ | 0.10 | 74.8 | $4.58 \times 10^{-4}$ | LIPON | 0.10 | 69.3 | $1.1 \times 10^{-6}$ |
| Example 16 | LLT | 0.10 | 72.1 | $1.3 \times 10^{-3}$ | LIPON | 0.10 | 69.3 | $1.1 \times 10^{-6}$ |
| Example 17 | LLZ | 0.10 | 74.8 | $4.58 \times 10^{-4}$ | Zirconia | 0.10 | 75.5 | $<1 \times 10^{-10}$ |
| Example 18 | LLZ | 0.10 | 74.8 | $4.58 \times 10^{-4}$ | Magnesia | 0.10 | 75.3 | $<1 \times 10^{-10}$ |
| Example 19 | LLZ | 0.10 | 74.8 | $4.58 \times 10^{-4}$ | Titan ia | 0.10 | 74.8 | $<1 \times 10^{-10}$ |
| Example 20 | LLZ | 0.10 | 74.8 | $4.58 \times 10^{-4}$ | Silica | 0.10 | 77.0 | $<1 \times 10^{-10}$ |
| Example 21 | LLZ | 0.10 | 74.8 | $4.58 \times 10^{-4}$ | Alumina | 0.10 | 75.1 | $<1 \times 10^{-10}$ |
| Example 22 | LLZ | 0.10 | 74.8 | $4.58 \times 10^{-4}$ | Alumina | 0.10 | 75.1 | $<1 \times 10^{-10}$ |
| Example 23 | LLZ | 0.10 | 74.8 | $4.58 \times 10^{-4}$ | Alumina | 0.10 | 75.1 | $<1 \times 10^{-10}$ |
| Example 24 | LLZ | 0.10 | 74.8 | $4.58 \times 10^{-4}$ | Alumina | 0.10 | 75.1 | $<1 \times 10^{-10}$ |
| Example 25 | LLZ | 0.10 | 74.8 | $4.58 \times 10^{-4}$ | Alumina | 0.10 | 75.1 | $<1 \times 10^{-10}$ |
| Example 26 | LLZ | 0.10 | 74.8 | $4.58 \times 10^{-4}$ | Alumina | 0.10 | 75.1 | $<1 \times 10^{-10}$ |
| Example 27 | LLZ | 0.10 | 74.8 | $4.58 \times 10^{-4}$ | Alumina | 0.10 | 75.1 | $<1 \times 10^{-10}$ |
| Example 28 | LLZ | 7.42 | 5.1 | $4.58 \times 10^{-4}$ | Alumina | 0.10 | 253.0 | $<1 \times 10^{-10}$ |

EP 3 379 604 B1

34

[Table 2]

| | First Inorganic Solid Particles | | | | Second Inorganic Solid Particles | | | |
|---|---|---|---|---|---|---|---|---|
| | Material | Average Particle Size d50 ($\mu$m) | BET Specific Surface Area ($m^2$/g) | Ion Conductivity at 25°C (S/cm) | Material | Average Particle Size d50 ($\mu$m) | BET Specific Surface Area ($m^2$/g) | Ion Conductivity at 25°C (S/cm) |
| Example 29 | LLZ | 1.82 | 23.3 | $4.58 \times 10^{-4}$ | Alumina | 0.10 | 120.3 | $<1 \times 10^{-10}$ |
| Example 30 | LLZ | 0.10 | 121.1 | $4.58 \times 10^{-4}$ | Alumina | 9.85 | 5.3 | $<1 \times 10^{-10}$ |
| Example 31 | LLZ | 0.10 | 121.1 | $4.58 \times 10^{-4}$ | Alumina | 2.03 | 22.9 | $<1 \times 10^{-10}$ |
| Example 32 | LLZ | 0.10 | 74.8 | $4.58 \times 10^{-4}$ | Alumina | 0.10 | 75.1 | $<1 \times 10^{-10}$ |
| Example 33 | LLZ | 0.10 | 74.8 | $4.58 \times 10^{-4}$ | Alumina | 0.10 | 75:1 | $<1 \times 10^{-10}$ |
| Example 34 | LLZ | 0.10 | 74.8 | $4.58 \times 10^{-4}$ | Alumina | 0.10 | 75.1 | $<1 \times 10^{-10}$ |
| Example 35 | LLZ | 0.10 | 74.8 | $4.58 \times 10^{-4}$ | Alumina | 0.10 | 75.1 | $<1 \times 10^{-10}$ |
| Example 36 | LLZ | 0.10 | 74.8 | $4.58 \times 10^{-4}$ | Alumina | 0.10 | 75.1 | $<1 \times 10^{-10}$ |
| Example 37 | LLZ | 0.10 | 74.8 | $4.58 \times 10^{-4}$ | Alumina | 0.10 | 75.1 | $<1 \times 10^{-10}$ |
| Example 38 | LLZ | 0.10 | 74.8 | $4.58 \times 10^{-4}$ | Alumina | 0.10 | 75.1 | $<1 \times 10^{-10}$ |
| Example 39 | LLZ | 0.10 | 74.8 | $4.58 \times 10^{-4}$ | Alumina | 0.10 | 75.1 | $<1 \times 10^{-10}$ |
| Example 40 | LLZ | 0.10 | 74.8 | $4.58 \times 10^{-4}$ | Alumina | 0.10 | 75.1 | $<1 \times 10^{-10}$ |
| Example 41 | LLZ | 0.10 | 74.8 | $4.58 \times 10^{-4}$ | Alumina | 0.10 | 75.1 | $<1 \times 10^{-10}$ |
| Example 42 | LLZ | 0.10 | 74.8 | $4.58 \times 10^{-4}$ | Alumina | 0.10 | 75.1 | $<1 \times 10^{-10}$ |
| Comparative Example 1 | - | - | - | | - | - | - | - |
| Comparative Example 2 | - | - | - | | - | - | - | - |
| Comparative Example 3 | LLZ | 0.10 | 74.8 | $4.58 \times 10^{-4}$ | - | - | - | - |
| Comparative Example 4 | - | - | - | - | - | - | - | - |
| Comparative Example 5 | - | - | - | - | Alumina | 0.10 | 75.1 | $<1 \times 10^{-10}$ |

EP 3 379 604 B1

(continued)

| | First Inorganic Solid Particles | | | | Second Inorganic Solid Particles | | | |
|---|---|---|---|---|---|---|---|---|
| | Material | Average Particle Size d50 ($\mu$m) | BET Specific Surface Area ($m^2$/g) | Ion Conductivity at 25°C (S/cm) | Material | Average Particle Size d50 ($\mu$m) | BET Specific Surface Area ($m^2$/g) | Ion Conductivity at 25°C (S/cm) |
| Comparative Example 6 | LLZ | 0.10 | 74.8 | $4.58 \times 10^{-4}$ | - | - | - | - |
| Comparative Example 7 | LLZ | 0.10 | 74.8 | $4.58 \times 10^{-4}$ | Alumina | 0.10 | 75.1 | $<1 \times 10^{-10}$ |
| Comparative Example 8 | LLZ | 0.10 | 74.8 | $4.58 \times 10^{-5.}$ | Alumina | 0.10 | 75.1 | $<1 \times 10^{-11}$ |
| Comparative Example 9 | LLZ | 0.10 | 74.8 | $4.58 \times 10^{-5}$ | Alumina | 10.50 | 75.1 | $<1 \times 10^{-11}$ |
| Comparative Example 10 | LLZ | 0.35 | 79.8 | $4.58 \times 10^{-5}$ | Alumina | 0.35 | 80.1 | $<1 \times 10^{-11}$ |
| Comparative Example 11 | LLZ | 0.35 | 79.8 | $4.58 \times 10^{-5}$ | Alumina | 0.35 | 80.1 | $<1 \times 10^{-11}$ |

[Table 3]

|  | d90/d10 | Mixing Ratio of Inorganic Particles (First: Second) | Li-Conductivity Ratio $\sigma_H/\sigma_L$ | Average Particle Size Ratio $R_H/R_L$ | Specific Surface Area Ratio $S_H/S_L$ |
|---|---|---|---|---|---|
| Example 1 | 15.42 | 50:50 | $>10^6$ | 1.00 | 1.00 |
| Example 2 | 15.42 | 50:50 | $>10^6$ | 1.00 | 1.00 |
| Example 3 | 15.42 | 50:50 | $>10^6$ | 1.00 | 1.00 |
| Example 4 | 15.42 | 50:50 | $>10^6$ | 1.00 | 1.00 |
| Example 5 | 15.42 | 50:50 | $>10^6$ | 1.00 | 1.00 |
| Example 6 | 15.42 | 50:50 | $>10^6$ | 1.00 | 1.00 |
| Example 7 | 15.42 | 50:50 | $>10^6$ | 1.00 | 1.00 |
| Example 8 | 10.31 | 1:99 | $>10^6$ | 1.00 | 1.00 |
| Example 9 | 15.43 | 10:90 | $>10^6$ | 1.00 | 1.00 |
| Example 10 | 30.21 | 25:75 | $>10^6$ | 1.00 | 1.00 |
| Example 11 | 42.18 | 75:20 | $>10^6$ | 1.00 | 1.00 |
| Example 12 | 51.53 | 90:10 | $>10^6$ | 1.00 | 1.00 |
| Example 13 | 56.81 | 99:1 | $>10^6$ | 1.00 | 1.00 |
| Example 14 | 57.35 | 50:50 | 11.17 | 1.00 | 1.00 |
| Example 15 | 57.49 | 50:50 | 416.36 | 1.00 | 1.08 |
| Example 16 | 57.49 | 50:50 | $1.18\times10^3$ | 1.00 | 1.04 |
| Example 17 | 60.80 | 50:50 | $>10^6$ | 1.00 | 1.01 |
| Example 18 | 61.56 | 50:50 | $>10^6$ | 1.00 | 1.01 |
| Example 19 | 48.39 | 50:50 | $>10^6$ | 1.00 | 1.00 |
| Example 20 | 38.44 | 50:50 | $>10^6$ | 1.00 | 1.03 |
| Example 21 | 59.30 | 50:50 | $>10^6$ | 1.00 | 1.00 |

(continued)

|  | d90/d10 | Mixing Ratio of Inorganic Particles (First: Second) | Li-Conductivity Ratio $\sigma_H/\sigma_L$ | Average Particle Size Ratio $R_H/R_L$ | Specific Surface Area Ratio $S_H/S_L$ |
|---|---|---|---|---|---|
| Example 22 | 59.30 | 50:50 | $>10^6$ | 1.00 | 1.00 |
| Example 23 | 59.30 | 50:50 | $>10^6$ | 1.00 | 1.00 |
| Example 24 | 59.30 | 50:50 | $>10^6$ | 1.00 | 1.00 |
| Example 25 | 59.30 | 50:50 | $>10^6$ | 1.00 | 1.00 |
| Example 26 | 59.30 | 50:50 | $>10^6$ | 1.00 | 1.00 |
| Example 27 | 59.30 | 50:50 | $>10^6$ | 1.00 | 1.00 |
| Example 28 | 399.80 | 50:50 | $>10^6$ | 74.20 | 49.61 |

[Table 4]

|  | d90/d10 | Mixing Ratio of Inorganic Particles (First : Second) | Li-Conductivity Ratio $\sigma_H/\sigma_L$ | Average Particle Size Ratio $R_H/R_L$ | Specific Surface Area Ratio $S_H/S_L$ |
|---|---|---|---|---|---|
| Example 29 | 260.92 | 50:50 | $>10^6$ | 18.20 | 5.16 |
| Example 30 | 495.36 | 50:50 | $>10^6$ | 98.50 | 22.85 |
| Example 31 | 135.75 | 50:50 | $>10^6$ | 20.30 | 5.29 |
| Example 32 | 59.30 | 50:50 | $>10^6$ | 1.00 | 1.00 |
| Example 33 | 59.30 | 50:50 | $>10^6$ | 1.00 | 1.00 |
| Example 34 | 59.30 | 50:50 | $>10^6$ | 1.00 | 1.00 |
| Example 35 | 59.30 | 50:50 | $>10^6$ | 1.00 | 1.00 |
| Example 36 | 59.30 | 50:50 | $>10^6$ | 1.00 | 1.00 |
| Example 37 | 59.30 | 50:50 | $>10^6$ | 1.00 | 1.00 |
| Example 38 | 59.30 | 50:50 | $>10^6$ | 1.00 | 1.00 |
| Example 39 | 59.30 | 50:50 | $>10^6$ | 1.00 | 1.00 |
| Example 40 | 59.30 | 50:50 | $>10^6$ | 1.00 | 1.00 |
| Example 41 | 59.30 | 50:50 | $>10^6$ | 1.00 | 1.00 |
| Example 42 | 59.30 | 50:50 | $>10^6$ | 1.00 | 1.00 |
| Comparative Example 1 | - | - | - | - | - |
| Comparative Example 2 | - | - | - | - | - |
| Comparative Example 3 | - | - | - | - | - |
| Comparative Example 4 | - | - | - | - | - |

(continued)

|  | d90/d10 | Mixing Ratio of Inorganic Particles (First : Second) | Li-Conductivity Ratio $\sigma_H/\sigma_L$ | Average Particle Size Ratio $R_H/R_L$ | Specific Surface Area Ratio $S_H/S_L$ |
|---|---|---|---|---|---|
| Comparative Example 5 | - | - | - | - | - |
| Comparative Example 6 | - | - | - | - | - |
| Comparative Example 7 | 8.50 | 50:50 | >$10^6$ | 1.00 | 1.00 |
| Comparative Example 8 | 4.27 | 50:50 | >$10^6$ | 1.00 | 1.00 |
| Comparative Example 9 | 523.50 | 50:50 | >$10^6$ | 105.00 | 1.00 |
| Comparative Example 10 | 15.42 | 50:50 | >$10^6$ | 1.00 | 1.00 |
| Comparative Example 11 | 15.42 | 50:50 | >$10^6$ | 1.00 | 1.00 |

[Table 5]

|  | Composition of Mixed Solvent | Composition Ratio of Composite Electrolyte (Ratio in wt%)[1] | Content of Nonaqueous Electrolyte (wt%) | Modulus Half Width/2[2] | Thickness of Li-Conductive Layer ($\mu$m) | |
|---|---|---|---|---|---|---|
|  |  |  |  |  | Average | Minimum |
| Example 1 | PC:DEC 1:2 | 99.9/0.08/0.02 | 0.1 | 1.85 | 5.0 | 1.5 |
| Example 2 | PC:DEC 1:2 | 98/1.6/0.4 | 2.0 | 2.36 | 5.0 | 1.6 |
| Example 3 | PC:DEC 1:2 | 96/3.2/0.8 | 4.0 | 2.79 | 5.0 | 1.4 |
| Example 4 | PC:DEC 1:2 | 90/8.0/2.0 | 10.0 | 2.80 | 5.0 | 1.5 |
| Example 5 | PC:DEC 1:2 | 84/12.8/3.2 | 16.0 | 2.82 | 5.0 | 1.3 |
| Example 6 | PC:DEC 1:2 | 80/16.0/4.0 | 20.0 | 2.79 | 5.0 | 1.4 |
| Example 7 | PC:DEC 1:2 | 75/20.0/5.0 | 25.0 | 2.80 | 5.0 | 1.6 |
| Example 8 | PC:DEC 1:2 | 96/3.2/0.8 | 4.0 | 1.63 | 5.0 | 1.5 |
| Example 9 | PC:DEC 1:2 | 96/3.2/0.8 | 4.0 | 2.14 | 4.9 | 1.6 |
| Example 10 | PC:DEC 1:2 | 96/3.2/0.8 | 0.0 | 2.39 | 5.0 | 1.5 |
| Example 11 | PC:DEC 1:2 | 96/3.2/0.8 | 4.0 | 2.58 | 5.0 | 1.6 |

(continued)

| | Composition of Mixed Solvent | Composition Ratio of Composite Electrolyte (Ratio in wt%)[1] | Content of Nonaqueous Electrolyte (wt%) | Modulus Half Width/2[2] | Thickness of Li-Conductive Layer ($\mu$m) | |
|---|---|---|---|---|---|---|
| | | | | | Average | Minimum |
| Example 12 | PC:DEC 1:2 | 96/3.2/0.8 | 4.0 | 2.34 | 5.0 | 1.4 |
| Example 13 | PC:DEC 1:2 | 96/3.2/0.8 | 4.0 | 2.30 | 5.0 | 1.6 |
| Example 14 | PC:DEC 1:2 | 96/3.2/0.8 | 4.0 | 2.61 | 5.0 | 1.5 |
| Example 15 | PC:DEC 1:2 | 96/3.2/0.8 | 4.0 | 2.65 | 5.0 | 1.3 |
| Example 16 | PC:DEC 1:2 | 96/3.2/0.8 | 4.0 | 2.71 | 5.0 | 1.5 |
| Example 17 | PC:DEC 1:2 | 96/3.2/0.8 | 4.0 | 2.78 | 5.0 | 1.6 |
| Example 18 | PC:DEC 1:2 | 96/3.2/0.8 | 4.0 | 2.79 | 5.0 | 1.3 |
| Example 19 | PC:DEC 1:2 | 96/3.2/0.8 | 4.0 | 2.77 | 5.0 | 1.7 |
| Example 20 | PC:DEC 1:2 | 96/3.2/0.8 | 4.0 | 2.76 | 5.0 | 1.5 |
| Example 21 | PC:DEC 1:2 | 96/3.2/0.8 | 4.0 | 2.79 | 20.0 | 7.9 |
| Example 22 | PC:DEC 1:2 | 96/3.2/0.8 | 4.0 | 2.79 | 15.3 | 5.1 |
| Example 23 | PC:DEC 1:2 | 96/3.2/0.8 | 4.0 | 2.79 | 10.3 | 3.6 |
| Example 24 | PC:DEC 1:2 | 96/3.2/0.8 | 4.0 | 2.79 | 7.9 | 2.8 |
| Example 25 | PC:DEC 1:2 | 96/3.2/0.8 | 4.0 | 2.79 | 3.1 | 1.1 |
| Example 26 | PC:DEC 1:2 | 96/3.2/0.8 | 4.0 | 2.79 | 1.1 | 0.6 |
| Example 27 | PC:DEC 1:2 | 96/3.2/0.8 | 4.0 | 2.79 | 0.5 | 0.3 |
| Example 28 | PC:DEC 1:2 | 96/3.2/0.8 | 4.0 | 2.81 | 0.5 | 0.3 |
| (1) Inorganic Solid Particle Mixture / Nonaqueous Electrolyte Solution Component / Monomer Component<br>(2) Relative Value, defining the value of Comparative Example 1 as 1 | | | | | | |

[Table 6]

| | Composition of Mixed Solvent | Composition Ratio of Composite Electrolyte (Ratio in wt%)[1] | Content of Nonaqueous Electrolyte (wt%) | Modulus Half Width/ 2[2] | Thickness of Li-Conductive Layer ($\mu$m) | |
|---|---|---|---|---|---|---|
| | | | | | Average | Minimum |
| Example 29 | PC:DEC 1:2 | 96/3.2/0.8 | 4.0 | 2.81 | 0.5 | 0.3 |
| Example 30 | PC:DEC 1:2 | 96/3.2/0.8 | 4.0 | 2.80 | 0.5 | 0.3 |
| Example 31 | PC:DEC 1:2 | 96/3.2/0.8 | 4.0 | 2.80 | 0.5 | 0.3 |
| Example 32 | PC:DMC 1:2 | 96/3.2/0.8 | 4.0 | 2.79 | 5.0 | 1.4 |
| Example 33 | EC:DEC 1:2 | 96/3.2/0.8 | 4.0 | 2.78 | 5.0 | 1.5 |
| Example 34 | PC:MEC 1:2 | 96/3.2/0.8 | 4.0 | 2.79 | 5.0 | 1.5 |
| Example 35 | PC:DEC 1:2 | 96/3.5/0.5 | 4.0 | 2.79 | 5.0 | 1.3 |
| Example 36 | PC:DEC 1:2 | 96/3.0/1.0 | 4.0 | 2.79 | 5.0 | 1.4 |
| Example 37 | PC:DEC 1:2 | 96/2.5/1.5 | 4.0 | 2.79 | 5.0 | 1.6 |
| Example 38 | PC:DEC 1:2 | 96/2.0/2.0 | 4.0 | 2.79 | 5.0 | 1.5 |
| Example 39 | PC:DEC 1:2 | 96/1.5/2.5 | 4.0 | 2.79 | 5.0 | 1.4 |
| Example 40 | PC:DEC 1:2 | 96/1.0/3.0 | 4.0 | 2.79 | 5.0 | 1.7 |
| Example 41 | PC:DEC 1:2 | 96/0.5/3.5 | 4.0 | 2.79 | 5.0 | 1.5 |
| Example 42 | PC:DEC 1:2 | 96/3.2/0.8 | 4.0 | 2.79 | 5.0 | 1.6 |
| Comparative Example 1 | PC:DEC 1:2 | 0/80/20 | 4.0 | 1.00 | 20.0 | 8.3 |
| Comparative Example 2 | PC:DEC 1:2 | 0/80/20 | 4.0 | 0.98 | 20.0 | 8.5 |
| Comparative Example 3 | - | 100/0/0 | 0.0 | 0.86 | 20.0 | 8.4 |
| Comparative Example 4 | - | 0/80/20 | 4.0 | 1.00 | 40.0 | 21.0 |
| Comparative Example 5 | PC:DEC 1:2 | 96/3.2/0.8 | 4.0 | 1.59 | 5.0 | 1.5 |
| Comparative Example 6 | PC:DEC 1:2 | 96/3.2/0.8 | 4.0 | 2.29 | 5.0 | 1.6 |
| Comparative Example 7 | PC:DEC 1:2 | 96/3.2/0.8 | 4.0 | 1.75 | 5.0 | 1.4 |
| Comparative Example 8 | PC:DEC 1:2 | 96/3.2/0.8 | 4.0 | 2.75 | 0.5 | 0.3 |
| Comparative Example 9 | PC:DEC 1:2 | 96/3.2/0.8 | 4.0 | 1.35 | 0.5 | 0.3 |
| Comparative Example 10 | PC:DEC 1:2 | 99.95/0.04/0.01 | 0.05 | 1.35 | 5.0 | 1.6 |
| Comparative Example 11 | PC:DEC 1:2 | 70/20/10 | 30.00 | 1.35 | 5.0 | 1.5 |
| (1) Inorganic Solid Particle Mixture / Nonaqueous Electrolyte Solution Component / Monomer Component (2) Relative Value, defining the value of Comparative Example 1 as 1 | | | | | | |

[Production of Secondary Battery]

Each of the electrode assemblies of Examples and Comparative Examples was housed in a container member of a laminate film, and an outer circumferential part of the container member was heat-sealed. Thus, secondary batteries of Examples and Comparative Example were produced.

<Evaluation>

The secondary batteries of Examples and Comparative Examples were evaluated in the following procedure.

First, a secondary battery was placed in a thermostatic chamber set at a set temperature of 25°C, followed by waiting for 1 hour. Subsequently, the secondary battery was charged to 2.8 V at a constant current of a time discharge rate 0.2 C. Subsequently, the secondary battery was subjected to charge at a constant voltage of 2.8 V, and a current value was converged to 1/20 C. Next, the secondary battery was discharged at a constant current of 1C with a cut-off voltage of 1.5 V. A discharge capacity obtained by this discharge was defined as a 1 C discharge capacity. Next, after charging under the same conditions, the secondary battery was discharged at a constant current of 20 C with a cut-off voltage of 1.5 V. A discharge capacity obtained by this discharge was defined as a 20 C discharge capacity. A rate capacity retention ratio [%] was calculated by multiplying one, which was obtained by dividing the 20 C discharge capacity by the 1 C discharge capacity, by 100.

Next, the secondary battery was charged at 25°C in the same procedure as the above. Subsequently, the set temperature of the thermostatic chamber including the secondary battery was set at -30°C, followed by waiting for 2 hours. Subsequently, the secondary battery was discharged at -30°C at a constant current of 1 C with a cut-off voltage of 1.5 V. A discharge capacity obtained by this discharge was defined as a discharge capacity at -30°C. Low-temperature performance (output performance ratio) was calculated by multiplying one, which was obtained by dividing the discharge capacity at -30°C by the previously measured 1C discharge capacity (that is, discharge capacity at 25°C), by 100.

Next, the set temperature of the thermostatic chamber was set to 60°C, followed by waiting for 2 hours. Subsequently, the secondary battery was charged to 2.8 V at a constant current of 1 C. Subsequently, the secondary battery was charged at a constant voltage of 2.8 V for 3 hours. After a waiting time of 10 minutes, the secondary battery was discharged at a constant current of 1 C with a cut-off voltage of 1.5 V. This charge-waiting-discharge was defined as one charge-and-discharge cycle. By repeating this charge-and-discharge cycle, the cycle life performance at 60°C was examined. One obtained by dividing the discharge capacity at 60°C after 500 cycles by the capacity initially discharged at 60°C was multiplied by 100 to calculate a cycle capacity retention ratio [%] at 60°C.

The evaluation results of the above tests are shown in the following Tables 7 and 8.

[Table 7]

|  | Rate Capacity Retention Ratio at 25°C (20C/1C) (%) | Low-Temperature Performance (Output Performance Ratio at -30°C/at 25°C) (%) | Cycle Capacity Retention Ratio at 60°C (%) |
|---|---|---|---|
| Example 1 | 45.1 | 68.6 | 89.5 |
| Example 2 | 75.3 | 68.9 | 95.3 |
| Example 3 | 80.4 | 72.8 | 96.1 |
| Example 4 | 80.6 | 71.3 | 96.4 |
| Example 5 | 76.2 | 70.5 | 94.8 |
| Example 6 | 74.9 | 70.8 | 94.6 |
| Example 7 | 74.8 | 69.5 | 94.1 |
| Example 8 | 67.5 | 68.8 | 90.2 |
| Example 9 | 74.6 | 69.0 | 94.4 |
| Example 10 | 79.4 | 71.1 | 95.1 |
| Example 11 | 79.7 | 72.2 | 95.5 |
| Example 12 | 76.0 | 70.6 | 94.7 |

(continued)

| | Rate Capacity Retention Ratio at 25°C (20C/1C) (%) | Low-Temperature Performance (Output Performance Ratio at -30°C/at 25°C) (%) | Cycle Capacity Retention Ratio at 60°C (%) |
|---|---|---|---|
| Example 13 | 75.2 | 69.9 | 94.3 |
| Example 14 | 74.6 | 70.4 | 94.6 |
| Example 15 | 75.1 | 70.2 | 95.0 |
| Example 16 | 74.9 | 69.8 | 94.5 |
| Example 17 | 79.8 | 71.4 | 95.8 |
| Example 18 | 78.9 | 71.5 | 95.9 |
| Example 19 | 79.1 | 70.9 | 95.4 |
| Example 20 | 77.5 | 69.7 | 94.4 |
| Example 21 | 74.7 | 68.9 | 94.5 |
| Example 22 | 76.6 | 71.8 | 95.2 |
| Example 23 | 79.9 | 72.2 | 95.5 |
| Example 24 | 80.2 | 72.3 | 95.8 |
| Example 25 | 80.4 | 72.5 | 95.9 |
| Example 26 | 81.3 | 72.9 | 94.2 |
| Example 27 | 82.8 | 74.3 | 94.0 |
| Example 28 | 80.1 | 71.6 | 94.8 |

[Table 8]

| | Rate Capacity Retention Ratio at 25°C (20C/1C) (%) | Low-Temperature Performance (Output Performance Ratio at -30°C/at 25°C) (%) | Cycle Capacity Retention Ratio at 60°C (%) |
|---|---|---|---|
| Example 29 | 80.7 | 72.0 | 95.1 |
| Example 30 | 80.9 | 72.1 | 94.4 |
| Example 31 | 80.8 | 72.2 | 94.9 |
| Example 32 | 80.3 | 71.9 | 95.3 |
| Example 33 | 80.1 | 72.3 | 95.0 |

(continued)

|  | Rate Capacity Retention Ratio at 25°C (20C/1C) (%) | Low-Temperature Performance (Output Performance Ratio at -30°C/at 25°C) (%) | Cycle Capacity Retention Ratio at 60°C (%) |
|---|---|---|---|
| Example 34 | 80.4 | 72.5 | 94.9 |
| Example 35 | 80.1 | 72.8 | 95.9 |
| Example 36 | 79.2 | 71.1 | 96.0 |
| Example 37 | 78.9 | 70.9 | 95.9 |
| Example 38 | 78.0 | 70.4 | 95.8 |
| Example 39 | 77.7 | 69.3 | 95.4 |
| Example 40 | 75.3 | 68.8 | 95.3 |
| Example 41 | 74.5 | 68.6 | 95.5 |
| Example 42 | 78.3 | 69.1 | 92.4 |
| Comparative Example 1 | 52.3 | 49.9 | 91.1 |
| Comparative Example 2 | 51.8 | 48.9 | 92.3 |
| Comparative Example 3 | 0.0 | 0.0 | 0.0 |
| Comparative Example 4 | 47.1 | 41.6 | 94.0 |
| Comparative Example 5 | 65.0 | 57.2 | 89.1 |
| Comparative Example 6 | 67.3 | 58.9 | 88.4 |
| Comparative Example 7 | 41.3 | 50.3 | 38.1 |
| Comparative Example 8 | Over-voltage was applied, and charge could not be performed. | | |
| Comparative Example 9 | 38.3 | 5.3 | 73.6 |
| Comparative Example 10 | Not operation due to internal short-circuit. | | |
| Comparative Example 11 | 18.5 | 43.2 | 80.9 |

As is apparent from the results shown in Tables 7 and 8, it is found that the secondary batteries of Examples can exhibit more excellent life performance and more excellent output performance in a low temperature environment than those of the secondary batteries of Comparative Examples 1 to 11.

The secondary battery of Example 21 included the Li-conductive layer having the same thickness as those of the separators, the sintered bodies and the sheetlike electrolyte layers of the secondary batteries of Comparative Examples 1 to 3, and had more excellent all performances than those of Comparative Examples 1 to 3.

A high over-voltage was applied to the secondary battery of Comparative Example 8, and the battery could not be charged. In the secondary battery of Comparative Example 10, the composite solid electrolyte layer was apt to be peeled off from the electrode, and the secondary battery could not be charged because it was short-circuited during assembly.

(Example 43)

In Example 43, an electrode assembly of Example 43 was produced in the same procedure as that of Example 3 except for the following points.

In Example 43, particles of a compound having a rhombohedral crystal structure of NACICON type and having a composition formula of $Li_{1.2}Zr_{1.9}Ca_{0.1}(PO_4)_3$ (LZCP) were provided as first inorganic solid particles. The average particle size, BET specific surface area and first Li-ion conductivity at 25°C of the first inorganic solid particles are shown in the following Table 9.

On the other hand, alumina particles having a composition formula of $Al_2O_3$ were provided as second inorganic solid particles. The average particle size, BET specific surface area and second Li-ion conductivity at 25°C of the second inorganic solid particles are shown in the following Table 9.

In Example 43, the first inorganic solid particles (LZCP) and the second inorganic solid particles were mixed at a weight ratio of 50 : 50.

(Example 44)

In Example 44, an electrode assembly of Example 44 was produced in the same procedure as that of Example 3 except for the following points.

In Example 44, particles of a compound having a distorted triclinic crystal structure and having a composition formula of $LiZr_2(PO_4)_3$ (LZP) were provided as first inorganic solid particles. The average particle size, BET specific surface area and first Li-ion conductivity at 25°C of the first inorganic solid particles are shown in the following Table 9.

On the other hand, alumina particles having a composition formula of $Al_2O_3$ were provided as second inorganic solid particles. The average particle size, BET specific surface area and second Li-ion conductivity at 25°C of the second inorganic solid particles are shown in the following Table 9.

In Example 44, the first inorganic solid particles (LZP) and the second inorganic solid particles were mixed at a weight ratio of 50 : 50.

[Table 9]

| | | First Inorganic Solid Particles | | | | Second Inorganic Solid Particles | | | |
|---|---|---|---|---|---|---|---|---|---|
| | | Material | Average Particle Size d50 ($\mu$m) | BET Specific Surface Area ($m^2$/g) | Ion Conductivity at 25°C (S/cm) | Material | Average Particle Size d50 ($\mu$m) | BET Specific Surface Area ($m^2$/g) | Ion Conductivity at 25°C (S/cm) |
| Example 43 | | LZCP | 0.50 | 15.3 | $8.53 \times 10^{-5}$ | Alumina | 0.50 | 14.8 | $<1 \times 10^{-10}$ |
| Example 44 | | LZP | 0.50 | 16.8 | $1.53 \times 10^{-5}$ | Alumina | 0.50 | 14.8 | $<1 \times 10^{-10}$ |

The parameters of the materials contained in the electrode assemblies of Examples 43 and 44 are shown in the following Tables 10 and 11. Each parameter was measured in the procedure described above.

[Table 10]

| | d90/d10 | Mixing Ratio of Inorganic Particles (First: Second) | Li-Conductivity Ratio $\sigma_H/\sigma_L$ | Average Particle Size Ratio $R_H/R_L$ | Specific Surface Area Ratio $S_H/S_L$ |
|---|---|---|---|---|---|
| Example 43 | 57.31 | 50:50 | $>10^5$ | 1.00 | 1.03 |
| Example 44 | 57.80 | 50:50 | $>10^5$ | 1.00 | 1.14 |

[Table 11]

| | Composition of Mixed Solvent | Composition Ratio of Composite Electrolyte (Ratio in wt%)[1] | Content of Nonaqueous Electrolyte (wt%) | Modulus Half Width/2[2] | Thickness of Li-Conductive Layer ($\mu$m) | |
|---|---|---|---|---|---|---|
| | | | | | Average | Minimum |
| Example 43 | PC:DEC 1:2 | 96/3.2/0.8 | 4.0 | 2.60 | 5.0 | 1.5 |
| Example 44 | PC:DEC 1:2 | 96/3.2/0.8 | 4.0 | 2.62 | 5.0 | 1.6 |
| (1) Inorganic Solid Particle Mixture / Nonaqueous Electrolyte Solution Component / Monomer Component (2) Relative Value, defining the value of Comparative Example 1 as 1 | | | | | | |

[Production of Secondary Battery]

Each of the electrode assemblies of Examples 43 and 44 was housed in a container member of a laminate film, and an outer circumferential part of the container member was heat-sealed. Thus, secondary batteries of Examples 43 and 44 were produced.

<Evaluation>

The secondary batteries of Examples 43 and 44 were evaluated according to the same procedure as the procedure described above.
The evaluation results of the above tests are shown in the following Table 12.

[Table 12]

| | Rate Capacity Retention Ratio at 25°C (20C/1C) (%) | Low-Temperature Performance (Output Performance Ratio at -30°C/at 25°C) (%) | Cycle Capacity Retention Ratio at 60°C (%) |
|---|---|---|---|
| Example 43 | 76.8 | 71.8 | 95.3 |
| Example 44 | 76.2 | 70.5 | 95.1 |

As is apparent from the results shown in Tables 7, 8 and 12, it is found that each of the secondary batteries of Example 43 and 44 can exhibit more excellent life performance and more excellent output performance in a low temperature environment than those of the secondary batteries of Comparative Examples 1 to 11, as with each of the secondary batteries of Examples 1 to 42. Furthermore, as is apparent from, for example, the results of Examples 3, 16, 43 and 44, it is found that although the secondary batteries of these Examples include the first inorganic solid particles different from each other, each of the secondary batteries can exhibit excellent life performance and excellent output performance in a low temperature environment in a same manner.
According to at least one of approaches and examples described above, a composite electrolyte is provided. The composite electrolyte includes an inorganic solid particle mixture and a nonaqueous electrolyte including Li. The inorganic solid particle mixture includes first inorganic solid particles which have a first Li-ion conductivity at 25°C and second inorganic solid particles having a second Li-ion conductivity at 25°C. The Li-ion conductivity at 25°C is lower than the first Li-ion conductivity at 25°C of the first inorganic solid particles. The ratio of the weight of the nonaqueous electrolyte to the weight of the composite electrolyte is from 0.1% to 25%. The inorganic solid particle mixture satisfies $10 \leq d90/d10 \leq 500$. In this composite electrolyte, the dissociation of the Li ions from the nonaqueous electrolyte and the conduction of the Li ions can be smoothly performed. As a result, the composite electrolyte can provide a secondary battery capable of exhibiting an excellent life performance and an excellent output performance under a low temperature environment.
While certain approaches have been described, these approaches have been presented by way of example only, and are not intended to limit the scope of the claims. Indeed, the composite electrolyte described herein may be embodied in a variety of other forms.

**Claims**

1. A composite electrolyte (9) comprising:

an inorganic solid particle mixture (91) comprising first inorganic solid particles (91A) having a first Li-ion conductivity at 25°C and second inorganic solid particles (91B) having a second Li-ion conductivity at 25°C, and the second Li-ion conductivity at 25°C being lower than the first Li-ion conductivity at 25°C; and
a nonaqueous electrolyte (92) comprising Li,
wherein:

a ratio of a weight of the nonaqueous electrolyte (92) to a weight of the composite electrolyte (9) is from 0.1% to 25%;
the inorganic solid particle mixture (91) satisfies $10 \leq d90/d10 \leq 500$;
wherein:

d10 is a particle size [$\mu$m] at which a cumulative frequency from a small particle size side is 10% in a particle size cumulative curve of the inorganic solid particle mixture (91), the particle size cumulative curve being obtained by a laser diffraction scattering method; and
d90 is a particle size [$\mu$m] at which a cumulative frequency from the small particle size side is 90% in the particle size cumulative curve;

wherein the first inorganic solid particles (91A) are at least one selected from the group consisting of:

- inorganic solid particles having a garnet-type structure;
- particles of a perovskite-type Li-ion conductive material having a composition represented by a formula of $La_{0.56}Li_{0.33}TiO_3$; and
- particles of a glass ceramic electrolyte having a NASICON-type structure and represented by a structural formula typified by $Li_{1+x+y}Ti_{2-x}Al_xP_{3-y}Si_yO_{12}$, where x = 0.3 and y = 0.2; and

the second inorganic solid particles (91B) are at least one selected from the group consisting of:

- aluminum oxide particles;
- zirconium oxide particles;
- silicon oxide particles;
- magnesium oxide particles;
- rutile type titanium oxide particles;
- niobium oxide particles;
- tantalum oxide particles;
- hafnium oxide particles;
- yttrium oxide particles;
- gallium oxide particles;
- germanium oxide particles; and
- lanthanoid oxide particles.

2. The composite electrolyte (9) according to claim 1,

wherein the first Li-ion conductivity at 25°C is $1 \times 10^{-10}$ S/cm or more, and the second Li-ion conductivity at 25°C is less than $1 \times 10^{-10}$ S/cm; and
a ratio of a weight of the first inorganic solid particles (91A) to a weight of the second inorganic solid particles (91B) is 1% or more and less than 99%.

3. The composite electrolyte (9) according to claim 1 or 2, wherein the inorganic solid particle mixture (91) satisfies $10 \leq \sigma_H/\sigma_L$; wherein

$\sigma_H$ is the first Li-ion conductivity at 25°C; and
$\sigma_L$ is the second Li-ion conductivity at 25°C.

4. The composite electrolyte (9) according to any one of claims 1 to 3, wherein:

an average particle size of the first inorganic solid particles (91A) is equal to an average particle size of the second inorganic solid particles (91B), or

the inorganic solid particle mixture (91) satisfies $1 < R_H/R_L \leq 100$; wherein

$R_H$ is an average particle size [$\mu$m] of particles having a larger average particle size between the average particle sizes of the first inorganic solid particles (91A) and the second inorganic solid particles (91B); and $R_L$ is an average particle size [$\mu$m] of particles having a smaller average particle size between the average particles sizes of the first inorganic solid particles (91A) and the second inorganic solid particles (91B), and wherein the average particle size of the first inorganic solid particles (91A) and the average particle size of the second inorganic solid particles (91B) are measured by particle size distribution measurement according to a laser diffraction scattering method.

5. The composite electrolyte (9) according to any one of claims 1 to 3, wherein:

a BET specific surface area [$m^2/g$] of the first inorganic solid particles (91A) is equal to a BET specific surface area [$m^2/g$] of the second inorganic solid particles (91B), or

the inorganic solid particle mixture (91) satisfies $1 < S_H/S_L \leq 50$; wherein

$S_H$ is a BET specific surface area [$m^2/g$] of particles having a larger BET specific surface area between the BET specific surface areas of the first inorganic solid particles (91A) and the second inorganic solid particles (91B); and $S_L$ is a BET specific surface area [$m^2/g$] of particles having a smaller BET specific surface area between the BET specific surface areas of the first inorganic solid particles (91A) and the second inorganic solid particles (91B).

6. The composite electrolyte (9) according to any one of claims 1 to 5, wherein the nonaqueous electrolyte (92) comprises a solid polymer electrolyte and/or a gel polymer electrolyte.

7. A secondary battery (100) comprising:

a positive electrode active material-containing layer (5b) ;
a negative electrode active material-containing layer (3b); and
a Li-conductive layer (4) provided between the positive electrode active material-containing layer (5b) and the negative electrode active material-containing layer (3b), and comprising the composite electrolyte (9) according to any one of claims 1 to 6.

8. The secondary battery (100) according to claim 7, wherein a thickness of a portion having a smallest thickness of the Li-conductive layer (4) is less than 8 $\mu$m.

9. The secondary battery (100) according to claim 7 or 8, wherein the negative electrode active material-containing layer (3b) comprises a Ti-containing negative electrode active material.

10. The secondary battery (100) according to any one of claims 7 to 9, which comprises a first electrode composite (10A, 10B, 10C) and a second electrode composite (10A, 10B, 10C) provided adjacent to the first electrode composite (10A, 10B, 10C), each of the electrode composites (10A, 10B, 10C) comprising:

a current collector (8) comprises a first surface and an opposing second surface,
the positive electrode active material-containing layer (5b) provided on the first surface of the current collector (8), and
the negative electrode active material-containing layer (3b) provided on the second surface of the current collector (8); and
the Li-conductive layer (4) is provided between the positive electrode active material-containing layer (5b) of the first electrode composite (10A, 10B, 10C) and the negative electrode active material-containing layer (3b) of the second electrode composite (10A, 10B, 10C).

11. A battery pack (300) comprising the secondary battery (100) according to any one of claims 7 to 10.

12. The battery pack (300) according to claim 11 further comprising:

an external power distribution terminal (347); and
a protective circuit (344).

13. The battery pack (300) according to claim 11 or 12 comprising a plural of secondary batteries (100), the plural of the secondary batteries (100) being electrically connected in series, in parallel, or in combination of in series and in parallel.

14. A vehicle (400) comprising the battery pack (300) according to any one of claims 11 to 13.

15. The vehicle (400) according to claim 14, which comprises a mechanism configured to convert kinetic energy of the vehicle (400) into regenerative energy.

**Patentansprüche**

1. Verbundelektrolyt (9), umfassend:

eine Mischung anorganischer fester Teilchen (91), die erste anorganische feste Teilchen (91A) mit einer ersten Li-Ionen-Leitfähigkeit bei 25°C und zweite anorganische feste Teilchen (91B) mit einer zweiten Li-Ionen-Leitfähigkeit bei 25°C umfasst, wobei die zweite Li-Ionen-Leitfähigkeit bei 25°C niedriger ist als die erste Li-Ionen-Leitfähigkeit bei 25°C; und
einen nichtwässrigen Elektrolyten (92), der Li umfasst,
wobei:

ein Verhältnis eines Gewichts des nichtwässrigen Elektrolyten (92) zu einem Gewicht des Verbundelektrolyten (9) 0,1% bis 25% beträgt;
die Mischung anorganischer fester Teilchen (91) $10 \leq d90/d10 \leq 500$ erfüllt;
worin:

d10 eine Teilchengröße [$\mu$m] ist, bei der eine kumulative Frequenz von einer kleinen Teilchengrößenseite 10% in einer kumulativen Teilchengrößenkurve der Mischung anorganischer fester Teilchen (91) beträgt, wobei die kumulative Teilchengrößenkurve durch ein Laserbeugungsstreuungsverfahren erhalten wird; und
d90 eine Teilchengröße [$\mu$m] ist, bei der eine kumulative Frequenz von der kleinen Teilchengrößenseite 90% in der kumulativen Teilchengrößenkurve beträgt;

wobei die ersten anorganischen festen Teilchen (91A) mindestens ein Vertreter sind, ausgewählt aus der Gruppe bestehend aus:

- anorganischen festen Teilchen mit einer Garnet-artigen Struktur;
- Teilchen aus einem Perovskit-artigen Li-Ionenleitfähigen Material mit einer Zusammensetzung mit der Formel $La_{0,56}Li_{0,33}TiO_3$; und
- Teilchen aus einem Glaskeramikelektrolyten mit einer NASICON-artigen Struktur und einer Strukturformel $Li_{1+x+y}Ti_{2-x}Al_xP_{3-y}Si_yO_{12}$, worin x = 0,3 und y = 0,2; und

die zweiten anorganischen festen Teilchen (91B) mindestens ein Vertreter sind, ausgewählt aus der Gruppe bestehend aus:

- Aluminiumoxidteilchen;
- Zirkoniumoxidteilchen;
- Siliziumoxidteilchen;
- Magnesiumoxidteilchen;
- Rutil-artigen Titanoxidteilchen;
- Nioboxidteilchen;
- Tantaloxidteilchen;
- Hafniumoxidteilchen;
- Yttriumoxidteilchen;
- Galliumoxidteilchen;

- Germaniumoxidteilchen; und
- Lanthanoidoxidteilchen.

2. Verbundelektrolyt (9) gemäß Anspruch 1,

wobei die erste Li-Ionen-Leitfähigkeit bei 25°C $1 \times 10^{-10}$ S/cm oder mehr beträgt und die zweite Li-Ionen-Leitfähigkeit bei 25°C weniger als $1 \times 10^{-10}$ S/cm beträgt; und
ein Verhältnis eines Gewichts der ersten anorganischen festen Teilchen (91A) zu einem Gewicht der zweiten anorganischen festen Teilchen (91B) 1% oder mehr und weniger als 99% beträgt.

3. Verbundelektrolyt (9) gemäß Anspruch 1 oder 2, wobei die Mischung anorganischer fester Teilchen (91) $10 \leq \sigma_H/\sigma_L$ erfüllt; worin

$\sigma_H$ die erste Li-Ionen-Leitfähigkeit bei 25°C ist; und
$\sigma_L$ die zweite Li-Ionen-Leitfähigkeit bei 25°C ist.

4. Verbundelektrolyt (9) gemäß mindestens einem der Ansprüche 1 bis 3, wobei:

eine mittlere Teilchengröße der ersten anorganischen festen Teilchen (91A) gleich einer mittleren Teilchengröße der zweiten anorganischen festen Teilchen (91B) ist, oder
die Mischung anorganischer fester Teilchen (91) $1 < R_H/R_L \leq 100$ erfüllt; worin
$R_H$ eine mittlere Teilchengröße [$\mu$m] von Teilchen mit einer größeren mittleren Teilchengröße zwischen den mittleren Teilchengrößen der ersten anorganischen festen Teilchen (91A) und der zweiten anorganischen festen Teilchen (91B) ist; und
$R_L$ eine mittlere Teilchengröße [$\mu$m] von Teilchen mit einer kleineren mittleren Teilchengröße zwischen den mittleren Teilchengrößen der ersten anorganischen festen Teilchen (91A) und der zweiten anorganischen festen Teilchen (91B) ist, und wobei die mittlere Teilchengröße der ersten anorganischen festen Teilchen (91A) und die mittlere Teilchengröße der zweiten anorganischen festen Teilchen (91B) durch Teilchengrößenverteilungsmessung gemäß eines Laserbeugungsstreuungsverfahrens gemessen werden.

5. Verbundelektrolyt (9) gemäß mindestens einem der Ansprüche 1 bis 3, wobei:

eine BET spezifische Oberfläche [$m^2/g$] der ersten anorganischen festen Teilchen (91A) gleich einer BET spezifischen Oberfläche [$m^2/g$] der zweiten anorganischen festen Teilchen (91B)ist, oder
die Mischung anorganischer fester Teilchen (91) $1 < S_H/S_L \leq 50$ erfüllt; worin
$S_H$ eine BET spezifische Oberfläche [$m^2/g$] von Teilchen mit einer größeren BET spezifischen Oberfläche zwischen den BET spezifischen Oberflächen der ersten anorganischen festen Teilchen (91A) und der zweiten anorganischen festen Teilchen (91B) ist; und
$S_L$ eine BET spezifische Oberfläche [$m^2/g$] von Teilchen mit einer kleineren BET spezifischen Oberfläche zwischen den BET spezifischen Oberflächen der ersten anorganischen festen Teilchen (91A) und der zweiten anorganischen festen Teilchen (91B) ist.

6. Verbundelektrolyt (9) gemäß mindestens einem der Ansprüche 1 bis 5, wobei der nichtwässrige Elektrolyt (92) einen festen Polymerelektrolyten und/oder einen Gelpolymerelektrolyten umfasst.

7. Sekundärbatterie (100), umfassend:

eine Positivelektrodenaktivmaterial-haltige Schicht (5b) ;
eine Negativelektrodenaktivmaterial-haltige Schicht (3b); und
eine Li-leitfähige Schicht (4), die zwischen der Positivelektrodenaktivmaterial-haltigen Schicht (5b) und der Negativelektrodenaktivmaterial-haltigen Schicht (3b) angeordnet ist und den Verbundelektrolyten (9) gemäß mindestens einem der Ansprüche 1 bis 6 umfasst.

8. Sekundärbatterie (100) gemäß Anspruch 7, wobei eine Dicke eines Teils mit der kleinsten Dicke der Li-leitfähigen Schicht (4) weniger als 8 $\mu$m beträgt.

9. Sekundärbatterie (100) gemäß Anspruch 7 oder 8, wobei die Negativelektrodenaktivmaterial-haltige Schicht (3b) ein Ti-haltiges Negativelektrodenaktivmaterial umfasst.

**10.** Sekundärbatterie (100) gemäß mindestens einem der Ansprüche 7 bis 9, die ein erstes Elektrodenverbundmaterial (10A, 10B, 10C) und ein zweites Elektrodenverbundmaterial (10A, 10B, 10C), das neben dem ersten Elektrodenverbundmaterial (10A, 10B, 10C) angeordnet ist, umfasst, wobei jedes der Elektrodenverbundmateriale (10A, 10B, 10C) folgendes umfasst:

einen Stromabnehmer (8), der eine erste Oberfläche und eine gegenüberliegende zweite Oberfläche umfasst, die Positivelektrodenaktivmaterial-haltige Schicht (5b), aufgebracht auf die erste Oberfläche des Stromabnehmers (8), und
die Negativelektrodenaktivmaterial-haltige Schicht (3b), aufgebracht auf die zweite Oberfläche des Stromabnehmers (8); und
wobei die Li-leitfähige Schicht (4) zwischen der Positivelektrodenaktivmaterial-haltigen Schicht (5b) des ersten Elektrodenverbundmaterials (10A, 10B, 10C) und der Negativelektrodenaktivmaterial-haltigen Schicht (3b) des zweiten Elektrodenverbundmaterials (10A, 10B, 10C) angeordnet ist.

**11.** Batteriepack (300), welches die Sekundärbatterie gemäß mindestens einem der Ansprüche 7 bis 10 umfasst.

**12.** Batteriepack (300) gemäß Anspruch 11, ferner umfassend:

einen externen Stromversorgungsanschluss (347); und
eine Schutzschaltung (344).

**13.** Batteriepack (300) gemäß Anspruch 11 oder 12, umfassend mehrere Sekundärbatterien (100), wobei die mehreren Sekundärbatterien (100) elektrisch in Reihe, parallel oder in einer Kombination aus Reihenschaltung und Parallelschaltung geschaltet sind.

**14.** Fahrzeug (400), welches das Batteriepack (300) gemäß mindestens einem der Ansprüche 11 bis 13 umfasst.

**15.** Fahrzeug (400) gemäß Anspruch 14, welches einen Mechanismus umfasst, der so konfiguriert ist, dass kinetische Energie des Fahrzeugs (400) in regenerative Energie umgewandelt wird.

## Revendications

**1.** Électrolyte composite (9) comprenant :

un mélange de particules solides inorganiques (91) comprenant des premières particules solides inorganiques (91A) présentant une première conductivité Li-ion à 25 °C et des secondes particules solides inorganiques (91B) présentant une seconde conductivité Li-ion à 25 °C, et la seconde conductivité Li-ion à 25 °C étant inférieure à la première conductivité Li-ion à 25 °C ; et
un électrolyte non aqueux (92) comprenant du Li,
dans lequel :

un rapport d'un poids de l'électrolyte non aqueux (92) sur un poids de l'électrolyte composite (9) est de 0,1 % à 25 % ;
le mélange de particules solides inorganiques (91) est conforme à $10 \leq d90/d10 < 500$ ;
dans lequel :

d10 est une granularité [$\mu$m] à laquelle une fréquence cumulée d'un côté de petite granularité est de 10 % dans une courbe granulométrique cumulée du mélange de particules solides inorganiques (91), la courbe granulométrique cumulée étant obtenue par un procédé de diffusion laser diffractive ; et
d90 est une granularité [$\mu$m] à laquelle une fréquence cumulée du côté de petite granularité est de 90 % dans la courbe granulométrique cumulée ;

dans lequel les premières particules solides inorganiques (91A) sont au moins une sélectionnée dans le groupe consistant en :

- des particules solides inorganiques présentant une structure du type grenat ;
- des particules de matière conductrice de Li-on du type pérovskite présentant une composition représentée par une formule $La_{0,56}Li_{0,33}TiO_3$ ; et
- des particules d'électrolyte vitrocristallin présentant une structure du type NASICON et représentées par une formule de structure typifiée par $Li_{1+x+y}Ti_{2-x}Al_xP_{3-y}Si_yO_{12}$, où x = 0,3 et y = 0,2 ; et

les secondes particules solides inorganiques (91B) sont au moins une sélectionnée dans le groupe consistant en :

- des particules d'oxyde d'aluminium ;
- des particules d'oxyde de zirconium ;
- des particules d'oxyde de silicium ;
- des particules d'oxyde de magnésium ;
- des particules d'oxyde de titane du type rutile ;
- des particules d'oxyde de niobium ;
- des particules d'oxyde de tantale ;
- des particules d'oxyde d'hafnium ;
- des particules d'oxyde d'yttrium ;
- des particules d'oxyde de gallium ;
- des particules d'oxyde de germanium ; et
- des particules d'oxyde de lanthanide.

2. Électrolyte composite (9) selon la revendication 1,

dans lequel la première conductivité Li-ion à 25 °C est $1 \times 10^{-10}$ S/cm ou plus, et la seconde conductivité Li-ion à 25 °C est inférieure à $1 \times 10^{-10}$ S/cm ; et
un rapport d'un poids des premières particules solides inorganiques (91A) sur un poids des secondes particules solides inorganiques (91B) est de 1 % ou plus et de moins de 99 %.

3. Électrolyte composite (9) selon la revendication 1 ou 2, dans lequel le mélange de particules solides inorganiques (91) est conforme à $10 \leq \sigma_H/\sigma_L$ ; dans lequel

$\sigma_H$ est la première conductivité Li-ion à 25 °C ; et
$\sigma_L$ est la seconde conductivité Li-ion à 25 °C.

4. Électrolyte composite (9) selon l'une quelconque des revendications 1 à 3, dans lequel :

une granularité moyenne des premières particules solides inorganiques (91A) est égale à une granularité moyenne des secondes particules solides inorganiques (91B), ou
le mélange de particules solides inorganiques (91) est conforme à $1 < R_H/R_L \leq 100$ ; dans lequel

$R_H$ est une granularité moyenne [µm] de particules présentant une granularité moyenne supérieure entre les granularités moyennes des premières particules solides inorganiques (91A) et des secondes particules solides inorganiques (91B) ; et
$R_L$ est une granularité moyenne [µm] de particules présentant une granularité moyenne inférieure entre les granularités moyennes des premières particules solides inorganiques (91A) et des secondes particules solides inorganiques (91B), et dans lequel la granularité moyenne des premières particules solides inorganiques (91A) et la granularité moyenne des secondes particules solides inorganiques (91B) sont mesurées par une mesure de distribution de granularité conformément à un procédé de diffusion laser diffractive.

5. Électrolyte composite (9) selon l'une quelconque des revendications 1 à 3, dans lequel :

une superficie spécifique BET [m²/g] des premières particules solides inorganiques (91A) est égale à une superficie spécifique BET [m²/g] des secondes particules solides inorganiques (91B), ou
le mélange de particules solides inorganiques (91) est conforme à $1 < S_H/S_L \leq 50$ ; dans lequel

$S_H$ est une superficie spécifique BET [m²/g] de particules présentant une superficie spécifique BET supérieure entre les superficies spécifiques BET des premières particules solides inorganiques (91A) et des secondes particules solides inorganiques (91B) ; et
$S_L$ est une superficie spécifique BET [m²/g] de particules présentant une superficie spécifique BET inférieure entre les superficies spécifiques BET des premières particules solides inorganiques (91A) et des secondes particules solides inorganiques (91B).

6. Électrolyte composite (9) selon l'une quelconque des revendications 1 à 5, dans lequel l'électrolyte non aqueux (92) comprend un électrolyte à polymère solide et/ou un électrolyte à polymère en gel.

7. Batterie rechargeable (100) comprenant :

une couche contenant une matière active d'électrode positive (5b) ;
une couche contenant une matière active d'électrode négative (3b) ; et
une couche conductrice de Li (4) fournie entre la couche contenant une matière active d'électrode positive (5b) et la couche contenant une matière active d'électrode négative (3b), et comprenant l'électrolyte composite (9) selon l'une quelconque des revendications 1 à 6.

8. Batterie rechargeable (100) selon la revendication 7, dans laquelle une épaisseur d'une partie présentant une épaisseur la plus faible de la couche conductrice de Li (4) est inférieure à 8 $\mu$m.

9. Batterie rechargeable (100) selon la revendication 7 ou 8, dans laquelle la couche contenant une matière active d'électrode négative (3b) comprend une matière active d'électrode négative contenant du Ti.

10. Batterie rechargeable (100) selon l'une quelconque des revendications 7 à 9, qui comprend un premier composite d'électrode (10A, 10B, 10C) et un second composite d'électrode (10A, 10B, 10C) fourni adjacent au premier composite d'électrode (10A, 10B, 10C), chacun des composites d'électrode (10A, 10B, 10C) comprenant :

un collecteur de courant (8) comprend une première surface et une seconde surface opposée,
la couche contenant une matière active d'électrode positive (5b) fournie sur la première surface du collecteur de courant (8), et
la couche contenant une matière active d'électrode négative (3b) fournie sur la seconde surface du collecteur de courant (8) ; et
la couche conductrice de Li (4) est fournie entre la couche contenant une matière active d'électrode positive (5b) du premier composite d'électrode (10A, 10B, 10C) et la couche contenant une matière active d'électrode négative (3b) du second composite d'électrode (10A, 10B, 10C).

11. Bloc-batterie (300) comprenant la batterie rechargeable (100) selon l'une quelconque des revendications 7 à 10.

12. Bloc-batterie (300) selon la revendication 11 comprenant en outre :

une borne de distribution de puissance externe (347) ; et
un circuit de protection (344).

13. Bloc-batterie (300) selon la revendication 11 ou 12 comprenant plusieurs batteries rechargeables (100), les plusieurs batteries rechargeables (100) étant connectées électriquement en série, en parallèle ou en une combinaison d'en série et en parallèle.

14. Véhicule (400) comprenant le bloc-batterie (300) selon l'une quelconque des revendications 11 à 13.

15. Véhicule (400) selon la revendication 14, qui comprend un mécanisme configuré pour convertir de l'énergie cinétique du véhicule (400) en énergie régénérative.

FIG. 1

FIG. 2

FIG. 3

10A

F I G. 4

10B

F I G. 5

F I G. 6

F I G. 7

F I G. 8

F I G. 9

F I G. 10

**FIG. 11**

**FIG. 12**

FIG. 13

F I G. 14

F I G. 15

F I G. 16

EP 3 379 604 B1

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 2017077547 A
- US 2016294016 A

- US 2013230778 A

**Non-patent literature cited in the description**

- **I. M. HODGE ; M. D. INGRAM ; A. R. WEST.** IMPEDANCE AND MODULUS. SPECTROSCOPY OF POLYCRYSTALINE SOLID ELCTROLYTE. *Journal of Electroanalytical Chemistry,* 1976, vol. 74, 125-143
- **B. ROLING.** What do electrical conductivity and electrical modular modulus spectroscopy process about the mechanism of ion transport processes in melts, glasses, and crystals?. *Journal of Non-Crystalline Solids,* 1999, vol. 244, 34-43

- **I. M. HODGE ; M. D. INGRAM ; A. R. WEST.** IMPEDANCE AND MODULUS SPECTROSCOPY OF POLYCRYSTALINE SOLID ELCTROLYTE. *Journal of Electroanalytical Chemistry,* 1976, vol. 74, 125-143
- **B. ROLING.** What do electrical conductivity and electrical modulus spectra tell us about the mechanism of ion transport processes in melts, glasses, and crystals?. *Journal of Non-Crystalline Solids,* 1999, vol. 244, 34-43